# EUROPEAN PATENT APPLICATION

(11) **EP 4 621 489 A1**
(43) Date of publication of application: **24.09.2025**
(21) Application number: 25162914.3
(22) Date of filing: 11.03.2025
(51) Int. Cl.: G03G 15/00, B41J 11/00, B65H 37/04

(54) **MEDIUM PROCESSING APPARATUS, IMAGE FORMING SYSTEM, AND CARRIER MEDIUM**

(30) Priority: 18.03.2024 JP 2024042761
(71) Applicant: Ricoh Company, Ltd., Tokyo 143-8555 (JP)
(72) Inventor: KOBAYASHI, Naoki, Yokohama, 220-0011 (JP); SAITO, Shohei, Yokohama, 220-0011 (JP); SUGIYAMA, Keisuke, Yokohama, 220-0011 (JP); SASAKI, Kei, Yokohama, 220-0011 (JP)
(74) Representative: J A Kemp LLP

(57) **Abstract**

A medium processing apparatus (3) includes a liquid applier (31), a medium processing device (25, 155), a controller (100b), and a freezing detector (95). The liquid applier (31) applies liquid to a part of a medium (P) to perform a liquid application. The medium processing device (25, 155) performs desired processing on a bundle of media including the medium subjected to the liquid application. The controller (100b) controls the liquid application and the desired processing. The freezing detector (95) notifies the controller (100b) of freezing information including a frozen state of the liquid. The controller (100b) selects, based on the freezing information, one of first processing that is the desired processing performed on the bundle of media including the medium subjected to the liquid application or second processing that is the desired processing performed on the bundle of media without subjecting the medium to the liquid application.

## Description

### BACKGROUND

### Technical Field

The present disclosure relates to a medium processing apparatus, an image forming system, and a carrier medium.

### Related Art

Various types of medium processing apparatuses have been proposed that bind a sheet bundle of stacked sheet media. A plurality of binding processes applied to such medium processing apparatuses have been proposed. Examples of the binding processes include a "stapling process" that causes a stapling member (binding member) to penetrate through a sheet bundle to bind the sheet bundle and a "crimp binding process" that deforms a part of a sheet bundle by pressure to bind the sheet bundle.

Examples of the crimp binding process include a liquid-application crimp-binding process that applies liquid to a pressing position of a sheet bundle (or each sheet forming the sheet bundle) before pressing the sheet bundle , to increase binding strength. In the present specification, the application of liquid to a medium, which is performed with the crimp binding process, is referred to as "liquid application." In addition, executing a series of processes for performing the liquid application is referred to as "performing liquid application."

In medium processing apparatuses, a configuration has been proposed in which, in order to enable selection of a binding operation for maintaining a bound state, a stapling process and a crimp binding process can be automatically selected according to the number of sheets to be bound, and whether to execute a liquid application process is also controlled in the crimp binding process (e.g., see Japanese Unexamined Patent Application Publication No. 2023-126126).

A configuration in which a binding operation is selectable is disclosed in Japanese Unexamined Patent Application Publication No. 2023-126126. However, in a cold environment, the liquid used for liquid application may freeze due to a decrease in temperature. In this case, a problem that a desired binding strength is not obtained and the binding quality significantly deteriorates due to a supply failure of the liquid used for the liquid application has not been solved.

### SUMMARY

An object of the present disclosure is to provide a medium processing apparatus that can switch binding processes when the liquid used for liquid application is frozen.

To solve the problem described above, the present disclosure described herein provides a medium processing apparatus that includes a liquid applier, a medium processing device, a controller, and a freezing detector. The liquid applier applies liquid to a part of a medium to perform a liquid application. The medium processing device performs desired processing on a bundle of media including the medium subjected to the liquid application. The controller controls the liquid application and the desired processing. The freezing detector notifies the controller of freezing information including a frozen state of the liquid. The controller selects, based on the freezing information, one of first processing that is the desired processing performed on the bundle of media including the medium subjected to the liquid application or second processing that is the desired processing performed on the bundle of media without subjecting the medium to the liquid application.

The present disclosure described herein also provides an image forming system that includes an image forming apparatus to form an image on media constituting a bundle of media and the medium processing apparatus to perform the desired processing on the bundle of media on which the image is formed by the image forming apparatus.

The present disclosure described herein also provides a carrier medium carrying program code for causing a controller of a medium processing apparatus to execute controlling, receiving, and selecting. The controlling controls liquid application that a liquid applier applies liquid to a part of a medium to perform and desired processing that a medium processing device performs on a bundle of media including the medium subjected to the liquid application. The receiving receives freezing information including a frozen state of the liquid. The selecting selects, based on the freezing information, one of first processing that is the desired processing performed on the bundle of media including the medium subjected to the liquid application or second processing that is the desired processing performed on the bundle of media without subjecting the medium to the liquid application.

According to one or more embodiments of the present disclosure, the binding processes can be switched when the liquid used for liquid application is frozen, and a desired binding strength can be obtained even when, for example, a liquid supply failure occurs due to freezing. Thus, a decrease in binding quality can be retarded.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an overall configuration of an image forming system;
FIG. 2 is a diagram illustrating an internal structure of a post-processing apparatus according to a first embodiment;
FIG. 3 is a schematic view of an edge binder viewed from an upstream side in a conveyance direction;
FIG. 4 is a schematic view of an edge binder viewed from the side on which a liquid applier is located in a main scanning direction;
FIGS. 5A and 5B are schematic diagrams illustrating a configuration of a crimper of an edge binder;
FIG. 6 is a schematic view of a staple binder viewed from an upstream side in a conveyance direction;
FIG. 7 is a schematic view of a modification of a staple binder viewed from an upstream side in a conveyance direction;
FIGS. 8A and 8B are diagrams each illustrating a location and configuration of a second liquid storage tank in a post-processing apparatus;
FIG. 9 is a diagram illustrating a configuration of attachment and detachment of a second liquid storage tank in a post-processing apparatus;
FIG. 10 is a block diagram illustrating a hardware configuration of control blocks of the post-processing apparatus according to the first embodiment to control the post-processing apparatus;
FIG. 11 is a flowchart of a binding process performed by an edge binder;
FIGS. 12A, 12B, and 12C are diagrams illustrating the positions of a liquid applier and a crimper during a binding process by an edge binder;
FIG. 13 is a diagram illustrating a configuration of a liquid application unit included in a liquid applier of an edge binder;
FIGS. 14A, 14B, and 14C are diagrams illustrating a change in the amount of liquid in a liquid storage tank in a dry state of a liquid supply member of the liquid applier of FIG. 13;
FIGS. 15A and 15B are a flowchart of a liquid supply determination process according to the first embodiment;
FIG. 16 is a diagram illustrating liquid leakage that might occur in a first liquid storage tank according to the first embodiment;
FIG. 17 is a graph illustrating a relation between the output value of a first liquid-level sensor and the liquid detection threshold in a time series manner according to the first embodiment;
FIG. 18 is a flowchart illustrating a first example of binding process selection by freezing detection according to the first embodiment;
FIG. 19 is a flowchart illustrating a second example of binding process selection by freezing detection according to the first embodiment;
FIG. 20 is a flowchart illustrating a third example of binding process selection by freezing detection according to the first embodiment;
FIG. 21 is a flowchart illustrating a fourth example of binding process selection by freezing detection according to the first embodiment;
FIG. 22 is a flowchart of a freeze monitoring process according to the first embodiment;
FIG. 23 is a flowchart illustrating a first example of a freezing detection process according to the first embodiment;
FIG. 24 is a diagram illustrating an example of a cold-region-mode switching setting screen according to the first embodiment;
FIG. 25 is a diagram illustrating an example of a cold-region-mode time setting screen according to the first embodiment;
FIG. 26 is a flowchart illustrating a second example of the freezing detection process according to the first embodiment;
FIG. 27 is a diagram illustrating a freezing detector according to the first embodiment;
FIG. 28 is a flowchart illustrating a third example of the freezing detection process according to the first embodiment;
FIG. 29 is a flowchart illustrating a fourth example of the freezing detection process according to the first embodiment;
FIG. 30 is a flowchart illustrating a fifth example of the freezing detection process according to the first embodiment;
FIG. 31 is a diagram illustrating an example of information used for load determination of a liquid supply pump according to the first embodiment;
FIG. 32 is a diagram illustrating an internal structure of a post-processing apparatus according to a second embodiment;
FIGS. 33A, 33B, and 33C are schematic views of an internal tray according to the second embodiment, viewed from a thickness direction of a sheet;
FIG. 34 is a schematic view of a crimper according to the second embodiment, viewed from a downstream side in a conveyance direction;
FIGS. 35A and 35B are schematic views of a liquid applier according to the second embodiment, viewed from a thickness direction of a sheet;
FIGS. 36A, 36B, and 36C are cross-sectional views of the liquid applier, taken along a line XXV-XXV of FIG. 35A;
FIGS. 37A, 37B, and 37C are cross-sectional views of the liquid applier taken along a line XXVI-XXVI of FIG. 35A;
FIG. 38 is a block diagram illustrating a hardware configuration of control blocks of the post-processing apparatus according to the second embodiment;
FIG. 39 is a flowchart of post-processing of the post-processing apparatus according to the second embodiment;
FIG. 40 is a diagram illustrating an overall configuration of a modification of an image forming system;
FIGS. 41A and 41B are diagrams each illustrating a post-processing apparatus including a modification of a controller; and
FIGS. 42A and 42B are diagrams each illustrating a post-processing apparatus including a modification of a controller.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described below with reference to the accompanying drawings. Note that identical parts are given identical reference signs and redundant descriptions are summarized or omitted accordingly. In the following description, a liquid discharge head that discharge ink as an exemplary liquid is described.

A description is given below of an image forming system 1 according to an embodiment.

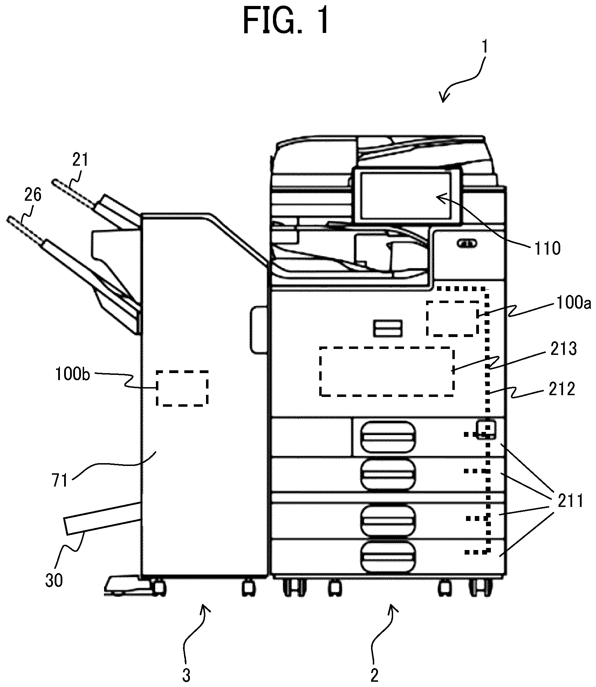

A description is given below of an image forming system 1 according to an embodiment of the present disclosure, with reference to the drawings. FIG. 1 is a schematic view of an overall configuration of the image forming system 1. The image forming system 1 has, for example, an image forming function of forming an image on a sheet P as an example of a sheet-shaped medium and a post-processing function of performing post-processing on the sheet P on which the image has been formed. As illustrated in FIG. 1, the image forming system 1 includes an image forming apparatus 2 having the image forming function and a post-processing apparatus 3 serving as a media processing apparatus having the post-processing function according to an embodiment of the present disclosure. In the image forming system 1, the image forming apparatus 2 and the post-processing apparatus 3 operate in conjunction with each other.

In the present embodiment, the sheet-like medium to be processed in the image forming system 1 is described on the assumption that the medium is a sheet of "paper". However, the object to be processed according to the present embodiment is not limited to a sheet of paper. For example, any type of medium may be used as long as an image can be formed on the medium according to an image forming process. The medium includes a medium which can be an object of the folding process or the binding process, and the material or the specification is not limited.

The image forming apparatus 2 forms an image on the sheet P and ejects the sheet P having the image to the post-processing apparatus 3. The image forming apparatus 2 includes an accommodation tray 211 that accommodates sheets P, a conveyor 212 that conveys a sheet P from the accommodation tray 211, and an image forming device 213 that forms an image on the sheet P conveyed by the conveyor 212. The image forming device 213 may be an inkjet system that forms an image using ink or an electrophotographic system that forms an image using toner. The image forming apparatus 2 also includes a controller 100a that controls various operations of the conveyor 212 and the image forming device 213. Since the image forming apparatus 2 has an already-known configuration, a detailed description of the configuration are omitted.

Sheets of paper are widely known as an example of sheet-shaped media. In the following description, a sheet-shaped medium as a medium to be processed is referred to as a "sheet P." Further, in the following description, a bundle of sheets of paper as a plurality of media is an example of a "sheet bundle Pb."

A description is given below of a post-processing apparatus 3 according to a first embodiment.

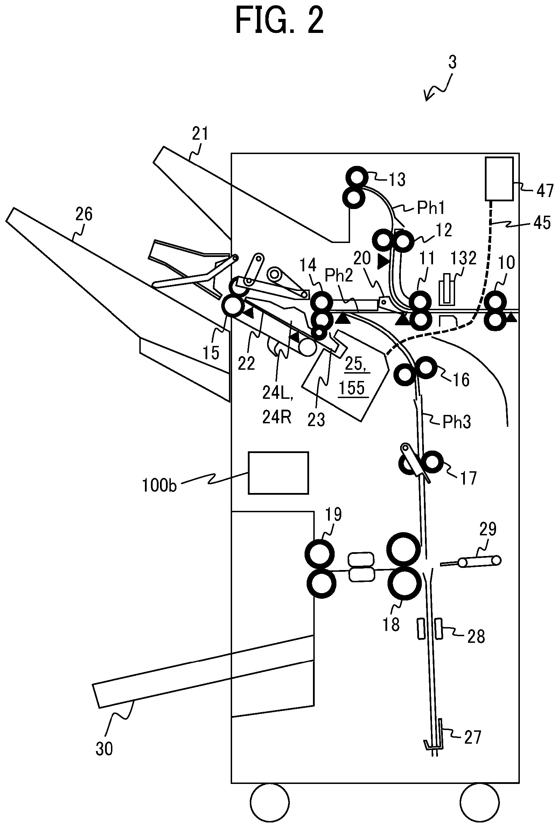

FIG. 2 is a diagram illustrating an internal configuration of the post-processing apparatus 3 according to the first embodiment of the present disclosure. The post-processing apparatus 3 has a function that performs post-processing on the sheet P on which an image has been formed by the image forming apparatus 2. An example of the post-processing according to the present embodiment is a binding process as a "crimp binding" that binds, without staples, a plurality of sheets P on each of which an image is formed as a bundle of sheets, which may be referred to as a sheet bundle. Another example of the post-processing according to the present embodiment is a binding process as a "stapling" that binds, with staples, a plurality of the sheets P on each of which an image is formed as a bundle of sheets P (i.e., sheet bundle). In the following description, the bundle of sheets may be referred to as a "sheet bundle Pb" as a bundle of media.

In the present embodiment, a description is typically given of liquid application in a crimp binding process. However, liquid application performed in a stapling process is similar to the liquid application in the crimp binding process. In the following description, the term "binding process" indicates both the "crimp binding process" and the "stapling process", and is not limited to any particular binding method (whether a staple is used or pressing deformation is performed).

More specifically, the "crimp binding process" according to the present embodiment is a process called "crimp binding" to apply pressure to the binding position corresponding to a part of a sheet bundle Pb to deform (pressure-deform) the binding position and bind the sheet bundle Pb. The binding processes that can be executed in the post-processing apparatus 3 include an end binding process as a medium processing means that binds an end portion of a sheet bundle Pb and a saddle stitching (center binding) process that binds a center portion of a sheet bundle Pb.

The post-processing apparatus 3 includes conveyance roller pairs 10 to 19 (an example of conveyors), a switching member 20, and a controller 100b (an example of a control device). The controller 100b controls the operations of, for example, the conveyance roller pairs 10 to 19 (an example of conveyors), and the switching member 20. Details of the controller 100b will be described below. The conveyance roller pairs 10 to 19 convey, inside the post-processing apparatus 3, a sheet P supplied from the image forming apparatus 2. Specifically, the conveyance roller pairs 10 to 13 convey the sheet P along a first conveyance passage Ph1. The conveyance roller pairs 14 and 15 convey the sheet P along a second conveyance passage Ph2. The conveyance roller pairs 16 to 19 convey the sheet P along a third conveyance passage Ph3. A hole punch 132 is disposed between the conveyance roller pairs 10 and 11. The hole punch 132 performs punching on the sheet P conveyed by the conveyance roller pairs 10 and 11.

The first conveyance passage Ph1 is a passage extending to a first ejection tray 21 from a supply port through which the sheet P is supplied from the image forming apparatus 2. The second conveyance passage Ph2 is a passage branching from the first conveyance passage Ph1 between the conveyance roller pairs 11 and 14 in the conveyance direction of the sheet and extending to a second ejection tray 26 via the internal tray 22. The third conveyance passage Ph3 is a passage branching from the first conveyance passage Ph1 between the conveyance roller pairs 11 and 14 in the conveyance direction of the sheet and extending to a third ejection tray 30.

The switching member 20 is disposed at a branching position of the first conveyance passage Ph1 and the second conveyance passage Ph2. The switching member 20 can be switched between a first position and a second position. The switching member 20 in the first position guides the sheet P to be ejected to the first ejection tray 21 through the first conveyance passage Ph1. The switching member 20 in the second position guides the sheet P conveyed through the first conveyance passage Ph1 to the second conveyance passage Ph2. At the timing when the trailing end of the sheet P entering the second conveyance passage Ph2 passes between the rollers of the conveyance roller pair 11, the conveyance roller pair 14 is rotated in the reverse direction so that the sheet P is guided to the third conveyance passage Ph3. The post-processing apparatus 3 further includes a plurality of sensors that detects the positions of the sheet P in the first conveyance passage Ph1, the second conveyance passage Ph2, and the third conveyance passage Ph3. Each of the multiple sensors is indicated by a black triangle in FIG. 2.

The post-processing apparatus 3 includes a first ejection tray 21. The sheet P that is output through the first conveyance passage Ph1 is placed on the first ejection tray 21. Among the sheet P supplied from the image forming apparatus 2, the sheet P on which the binding operation is not performed is ejected to the first ejection tray 21.

The post-processing apparatus 3 further includes the internal tray 22 serving as a placement tray, an edge-binding end fence 23, side fences 24L and 24R, an edge binder 25, a staple binder 155, and a second ejection tray 26. The internal tray 22, the edge-binding end fence 23, the side fences 24L and 24R, the edge binder 25, and the staple binder 155 perform edge binding on the sheet bundle Pb including the multiple sheets P conveyed from the second conveyance passage Ph2 to the internal tray 22. Among the sheets P supplied from the image forming apparatus 2, the sheet bundle Pb subjected to the edge binding is ejected to the second ejection tray 26.

The "edge binding process" here means a binding process performed by the edge binder 25 and the staple binder 155. Specifically, the "edge binding process" includes, but not limited to, a "parallel binding process" that binds the sheet bundle Pb along one side of the sheet bundle Pb parallel to the main scanning direction, an "oblique binding process" that binds a corner of the sheet bundle Pb, and a "vertical binding process" that binds the sheet bundle Pb along one side of the sheet bundle Pb parallel to the conveyance direction.

In the following description, a direction in which the sheet P is conveyed from the conveyance roller pair 15 toward the edge-binding end fence 23 is defined as a "conveyance direction." In other words, the "conveyance direction" in the present specification corresponds to a direction in which the sheet P output from the image forming apparatus 2 is moved toward the second ejection tray 26 by, for example, the conveyance roller pair 10 and is then changed by the conveyance roller pair 15 to move toward the edge-binding end fence 23 as a direction different from the direction toward the second ejection tray 26. The direction that is orthogonal to both the conveyance direction and a thickness direction of the sheet P is defined as a "main scanning direction" or a "width direction of the sheet P."

The sheets P that are sequentially conveyed through the second conveyance passage Ph2 are temporarily placed on the internal tray 22 serving as a placement tray. The edge-binding end fence 23 aligns the position, in the conveyance direction, of the sheet P or the sheet bundle Pb placed on the internal tray 22. The side fences 24L and 24R align the position, in the main scanning direction, of the sheet P or the sheet bundle Pb placed on the internal tray 22. The edge binder 25 and the staple binder 155 perform edge binding on the sheet bundle Pb aligned by the edge-binding end fence 23 and the side fences 24L and 24R. The conveyance roller pair 15 ejects the sheet bundle Pb subjected to the edge binding to the second ejection tray 26.

The post-processing apparatus 3 further includes a saddle-binding end fence 27, a saddle binder 28, a sheet folding blade 29, and the third ejection tray 30. The saddle-binding end fence 27, the saddle binder 28, and the sheet folding blade 29 perform the saddle binding on the sheet bundle Pb of the sheets P that are conveyed through the third conveyance passage Ph3. Among the sheets P supplied from the image forming apparatus 2, the sheet bundle Pb subjected to the saddle binding is ejected to the third ejection tray 30.

The saddle-binding end fence 27 aligns the positions of the sheets P that are sequentially conveyed through the third conveyance passage Ph3, in a direction in which the sheets P are conveyed. The saddle-binding end fence 27 can move between a binding position where the saddle-binding end fence 27 causes the center of the sheet bundle Pb to face the saddle binder 28 and a folding position where the saddle-binding end fence 27 causes the center of the sheet bundle Pb to face the sheet folding blade 29. The saddle binder 28 binds the center of the sheet bundle Pb aligned by the saddle-binding end fence 27 at the binding position. The sheet folding blade 29 folds, in half, the sheet bundle Pb placed on the saddle-binding end fence 27 at the folding position and causes the conveyance roller pair 18 to nip the sheet bundle Pb. The conveyance roller pairs 18 and 19 eject the sheet bundle Pb subjected to the saddle binding to the third ejection tray 30.

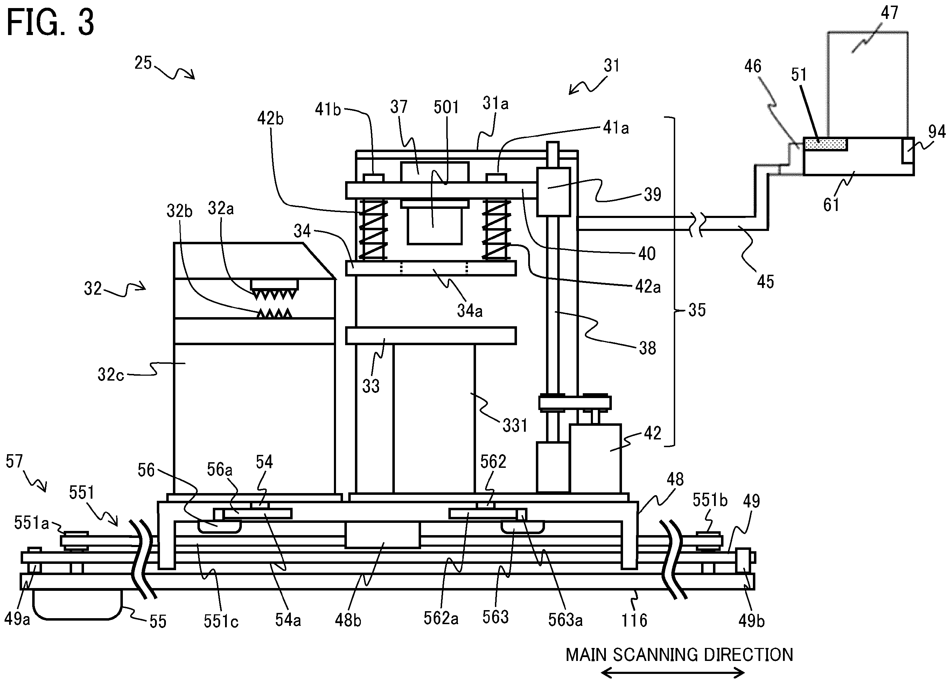

The post-processing apparatus 3 further includes a liquid application member 501 (a part of the liquid applier), a liquid supply member 50 (a part of the liquid applier), and a first liquid storage tank 44 (a first liquid storage) in the edge binder 25. The first liquid storage tank 44 and the liquid supply member 50 are omitted in FIG. 3. The post-processing apparatus 3 includes a liquid supply passage 45 (a part of a liquid supplier), a liquid supply pump 46 (a part of the liquid supplier), a second liquid storage tank 47 (a part of a second liquid storage), and a second-liquid-storage-tank fixer 61 (a part of the second liquid storage) as a configuration for replenishing the first liquid storage tank 44 with the liquid. The liquid that is stored in the second liquid storage tank 47 is supplied to the first liquid storage tank 44 through the second-liquid-storage-tank fixer 61, the liquid supply pump 46, and the liquid supply passage 45.

A description is given below of the edge binder 25.

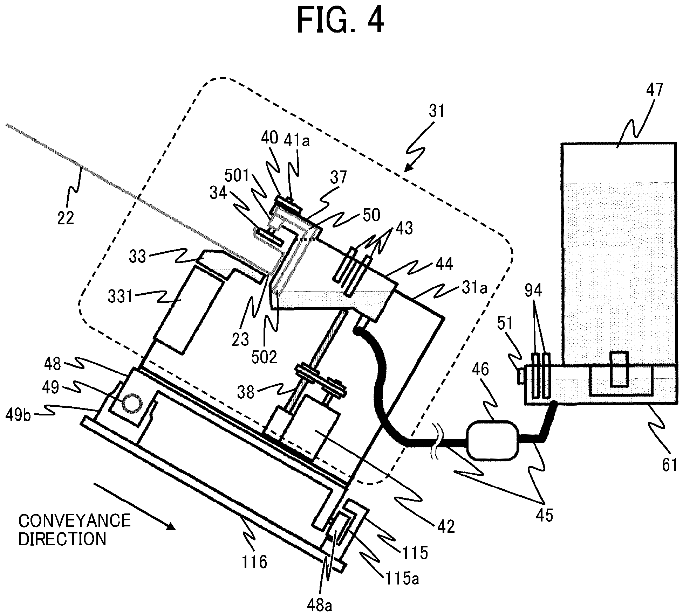

FIG. 3 is a schematic diagram illustrating the edge binder 25 of FIG. 2 that performs liquid application and crimp binding, as viewed from an upstream side thereof in the conveyance direction. FIG. 4 is a schematic diagram of the edge binder 25 viewed from the side on which a liquid applier 31 is disposed in the main scanning direction. As illustrated in FIG. 3, the edge binder 25 includes the liquid applier 31 that applies liquid to the sheet P or the sheet bundle Pb, and a crimper 32 that is an example of a post-processing device and performs crimp binding on the sheet bundle Pb. The liquid applier 31 and the crimper 32 are disposed downstream from the internal tray 22 in the conveyance direction and adjacent to each other in the main scanning direction.

As illustrated in FIG. 4, the liquid applier 31 applies the liquid stored in the first liquid storage tank 44 to the sheet P or the sheet bundle Pb placed on the internal tray 22. The application of the liquid to the sheet P or the sheet bundle Pb by the liquid applier 31 and the operation of the liquid applier 31 in applying the liquid are referred to as "liquid application" below. The liquid applying operation of the liquid applier 31 involving control processing is referred to as a "liquid application process."

More specifically, the liquid that is stored in the first liquid storage tank 44 as liquid for the "liquid application" includes, as a main component, the liquid state of a compound of hydrogen and oxygen compound represented by the chemical formula H₂O. The temperature condition is not limited, and the liquid hydrogen-oxygen compound may be so-called warm water or hot water. The liquid hydrogen-oxygen compound is not limited to pure water. The liquid hydrogen-oxygen compound may be purified water or may contain ionized salts. The metal ion content ranges from so-called soft water to ultrahard water. In other words, the liquid hydrogen-oxygen compound is at any hardness.

The liquid that is stored in the first liquid storage tank 44 may include an additive in addition to the main component. The liquid that is stored in the first liquid storage tank 44 may include residual chlorine used as tap water. Preferably, for example, the liquid that is stored in the first liquid storage tank 44 may include, as an additive, a colorant, a penetrant, a pH adjuster, a preservative such as phenoxyethanol, a drying inhibitor such as glycerin, or a combination thereof. Furthermore, because water is used as a component of ink used for inkjet printers or ink used for water-based pens, such water or ink may be used for the "liquid application".

The water is not limited to the specific examples described above. The water may be water in a broad sense such as hypochlorous acid water or an ethanol aqueous solution diluted for disinfection. However, tap water may be used simply to enhance the binding strength after the binding process because tap water is easy to obtain and store. A liquid including water as a main component as exemplified above enhances the binding strength of the sheet bundle Pb, in comparison with a liquid of which the main component is not water (liquid).

A description is given of a configuration of the liquid applier 31.

As illustrated in FIGS. 3 and 4, the liquid applier 31 is movable in the main scanning direction together with the crimper 32 by a driving force transmitted from an edge-binder movement motor 55. The liquid applier 31 includes a lower pressure plate 33 serving as a receptacle for the sheet P or the sheet bundle Pb, an upper pressure plate 34, and a liquid-applier movement assembly 35. The components of the liquid applier 31 (the lower pressure plate 33, the upper pressure plate 34, the liquid-applier movement assembly 35, and the liquid-application-unit movement motor 42) are held by a liquid application frame 31a and a base 48.

A liquid applier shaft 562 including a drive transmission gear 562a is fixed to a bottom face of the liquid application frame 31a that holds the components of the liquid applier 31. The liquid applier shaft 562 and the drive transmission gear 562a are held by the base 48 on which the liquid application frame 31a is disposed, so as to be rotatable in the forward and reverse directions. The drive transmission gear 562a meshes with an output gear 563a of a liquid-applier pivot motor 563. The liquid applier 31 can be rotated in the forward and reverse directions about the liquid applier shaft 562 on the base 48 by a driving force transmitted from the liquid-applier pivot motor 563 to the liquid applier shaft 562 via the output gear 563a and the drive transmission gear 562a.

The lower pressure plate 33 and the upper pressure plate 34 are disposed downstream from the internal tray 22 in the conveyance direction. The sheets P or the sheet bundle Pb that is placed on the internal tray 22 is also placed on the lower pressure plate 33. The lower pressure plate 33 is disposed on a lower pressure plate holder 331. The upper pressure plate 34 is movable in the thickness direction of the sheet P or the sheet bundle Pb at a position where the upper pressure plate 34 faces the sheet P or the sheet bundle Pb placed on the internal tray 22.

In other words, the lower pressure plate 33 and the upper pressure plate 34 are disposed to face each other in the thickness direction of the sheet P or the sheet bundle Pb with the sheet P or the sheet bundle Pb placed on the internal tray 22 and interposed between the lower pressure plate 33 and the upper pressure plate 34. In the following description, the thickness direction of the sheet P or the sheet bundle Pb may be referred to simply as "thickness direction." Further, the upper pressure plate 34 is provided with a through hole 34a passing through the upper pressure plate 34 in the thickness direction at a position opposite to the liquid application member 501 held via the holder 37 attached to the base plate 40. The liquid application member 501 is one end portion of a liquid supply member 50 (liquid absorber) described below and corresponds to a tip portion of the liquid supply member 50.

The liquid-applier movement assembly 35 moves the upper pressure plate 34, the base plate 40, the holder 37, the liquid application member 501, the liquid supply member 50, and the first liquid storage tank 44 in the thickness direction of the sheet P or the sheet bundle Pb. The liquid-applier movement assembly 35 according to the present embodiment moves the upper pressure plate 34, the base plate 40, the holder 37, the liquid application member 501, the liquid supply member 50, and the first liquid storage tank 44 in conjunction with each other with a single liquid-application-unit movement motor 42. The liquid-applier movement assembly 35 includes, for example, a liquid-application-unit movement motor 42, a trapezoidal screw 38, a nut 39, the base plate 40, columns 41a and 41b, and coil springs 42a and 42b.

The liquid-application-unit movement motor 42 generates a driving force to move the upper pressure plate 34, the base plate 40, the holder 37, the liquid application member 501, the liquid supply member 50, and the first liquid storage tank 44. The trapezoidal screw 38 extends in the thickness direction of the sheet P or the sheet bundle Pb and is provided with the liquid application frame 31a such that the trapezoidal screw 38 is rotatable in the forward and reverse directions. The trapezoidal screw 38 is coupled to an output shaft of the liquid-application-unit movement motor 42 via, for example, a pulley and a belt. The nut 39 is screwed to the trapezoidal screw 38. The trapezoidal screw 38 is rotated in the forward and reverse directions by the driving force transmitted from the liquid-application-unit movement motor 42. The rotation of the trapezoidal screw 38 causes the nut 39 to reciprocate on the trapezoidal screw 38.

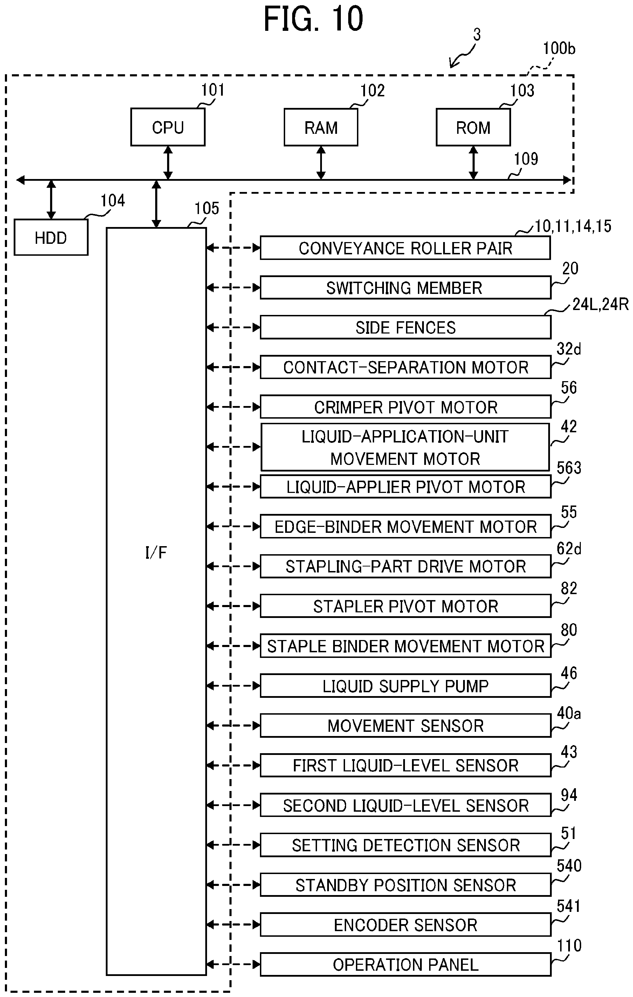

The base plate 40 is positioned apart from the upper pressure plate 34. The base plate 40 holds the liquid application member 501 with the tip portion of the liquid application member 501 protruding from the base plate 40 toward the upper pressure plate 34. The base plate 40 is coupled to the trapezoidal screw 38 via the nut 39 such that base plate 40 can reciprocate along the trapezoidal screw 38 as the trapezoidal screw 38 rotates in the forward and reverse directions. The position of the base plate 40 in the thickness direction of the sheet P or the sheet bundle Pb is detected by a movement sensor 40a (see FIG. 10).

The columns 41a and 41b project from the base plate 40 toward the upper pressure plate 34 around the tip portion of the liquid application member 501. The columns 41a and 41b can relatively move with respect to the base plate 40 in the thickness direction. The columns 41a and 41b hold the upper pressure plate 34 with the respective ends closer to the lower pressure plate 33 than the other ends of the columns 41a and 41b. The other ends of the columns 41a and 41b opposite the ends closer to the lower pressure plate 33 are provided with stoppers that prevent the columns 41a and 41b from being removed from the base plate 40.

The coil springs 42a and 42b are fitted around the columns 41a and 41b, respectively, between the base plate 40 and the upper pressure plate 34. The coil springs 42a and 42b bias the upper pressure plate 34 and the columns 41a and 41b toward the lower pressure plate 33 with respect to the base plate 40.

The liquid applier 31 performs liquid application on the sheet P or the sheet bundle Pb placed on the internal tray 22. Specifically, the liquid applier 31 brings the liquid application member 501 into contact with the sheet P or the sheet bundle Pb to perform liquid application on at least one sheet P of the sheet bundle Pb.

The liquid applier 31 includes a first liquid-level sensor 43 (a first liquid detector), the first liquid storage tank 44, the liquid application member 501, the liquid supply member 50, and the holder 37. The first liquid storage tank 44 stores the liquid for performing liquid application on the sheet P or the sheet bundle Pb. The liquid stored in the first liquid storage tank 44 is detected by the first liquid-level sensor 43. The first liquid storage tank 44 is coupled to the base plate 40 via the holder 37.

The liquid application member 501 applies the liquid stored in the first liquid storage tank 44 to the sheet P or the sheet bundle Pb. The liquid application member 501, the liquid supply member 50 (liquid absorber) disposed in close contact with the liquid application member 501, and the first liquid storage tank 44 are held by the holder 37. The holder 37 is held by the base plate 40. The liquid supply member 50 has a first end in close contact with the liquid application member 501 and a second end immersed in the liquid stored in the first liquid storage tank 44. In other words, the second end of the liquid supply member 50 corresponds to a liquid immersion portion 502 that draws up the liquid and supplies the liquid to the liquid application member 501. The liquid application member 501 and the liquid supply member 50 are made of a material (e.g., sponge or fiber) having a high liquid absorption rate, such as an elastic resin formed of open cells. However, at least one of the liquid application member 501 or the liquid supply member 50 is not limited to a particular type as long as the at least one of the liquid application member 501 or the liquid supply member 50 is made of a material having properties of absorbing and holding the liquid and has a property of being crushable in accordance with a pressing force applied when the at least one of the liquid application member 501 or the liquid supply member 50 is in contact with the sheet P. In other words, the material may be any material as long as the material can absorb or draw up liquid by capillary action.

Accordingly, when the second end (the liquid immersion portion 502) of the liquid supply member 50 is immersed in the liquid stored in the first liquid storage tank 44, the liquid supply member 50 sucks up the liquid by capillary action. In other words, the liquid stored in the first liquid storage tank 44 is sucked up from the liquid immersion portion 502 of the liquid supply member 50, and the sucked liquid is supplied to the liquid application member 501 that is coupled to the tip portion via the liquid supply member 50. Then, the liquid stored in the first liquid storage tank 44 is sucked up to the liquid application member 501 in close contact with one end portion of the liquid supply member 50, and thus the liquid level (stored liquid amount) of the liquid stored in the first liquid storage tank 44 detected by the first liquid-level sensor 43 is lowered. As a result, the liquid is supplied from the second liquid storage tank 47 to the first liquid storage tank 44 by the liquid supply pump 46.

Although the case where the liquid supply member 50 and the liquid application member 501 are separate bodies has been described above, the liquid supply member 50 and the liquid application member 501 may be integrally formed of a material having the same properties (for example, a material having a high liquid absorption rate). In other words, the liquid application member 501 may be part of the liquid supply member 50. In such a case, liquid can be supplied from the liquid supply member 50 to the liquid application member 501 more smoothly by the capillary action and a reduction in cost can be achieved.

At this time, the liquid application member 501 draws up the liquid stored in the first liquid storage tank 44. Accordingly, the amount of liquid (liquid level) in the first liquid storage tank 44 temporarily decreases to a level below the reference liquid level described below. In response to this decrease of liquid in the first liquid storage tank 44, a series of liquid supply operations for feeding liquid from the second liquid storage tank 47 to the first liquid storage tank 44 is performed. This series of liquid supply operations is mainly performed at the time of activation of the post-processing apparatus 3 or at the time of start of execution of the binding processing involving liquid application in the post-processing apparatus 3, and corresponds to the liquid supply operations for bringing the liquid application using the liquid application member 501 to be executable.

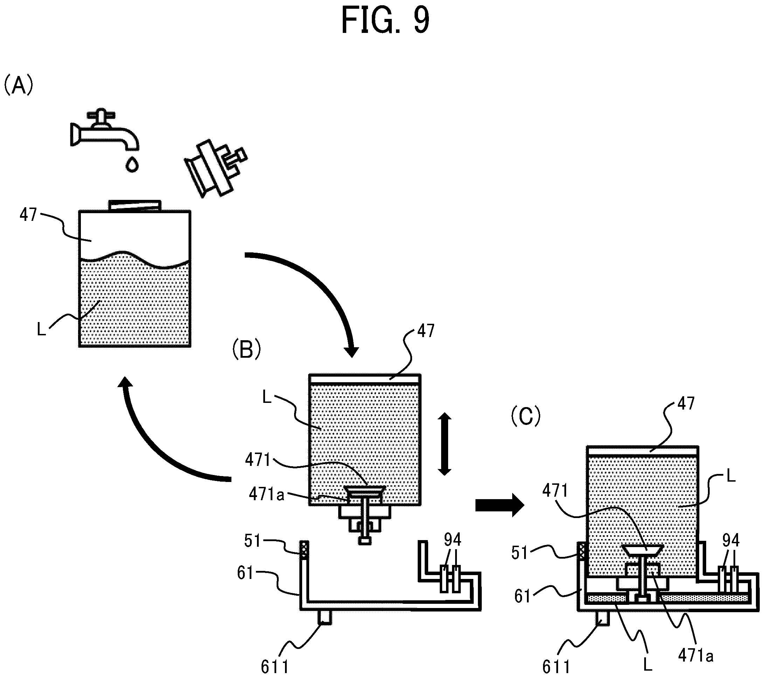

The edge binder 25 or the post-processing apparatus 3 is provided with the second liquid storage tank 47. The second liquid storage tank 47 is attachable to and detachable from the second-liquid-storage-tank fixer 61 (a part of the second liquid storage) disposed in the edge binder 25 or the post-processing apparatus 3 (see FIG. 9). As the second liquid storage tank 47 is fixed (set) to the second-liquid-storage-tank fixer 61 (a part of the second liquid storage) at a given position, the liquid already stored in the second liquid storage tank 47 can be supplied to the first liquid storage tank 44.

The operation to supply liquid from the second liquid storage tank 47 to the first liquid storage tank 44 by the liquid supply pump 46 is executed in response to a decrease in the stored liquid amount (liquid level) in the first liquid storage tank 44. The stored liquid amount (liquid level) of the first liquid storage tank 44 is reduced by the liquid being consumed by the liquid application by the liquid applier 31. In other words, the operation of supplying liquid from the second liquid storage tank 47 to the first liquid storage tank 44 corresponds to the liquid supply operation needed with the execution of the job including the liquid application by the liquid applier 31.

This liquid supply operation corresponds to an operation of supplying liquid to the first liquid storage tank 44 so as to add liquid each time the stored liquid amount (liquid level) of the first liquid storage tank 44 falls below the reference liquid level, which is described below.

When the second liquid storage tank 47 is set in the second-liquid-storage-tank fixer 61, the second-liquid-storage-tank fixer 61 is filled with a certain amount of the liquid in the second liquid storage tank 47. The second-liquid-storage-tank fixer 61 includes a setting detection sensor 51 (a setting detector) (see part (B) of FIG. 9). When the setting detection sensor 51 detects the set state of the second liquid storage tank 47 to the second-liquid-storage-tank fixer 61 (see part (C) of FIG. 9), a signal indicating the set state is transmitted to the controller 100b, which is described below. Thus, the controller 100b detects whether the second liquid storage tank 47 is set on the second-liquid-storage-tank fixer 61. Details of the second liquid storage tank 47 are described later.

The first liquid storage tank 44 and the second liquid storage tank 47 are coupled to each other by the liquid supply passage 45. The liquid supply pump 46 is disposed near the second-liquid-storage-tank fixer 61. As the liquid supply pump 46 is driven, the liquid stored in the second liquid storage tank 47 is supplied (replenished) from the second liquid storage tank 47 to the first liquid storage tank 44 via the liquid supply passage 45. Accordingly, the second-liquid-storage-tank fixer 61 is a component of the liquid supplier that executes a liquid supply operation to supply liquid from the second liquid storage tank 47 to the first liquid storage tank 44. The liquid supply passage 45 includes a flexible material. According to such a configuration, even if the first liquid storage tank 44 is moved by the liquid-applier movement assembly 35, liquid can be supplied from the second liquid storage tank 47 to the first liquid storage tank 44.

The amount of liquid supplied from the second liquid storage tank 47 to the first liquid storage tank 44 can be controlled in accordance with the detection result of the first liquid-level sensor 43. In other words, the controller 100b, which is described below, determines whether the stored liquid amount (liquid level) in the first liquid storage tank 44 based on the detection result of the first liquid-level sensor 43. In accordance with the determined stored liquid amount (liquid level) of the first liquid storage tank 44, the controller 100b controls the operation speed and time of the liquid supply pump 46. Thus, the controller 100b can adjust the amount of liquid to be replenished to the first liquid storage tank 44 to maintain the stored liquid amount (liquid level) in the first liquid storage tank 44 at a constant level of liquid.

A description is given below of the configuration of the crimper 32.

As illustrated in FIG. 3, the crimper 32 as a post-processing device presses and deforms at least a portion (liquid application position) of the sheet bundle Pb, to which liquid has been applied by the liquid applier 31, by serrated upper crimping teeth 32a and lower crimping teeth 32b, and crimps the sheets P of the portion to bind the sheet bundle Pb. In other words, the crimper 32 can bind the sheet bundle Pb without staples. The components of the crimper 32 such as the upper crimping teeth 32a and the lower crimping teeth 32b are disposed on a crimping frame 32c. In the following description, such a way of pressing and deforming a given position on the sheet bundle Pb to bind the sheet bundle Pb may be referred to as "crimp binding." In other words, the crimper 32 crimps and binds the sheet bundle Pb or performs the crimp binding on the sheet bundle Pb. The crimping and binding operation of the crimper 32 that involves control processing is referred to as "crimp binding process."

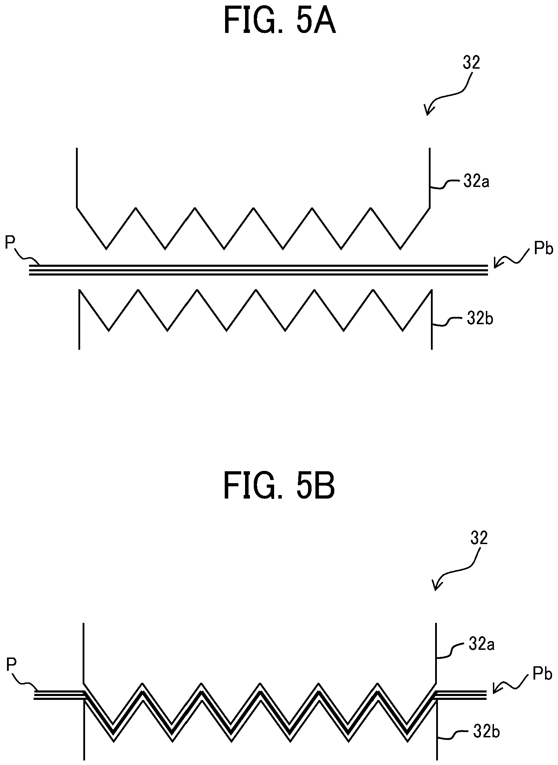

FIGS. 5A and 5B are schematic diagrams illustrating the configuration of the crimper 32. As illustrated in FIGS. 5A and 5B, the crimper 32 includes the upper crimping teeth 32a and the lower crimping teeth 32b. The upper crimping teeth 32a and the lower crimping teeth 32b are disposed to face each other in the thickness direction of the sheet bundle Pb to sandwich the sheet bundle Pb placed on the internal tray 22. The upper crimping teeth 32a and the lower crimping teeth 32b have respective serrate faces facing each other. The serrate face of each of the upper crimping teeth 32a and the lower crimping teeth 32b includes concave portions and convex portions alternately formed. The concave portions and the convex portions of the upper crimping teeth 32a are shifted from those of the lower crimping teeth 32b such that the upper crimping teeth 32a are engaged with the lower crimping teeth 32b. The upper crimping teeth 32a and the lower crimping teeth 32b are brought into contact with and separated from each other by the driving force of a contact-separation motor 32d illustrated in FIG. 10.

In the process of supplying the sheets P of the sheet bundle Pb to the internal tray 22, the upper crimping teeth 32a and the lower crimping teeth 32b are separated from each other as illustrated in FIG. 5A. When all the sheets P of the sheet bundle Pb are placed on the internal tray 22, the upper crimping teeth 32a and the lower crimping teeth 32b are engaged with each other as illustrated in FIG. 5B by the driving force of the contact-separation motor 32d to press and deform the sheet bundle Pb in the thickness direction. As a result, the sheet bundle Pb that has been placed on the internal tray 22 is crimped and bound. The sheet bundle Pb thus crimped and bound is ejected to the second ejection tray 26 by the conveyance roller pair 15.

The configuration of the crimper 32 as a crimping assembly is not limited to the configuration of a moving assembly exemplified in the present embodiment, and may be any other suitable structure in which the upper crimping teeth 32a and the lower crimping teeth 32b of the crimping assembly engage with each other. For example, the crimping assembly may bring the upper crimping teeth 32a and the lower crimping teeth 32b into contact with each other and separate the upper crimping teeth 32a and the lower crimping teeth 32b from each other with a link mechanism and a driving source that simply rotates in the forward direction or that rotates the forward and backward directions (e.g., the crimping assembly disclosed in Japanese Patent No. 6057167). Alternatively, the crimping assembly may employ a linear motion system to linearly bring the upper crimping teeth 32a and the lower crimping teeth 32b into contact with each other and separate the upper crimping teeth 32a and the lower crimping teeth 32b from each other with a screw assembly that converts the forward and backward rotational motions of a driving source into linear reciprocating motion.

As illustrated in FIG. 3, the edge binder 25 includes an edge-binder movement assembly 57. The edge-binder movement assembly 57 moves the edge binder 25 (in other words, the liquid applier 31 and the crimper 32) in the main scanning direction along the downstream end of the sheet P, which is placed on the internal tray 22, in the conveyance direction. The edge-binder movement assembly 57 includes, for example, the base 48, a guide shaft 49, the edge-binder movement motor 55, and a driving force transmission assembly 551 that transmits the driving force of the edge-binder movement motor 55 to the base 48, and a standby position sensor 540 (see FIG. 10).

The liquid applier 31 and the crimper 32 are attached to the base 48 such that the liquid applier 31 and the crimper 32 are adjacent to each other in the main scanning direction. As illustrated in FIGS. 3 and 4, the guide shaft 49 is disposed in the main scanning direction on the upstream side of a binding assembly base 116 in the conveyance direction and is held by multiple guide shaft brackets 49a and 49b. The guide shaft 49 is disposed to extend in the main scanning direction on the binding assembly base 116, and holds the base 48 to be movable in the main scanning direction. As illustrated in FIG. 4, the guide rail 115 is disposed in the downstream side of the binding assembly base 116 in the conveyance direction and extends in the main scanning direction. The guide rail 115 has a to-be-fitted portion 115a that fits a scanning roller 48a, which is rotatably disposed on the base 48, across the main scanning direction. In other words, the base 48 is movably held by the guide shaft 49 and the guide rail 115 in the main scanning direction on the binding assembly base 116.

The edge-binder movement motor 55 generates a driving force to move the edge binder 25. The driving force transmission assembly 551 transmits the driving force of the edge-binder movement motor 55 to the base 48 via pulleys 551a and 551b, a timing belt 551c, and a fastening portion 48b that fastens the base 48 and the timing belt 551c. As a result, the liquid applier 31 and the crimper 32 integrated by the base 48 move in the main scanning direction along the guide shaft 49.

The edge-binder movement motor 55 according to the present embodiment is, for example, a servo motor that can stop the edge binder 25 at a target position (the first binding position B1 described below) without returning the edge binder 25 to an origin position (for example, a standby position HP described below) each time the edge binder 25 moves.

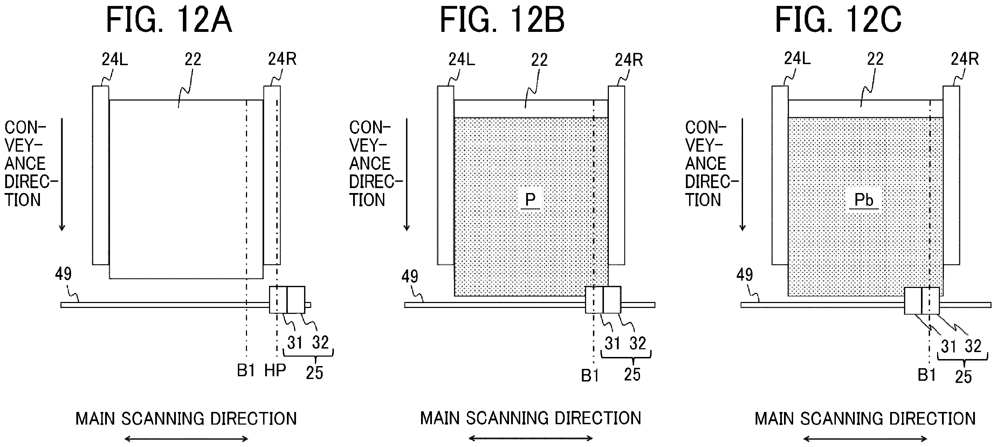

The post-processing apparatus 3 further includes a standby position sensor 540 and an encoder sensor 541. The standby position sensor 540 is, for example, a light-shielding optical sensor (see FIG. 10) to detect that the edge binder 25 has reached a standby position HP (see part (A) of FIG. 12). The encoder sensor 541 (see FIG. 10) is attached to an output shaft of the edge-binder movement motor 55. The controller 100b, which is described later, detects that the edge binder 25 has reached the standby position HP, based on a detection result of the standby position sensor 540. The controller 100b also counts pulse signals output from the encoder sensor 541 to ascertain the current position of the edge binder 25 moved from the standby position HP.

However, a specific method of stopping the edge binder 25 at the target position without returning the edge binder 25 to the standby position HP is not limited to the aforementioned example. As another example, the post-processing apparatus 3 may include a sensor that detects that the edge binder 25 has reached a predetermined target position.

As illustrated in FIG. 3, a crimper shaft 54 provided with a drive transmission gear 54a is fixed to a bottom face of the crimping frame 32c that holds the components of the crimper 32. The crimper shaft 54 and the drive transmission gear 54a are held by the base 48 on which the crimping frame 32c is disposed, so as to be rotatable in the forward and reverse directions. The drive transmission gear 54a meshes with an output gear 56a of a crimper pivot motor 56. The crimper 32 can be rotated in the forward and reverse directions about the crimper shaft 54 on the base 48 by a driving force transmitted from the crimper pivot motor 56 to the crimper shaft 54 via the output gear 56a and the drive transmission gear 54a.

In the above description, the edge binder 25 has a configuration of moving along the guide shaft 49 with the crimper 32 and the liquid applier 31 being integrated, the embodiments of the present disclosure are not limited to the above-described configuration. For example, the crimper 32 and the liquid applier 31 may have a configuration of moving separately from each other.

A description is given below of the staple binder 155.

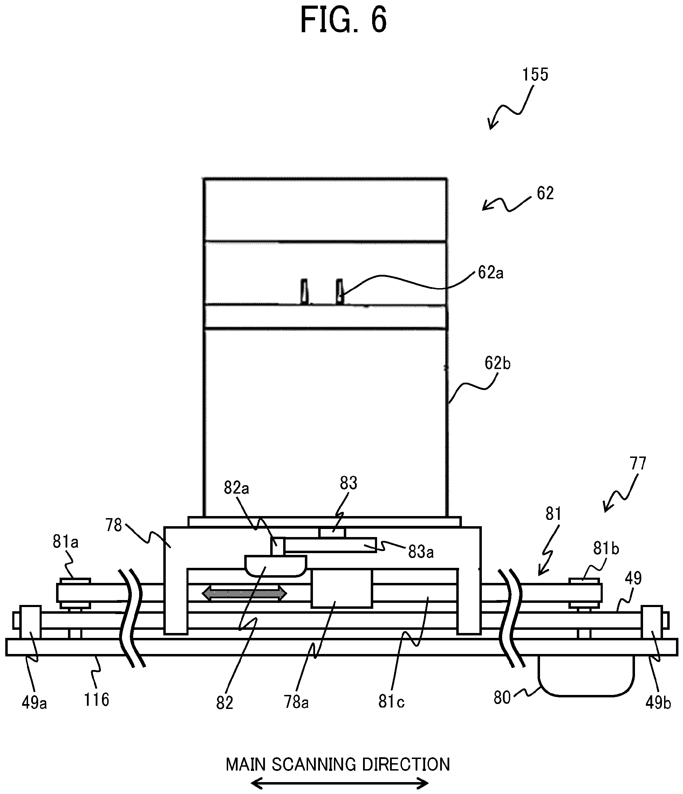

Specifically, a detailed description is given below of the staple binder 155 having a function of executing a stapling process. FIG. 6 is a schematic diagram illustrating the staple binder 155, viewed from the upstream side of the staple binder 155 in the conveyance direction. The staple binder 155 includes a stapler 62 that binds the sheet bundle Pb with staples. The stapler 62 is disposed downstream from the internal tray 22 in the conveyance direction and spaced apart from the edge binder 25 in the main scanning direction.

The stapler 62 serving as a post-processing device has a configuration of performing so-called "stapling" (i.e., stapling process) to bind the sheet bundle Pb with a staple or staples as a stapling member. More specifically, the stapler 62 includes a stapling-part drive motor 62d illustrated in FIG. 10. The stapling-part drive motor 62d drives a stapling part 62a. The driving force of the stapling-part drive motor 62d causes a staple loaded in the stapling part 62a to penetrate through a sheet bundle Pb, so that the stapling part 62a binds the sheet bundle Pb. Since the stapler 62 has a typical configuration, a detailed description thereof will be omitted unless otherwise required.

As illustrated in FIG. 6, the staple binder 155 includes a staple binder movement assembly 77. The staple binder movement assembly 77 moves the staple binder 155 in the main scanning direction along a downstream end in the conveyance direction of the sheet P or the sheet bundle Pb placed on the internal tray 22. The staple binder movement assembly 77 includes, for example, a base 78, the guide shaft 49, a staple binder movement motor 80, and a driving force transmission assembly 81. The driving force transmission assembly 81 transmits a driving force of the staple binder movement motor 80 to the base 78 via pulleys 81a and 81b, a timing belt 81c, and a fastening portion 78a that fastens the base 78 and the timing belt 81c. A stapler shaft 83 including a drive transmission gear 83a is fixed to a bottom face of a stapling frame 62b that holds the components of the stapler 62.

The stapler shaft 83 and the drive transmission gear 83a are held by the base 78 on which the stapling frame 62b is disposed, so as to be rotatable in the forward and reverse directions. The drive transmission gear 83a is engaged with an output gear 82a of the stapler pivot motor 82. The stapler 62 can be rotated in the forward and reverse directions about the stapler shaft 83 on the base 78 by a driving force transmitted from the stapler pivot motor 82 to the stapler shaft 83 via the output gear 82a and the drive transmission gear 83a.

The edge binder 25 and the staple binder 155 are supported by the common guide shaft 49. In other words, the edge-binder movement assembly 57 and the staple binder movement assembly 77 move the edge binder 25 and the staple binder 155 in the main scanning direction along the common guide shaft 49. The edge-binder movement assembly 57 and the staple binder movement assembly 77 can independently move the edge binder 25 and the staple binder 155.

A description is given below of a modification of the staple binder 155.

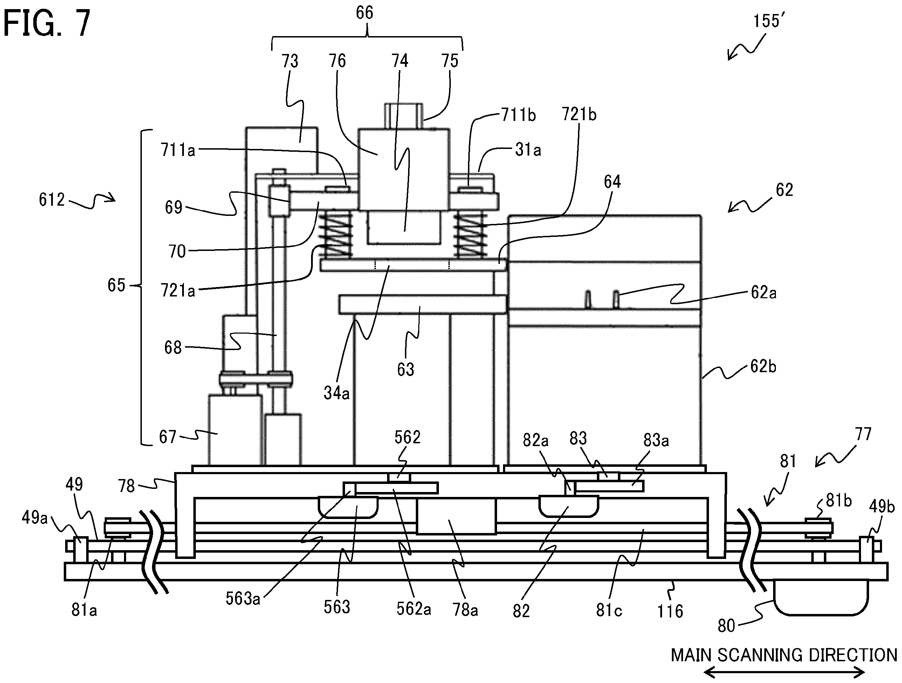

FIG. 7 illustrates a staple binder 155' as a modification of the staple binder 155. More specifically, FIG. 7 is a schematic diagram illustrating the staple binder 155' viewed from the upstream side thereof in the conveyance direction. The staple binder 155' is different from the staple binder 155 in that the staple binder 155' includes a second liquid applier 612 in addition to the stapler 62. As illustrated in FIG. 7, the staple binder 155' includes the second liquid applier 612 and the stapler 62. The second liquid applier 612 and the stapler 62 are disposed downstream from the internal tray 22 in the conveyance direction and adjacent to each other in the main scanning direction.

The second liquid applier 612 performs the liquid application of applying liquid stored in a third liquid storage tank 73 to the sheet P or the sheet bundle Pb placed on the internal tray 22. A given area including a position to which the liquid application is performed on the sheet P or the sheet bundle Pb by the second liquid applier 612 corresponds to a binding position to be stapled by the stapler 62. As illustrated in FIG. 7, the second liquid applier 612 includes a second lower pressure plate 63, a second upper pressure plate 64, a second liquid-application-unit movement assembly 65, and a second liquid application assembly 66. The second liquid-application-unit movement assembly 65 includes, for example, a second liquid-application-unit movement motor 67, a second trapezoidal screw 68, a second nut 69, a second base plate 70, second columns 711a and 711b, and second coil springs 721a and 721b.

The second liquid application assembly 66 includes the third liquid storage tank 73, a second liquid supply member 75, a second liquid application member 74, and a second joint 76. Since the second liquid application assembly 66 and the liquid application assembly of the liquid applier 31 (including the first liquid storage tank 44, the liquid supply member 50, the liquid application member 501, and the holder 37) illustrated in FIGS. 3 and 4 have common configurations, redundant descriptions thereof will be omitted unless otherwise required. Since the stapler 62 has a configuration similar to the configuration of the staple binder 155 illustrated in FIG. 6, a detailed description thereof is omitted below unless otherwise required. Since the second liquid applier 612 and the liquid applier 31 that are illustrated in FIG. 3 have common pivot mechanisms, redundant descriptions thereof will be omitted unless otherwise required. The pivot mechanism of the second liquid applier 612 includes a liquid-applier pivot motor 563, an output gear 563a, drive transmission gear 562a, and a liquid applier shaft 562.

As with the staple binder 155' illustrated in FIG. 7, when the liquid application is also performed on the sheet P in the stapling process, the binding position is loosened and softened, thus allowing the staple to easily pass through. As a result, the number of sheets to be bound per sheet bundle Pb can be increased as compared with a case where the stapling process is performed without performing the liquid application.

A detailed description is given below of the second liquid storage tank 47.

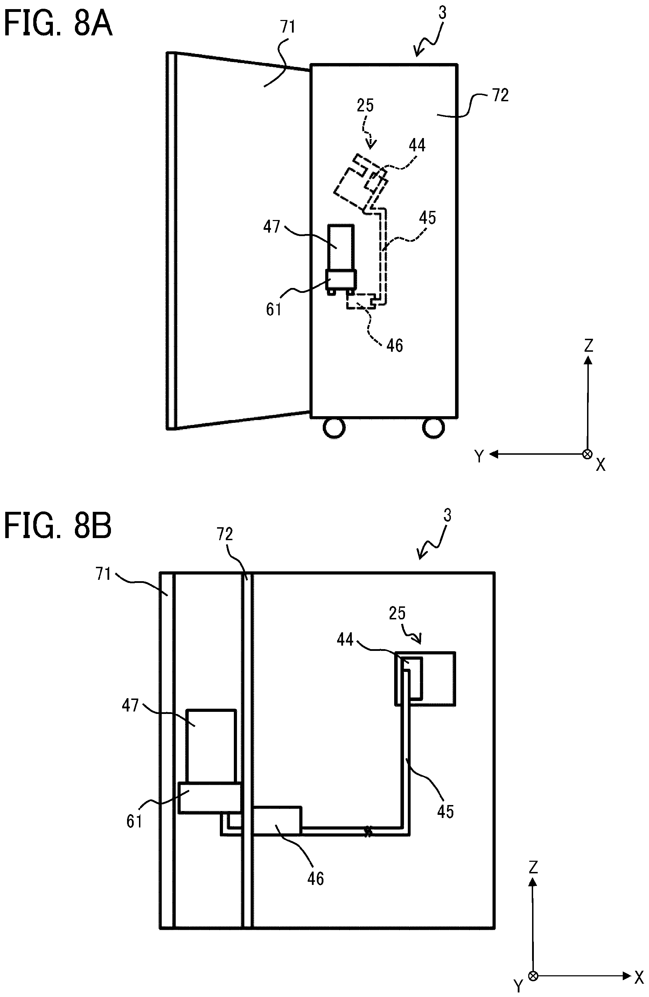

With reference to FIGS. 8A, 8B, and 9, a description is given of the arrangement and configuration of the second liquid storage tank 47 in the post-processing apparatus 3. FIGS. 8A and 8B illustrate an example arrangement and configuration of the second liquid storage tank 47 as the main tank. FIG. 8A illustrates the post-processing apparatus 3 with a cover 71 opened. FIG. 8B is a sectional side view of the post-processing apparatus 3, illustrating the post-processing apparatus 3 with the cover 71 closed. As illustrated in FIG. 8A, the second liquid storage tank 47 is located so as to be accessible when the cover 71 of the post-processing apparatus 3 is opened. As illustrated in FIG. 8B, the second liquid storage tank 47 and the second-liquid-storage-tank fixer 61 are disposed on the near side in a depth direction (X direction) of the post-processing apparatus 3. The first liquid storage tank 44 is disposed on the far side in the depth direction (X direction) of the post-processing apparatus 3. A housing side plate 72 of the post-processing apparatus 3 is disposed between the location of the second liquid storage tank 47 and the second-liquid-storage-tank fixer 61 and the location of the first liquid storage tank 44 and so forth. The second-liquid-storage-tank fixer 61 is attached to the housing side plate 72 of the post-processing apparatus 3.

FIG. 9 illustrates a state in which the second liquid storage tank 47 is attachable to and detachable from the second-liquid-storage-tank fixer 61 and a state in which liquid L is replenished to the second liquid storage tank 47. As illustrated in part (A) of FIG. 9, the second liquid storage tank 47 is attachable to and detachable from the second-liquid-storage-tank fixer 61 so that liquid L can be replenished to the first liquid storage tank 44. As illustrated in part (B) of FIG. 9, the second-liquid-storage-tank fixer 61 is provided with the setting detection sensor 51 serving as a setting detector that detects that the second liquid storage tank 47 is set on the second-liquid-storage-tank fixer 61.

When the setting detection sensor 51 detects the set state of the second liquid storage tank 47 to the second-liquid-storage-tank fixer 61 (see part (C) of FIG. 9), a signal indicating the set state is transmitted to the controller 100b, which is described below. Thus, the controller 100b detects whether the second liquid storage tank 47 is set on the second-liquid-storage-tank fixer 61.

The second liquid-level sensor 94 (a second liquid detector) that detects the amount of liquid L stored in the second liquid storage tank 47 is disposed in the second-liquid-storage-tank fixer 61. The output value (voltage) of the second liquid-level sensor 94 is notified to the controller 100b. The controller 100b determines the output value (voltage) of the second liquid-level sensor 94 to determine whether the amount of liquid stored in the second-liquid-storage-tank fixer 61 is a required amount of liquid. When the controller 100b determines that the second liquid storage tank 47 is set on the second-liquid-storage-tank fixer 61 (i.e., is in a set state) based on the output signal of the setting detection sensor 51, the controller 100b turns on the second liquid-level sensor 94 such that the remaining amount of liquid (the amount of the liquid stored) in the second-liquid-storage-tank fixer 61 can be detected.

When the second liquid storage tank 47 is not set on the second-liquid-storage-tank fixer 61 (i.e., is in a non-set state), a liquid discharge port 471a of the second liquid storage tank 47 is closed by a liquid supply valve 471 so that liquid L does not leak. As illustrated in part (C) of FIG. 9, when the second liquid storage tank 47 is set to the second-liquid-storage-tank fixer 61, the liquid supply valve 471 is pushed up to open the liquid discharge port 471a of the second liquid storage tank 47. Thus, the liquid L can flow out from the second liquid storage tank 47 to the second-liquid-storage-tank fixer 61. As a result, the liquid L stored in the second liquid storage tank 47 flows out to the second-liquid-storage-tank fixer 61. The liquid L that has flowed out from the second liquid storage tank 47 is stored in the second-liquid-storage-tank fixer 61.

As a measurement to prevent liquid L from being frozen during maintenance of the post-processing apparatus 3, a liquid draining process may be performed to drain the liquid L in the post-processing apparatus 3. In the liquid draining process, the liquid L remaining in the first liquid storage tank 44 and the liquid supply passage 45 is supplied by the liquid supply pump 46 to the second-liquid-storage-tank fixer 61 via the liquid supply passage 45 in the reverse direction. For that purpose, the second-liquid-storage-tank fixer 61 is set to the capacity that can sufficiently store liquid L in the first liquid storage tank 44 and the liquid supply passage 45. As illustrated in parts (B) and (C) of FIG. 9, the second-liquid-storage-tank fixer 61 is provided with a liquid drain plug 611. After the liquid L remaining in the first liquid storage tank 44 and the liquid supply passage 45 is reversely fed by the liquid supply pump 46 to the second-liquid-storage-tank fixer 61, the liquid drain plug 611 is opened to drain the liquid stored in the second-liquid-storage-tank fixer 61 from the inside of the post-processing apparatus 3.

A description is given below of a control block of the post-processing apparatus 3 with reference to FIG. 10. FIG. 10 is a block diagram illustrating a hardware configuration for executing control processing in the post-processing apparatus 3. As illustrated in FIG. 10, the post-processing apparatus 3 includes a central processing unit (CPU) 101, a random-access memory (RAM) 102, a read-only memory (ROM) 103, a hard disk drive (HDD) 104, and an interface (I/F) 105. The CPU 101, the RAM 102, the ROM 103, the HDD 104, and the I/F 105 are connected to each other via a common bus 109.

The CPU 101 is an arithmetic device and controls the overall operation of the post-processing apparatus 3. The RAM 102 is a volatile storage medium that allows high speed reading and writing of information, and is used as a working area when the CPU 101 processes information. The ROM 103 is a read-only non-volatile storage medium, and stores programs such as firmware. The HDD 104 is a non-volatile storage medium that allows data to be read and written and has a relatively large storage capacity. The HDD 104 stores, for example, an operating system (OS), various control programs, and application programs.

By an arithmetic function of the CPU 101, the post-processing apparatus 3 processes, for example, a control program stored in the ROM 103 and an information processing program (application program) loaded into the RAM 102 from a storage medium such as the HDD 104. Such processing configures a software controller including various functional modules of the post-processing apparatus 3. The software controller thus configured cooperates with hardware resources of the post-processing apparatus 3 to construct functional blocks that implement functions of the post-processing apparatus 3. In other words, the CPU 101, the RAM 102, the ROM 103, the HDD 104, and the I/F 105 constitute at least part of a controller 100b serving as a control device that controls the operation of the post-processing apparatus 3.

The I/F 105 is an interface that connects the conveyance roller pairs 10, 11, 14, and 15, the switching member 20, the side fences 24L and 24R, the contact-separation motor 32d, the crimper pivot motor 56, the liquid-application-unit movement motor 42, the liquid-applier pivot motor 563, the edge-binder movement motor 55, the stapling-part drive motor 62d, the stapler pivot motor 82, the staple binder movement motor 80, the liquid supply pump 46, the movement sensor 40a, the first liquid-level sensor 43, the second liquid-level sensor 94, the setting detection sensor 51, the standby position sensor 540, the encoder sensor 541, and an operation panel 110 to the common bus 109.

The controller 100b controls, via the I/F 105, the operations of the conveyance roller pairs 10, 11, 14, and 15, the switching member 20, the side fences 24L and 24R, the contact-separation motor 32d, the crimper pivot motor 56, the liquid-application-unit movement motor 42, the liquid-applier pivot motor 563, the edge-binder movement motor 55, the stapling-part drive motor 62d, the stapler pivot motor 82, the staple binder movement motor 80, and the liquid supply pump 46. The controller 100b acquires detection results from the movement sensor 40a, the first liquid-level sensor 43, the second liquid-level sensor 94, the setting detection sensor 51, the standby position sensor 540, and the encoder sensor 541. Although FIG. 10 illustrates only the components related to the edge binder 25 and the staple binder 155 that perform the edge binding, the components related to the saddle binder 28 that performs the saddle binding are also controlled by the controller 100b.

As illustrated in FIG. 1, the image forming apparatus 2 includes the operation panel 110. The operation panel 110 includes an operation section that receives instructions input by an operator and a display serving as a notifier that notifies the operator of information. The operation section includes, for example, hard keys and a touch screen overlaid on the display. The operation panel 110 acquires information from the user through the operation section and provides information to the user through the display. A specific example of the notifier is not limited to the display and may be a light-emitting diode (LED) lamp or a speaker. The post-processing apparatus 3 may include an operation panel 110 similar to the above-described operation panel 110 of the image forming apparatus 2.

As described above, the post-processing apparatus 3 implements the function of performing operation control related to the liquid application by software (control programs) executed by the CPU 101 with hardware resources included in the controller 100b.

The liquid application performed by the post-processing apparatus 3 may be performed in a form in which the staple binder 155 is provided with only the stapler 62 and the liquid application is performed using the liquid applier 31 of the edge binder 25. By contrast, the edge binder 25 may include only the crimper 32, and the liquid application may be performed in a mode in which the second liquid applier 612 is used. In other words, the post-processing apparatus 3 may have a configuration in which only one of the liquid applier 31 and the second liquid applier 612 performs the liquid application, regardless of the type of the binding process.

In the above description, the staple binder 155' has a configuration of moving along the guide shaft 49 with the stapler 62 and the second liquid applier 612 being integrated, the embodiments of the present disclosure are not limited to the above-described configuration. For example, the stapler 62 and the second liquid applier 612 may have a configuration of moving separately from each other.

A description is given below of a binding process.

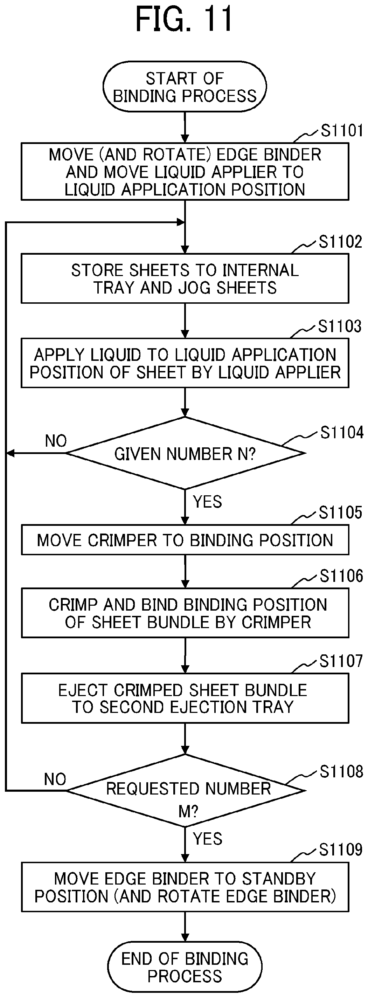

Specifically, a description is given below of a binding process executed by the edge binder 25 included in the post-processing apparatus 3. FIG. 11 is a flowchart of a process of executing one-point binding. FIGS. 12A, 12B, and 12C are diagrams illustrating the position shift of the edge binder 25 (the liquid applier 31 and the crimper 32) during the one-point binding. In FIGS. 12A, 12B, and 12C, the changes in the postures of the liquid applier 31 and the crimper 32 are not illustrated. The position (liquid application position) on a sheet P or a sheet bundle Pb onto which the liquid application is performed by the liquid applier 31 corresponds to the binding position on the sheet bundle Pb to be crimped by the crimper 32. For this reason, in the following description, the liquid application position and the binding position are described with the same reference sign (B1).

For example, the controller 100b starts the binding process illustrated in FIG. 11 when the controller 100b acquires an instruction to execute the binding process from the image forming apparatus 2. In the following description, the instruction to execute the binding process may be referred to as a "binding command."

The binding command includes, for example, the type of the sheet P (i.e., information affecting the spread of liquid, such as material and thickness), the number of sheets P of the sheet bundle Pb, the number of sheet bundles Pb to be bound, the binding position on the sheet bundle Pb, and the binding posture of the edge binder 25. In the following description, the number of sheets P of the sheet bundle Pb may be referred to as "given number of sheets N" whereas the number of sheet bundles Pb to be bound may be referred to as "requested number of copies M." The liquid applier 31 and the crimper 32 are assumed to be in a parallel binding posture and located at a standby position HP that is a position away in the width direction from the sheets P placed on the internal tray 22 at the start of the binding process as illustrated in FIG. 12A.

When the posture that is instructed by the binding command is the "inclined binding posture," in step S1101, the controller 100b drives the liquid-applier pivot motor 563 and the crimper pivot motor 56 to rotate the liquid applier 31 and the crimper 32 of the edge binder 25 into the inclined binding posture. Alternatively, when the posture that is instructed by the binding command is the "inclined binding posture," the crimper 32 alone may be rotated to the inclined binding posture while the liquid applier 31 may not be rotated. As a result, the driving assembly may be simplified as compared with a case where both the liquid applier 31 and the crimper 32 are rotated in the forward and reverse directions, and thus effects of cost reduction, downsizing of the apparatus, and reduction of failure of the device are exhibited.

On the other hand, when the posture that is instructed by the binding command is the "parallel binding posture," the controller 100b omits the aforementioned operation of rotating the liquid applier 31 and the crimper 32 of the edge binder 25 to the inclined binding posture.

In step S1101, the controller 100b also drives the edge-binder movement motor 55 to move the edge binder 25 in the main scanning direction so that the liquid applier 31 faces the first liquid application position B1 instructed by the binding command. The controller 100b executes the operation of step S1101 before a first sheet P is conveyed to the internal tray 22 by the conveyance roller pairs 10, 11, 14, and 15.

In step S1102, the controller 100b rotates the conveyance roller pairs 10, 11, 14, and 15 to store the sheet P, on which the image has been formed by the image forming apparatus 2, onto the internal tray 22. In step S1102, the controller 100b also moves the side fences 24L and 24R in the main scanning direction to align the position of the sheet P or the sheet bundle Pb placed on the internal tray 22 in the main scanning direction. In short, the controller 100b performs so-called jogging.

In step S1103, the controller 100b causes the liquid applier 31 facing the first liquid application position B1 to perform the liquid application onto the first liquid application position B1 of the sheet P placed on the internal tray 22 in the immediately preceding step S1102, based on the liquid application control data adjusted in advance. In other words, the controller 100b drives the liquid-application-unit movement motor 42 to bring the liquid application member 501 into contact with the liquid application position B1 on the sheet P placed on the internal tray 22 (see FIG. 12B). In the liquid application process in step S1103, the controller 100b adjusts the position at which the liquid application member 501 applies liquid to the sheet P in accordance with the type of the sheet P and the binding position included in the binding command. The controller 100b adjusts the amount of pressing the liquid application member 501 against the sheet P. In other words, the controller 100b controls the driving of the liquid-application-unit movement motor 42 based on the adjusted control data, and adjusts the amount of movement of the liquid application member 501 with respect to the first liquid application position B1 of the sheet P placed on the internal tray 22.

In step S1104, the controller 100b determines whether the number of sheets P placed on the internal tray 22 has reached the given number of sheets N instructed by the binding command. When the controller 100b determines that the number of sheets P placed on the internal tray 22 has not reached the given number of sheets N (NO in step S1104), the controller 100b executes the operations of steps S1102 to S1104 again until the number of sheets P placed on the internal tray 22 reaches the given number of sheets N (YES in step S1104). In other words, the controller 100b executes the processing of steps S1102 to S1104 each time the sheet P is conveyed to the internal tray 22 by the conveyance roller pairs 10, 11, 14, and 15. The liquid application by the liquid applier 31 may be performed not only on all of the plurality of sheets P constituting the sheet bundle Pb, but also on only a part of the plurality of sheets P.

When the controller 100b determines that the number of sheets P placed on the internal tray 22 has reached the given number of sheets N (YES in step S1104), in step S1105, the controller 100b drives the edge-binder movement motor 55 to move the edge binder 25 in the main scanning direction such that the crimper 32 faces the first binding position B1 as illustrated in FIG. 12C.

In step S1106, the controller 100b causes the crimper 32 to crimp the sheet bundle Pb placed on the internal tray 22. In step S1107, the controller 100b causes the conveyance roller pair 15 to eject the sheet bundle Pb thus crimped and bound by the crimper 32 to the second ejection tray 26. Specifically, the controller 100b drives the contact-separation motor 32d to cause the upper crimping teeth 32a and the lower crimping teeth 32b to pinch the first binding position B1 on the sheet bundle Pb placed on the internal tray 22. The sheet bundle Pb is pressed and deformed between the upper crimping teeth 32a and the lower crimping teeth 32b, and thus the sheet bundle Pb is crimped. Then, the controller 100b rotates the conveyance roller pair 15 to eject the sheet bundle Pb thus crimped and bound to the second ejection tray 26.

The sheet bundle Pb that is supported on the internal tray 22 has a crimping area (corresponding to the first binding position B1) sandwiched between the upper crimping teeth 32a and the lower crimping teeth 32b in step S1106. The crimping area overlaps a liquid application area (corresponding to the first liquid application position B1) contacted by the end of the liquid application member 501 in step S1103. In other words, the crimper 32 crimps an area to which liquid is applied by the liquid applier 31 on the sheet bundle Pb placed on the internal tray 22. The crimping area that is pinched by the upper crimping teeth 32a and the lower crimping teeth 32b may completely or partially overlaps the liquid application area contacted by the distal end (tip portion) of the liquid application member 501, to obtain a sufficient binding strength.

In step S1108, the controller 100b determines whether the number of sheet bundles Pb thus ejected to the second ejection tray 26 has reached the requested number of copies M indicated by the binding command. When the controller 100b determines that the number of sheet bundles Pb thus ejected has not reached the requested number of copies M (NO in step S1108), the controller 100b executes the operations of step S1102 and the following steps again. In other words, when the controller 100b determines that the number of sheet bundles Pb thus ejected has not reached the requested number of copies M (NO in step S1108), the controller 100b repeats the operations of steps S1102 to S1108 until the number of sheet bundles Pb ejected to the second ejection tray 26 reaches the requested number of copies M.

On the other hand, when the controller 100b determines that the number of sheet bundles Pb output to the second ejection tray 26 has reached the requested number of copies M (YES in step S1108), in step S1109, the controller 100b drives the edge-binder movement motor 55 to move the edge binder 25 (the liquid applier 31 and the crimper 32) to the standby position HP as illustrated in FIG. 12A. When the posture that is instructed by the binding command is the "oblique binding posture," in step S1109, the controller 100b also drives the liquid-applier pivot motor 563 and the crimper pivot motor 56 to rotate the liquid applier 31 and the crimper 32 into the parallel binding posture. On the other hand, when the posture that is instructed by the binding command is the "parallel binding posture," the controller 100b skips the aforementioned operation of rotating the liquid applier 31 and the crimper 32 to the parallel binding posture. As a result, the edge binder 25 (the liquid applier 31 and the crimper 32) returns to the standby position HP position illustrated in FIG. 12A. In steps S1101 and S1109, the execution order of the movement in the main scanning direction and the rotation in the forward and reverse directions of the liquid applier 31 and the crimper 32 is not limited to the aforementioned order and may be reversed.

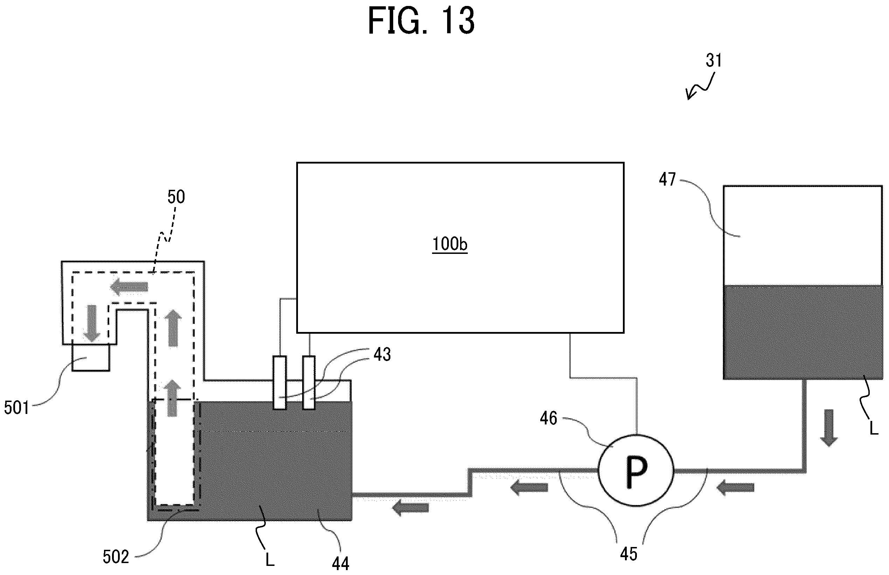

A configuration of a liquid applier 31 of a post-processing apparatus 3 according to an embodiment of the present disclosure is described in more detail. FIG. 13 is a diagram illustrating the liquid applier 31 according to the present embodiment. The liquid applier 31 includes a liquid supply member 50 having a liquid application member 501 a liquid immersion portion 502, a first liquid storage tank 44 as a first liquid storage, a second liquid storage tank 47 as a second liquid storage, a liquid supply passage 45, a liquid supply pump 46 as a liquid supplier, and a controller 100b as a control device.

As described above, the liquid supply member 50 is formed of a liquid absorber that has a portion (the liquid immersion portion 502) to be immersed in the liquid stored in the first liquid storage tank 44 and another portion (the liquid application member 501) to come into contact with a sheet P or a sheet bundle Pb to perform the liquid application onto the sheet P or the sheet bundle Pb.

The second liquid storage tank 47 stores liquid to be supplied to the first liquid storage tank 44. The liquid stored in the second liquid storage tank 47 is supplied to the first liquid storage tank 44 through the liquid supply passage 45 by the operation of the liquid supply pump 46.

The first liquid storage tank 44 includes the first liquid-level sensor 43 as a first liquid detector for detecting the presence or absence of liquid (i.e., the amount of liquid stored) in the first liquid storage tank 44. The first liquid-level sensor 43 is an electrode sensor having a pair of electrodes.

The output value (voltage) output when the first liquid-level sensor 43 detects the liquid (liquid level) in the first liquid storage tank 44 is input to the controller 100b as a control device. The controller 100b determines the presence or absence of liquid (the amount of liquid stored) in the first liquid storage tank 44 based on whether the output value, which is input from the first liquid-level sensor 43, exceeds the "liquid detection threshold value" (threshold value). When the controller 100b determines that liquid needs to be replenished to the first liquid storage tank 44, the controller 100b operates the liquid supply pump 46 to supply the liquid from the second liquid storage tank 47 to the first liquid storage tank 44.

The controller 100b controls the timing of application of the voltage to the electrodes of the first liquid-level sensor 43. The controller 100b also controls the start and stop of the operation of the liquid supply pump 46 in accordance with the output value of the first liquid-level sensor 43. When the first liquid-level sensor 43 detects the liquid (liquid level) in the first liquid storage tank 44 by the operation of the liquid supply pump 46 according to the output value of the first liquid-level sensor 43, the controller 100b stops the operation of the liquid supply pump 46 and also stops the voltage application to the first liquid-level sensor 43.

The controller 100b measures the elapsed time after the operation of the liquid supply pump 46 is stopped. When the elapsed time exceeds a first predetermined time, the controller 100b energizes (i.e., applies a voltage to) the electrodes of the first liquid-level sensor 43 and performs the detection process of detecting the liquid (liquid level) in the first liquid storage tank 44 again.

It takes time for the liquid stored in the first liquid storage tank 44 to be drawn up by the capillary phenomenon of the liquid supply member 50 and sent from the liquid immersion portion 502 to the liquid application member 501 through the liquid supply member 50. For this reason, the controller 100b detects the liquid (liquid level) in the first liquid storage tank 44 after waiting for the predetermined time to elapse as described above. At this time, if the liquid supply member 50 draws up the liquid, the amount (liquid level) of liquid stored in the first liquid storage tank 44 decreases, and the first liquid-level sensor 43 does not detect the liquid (liquid level) in the first liquid storage tank 44, the controller 100b again operates the liquid supply pump 46 to supply the liquid from the second liquid storage tank 47 to the first liquid storage tank 44.

The output value of the first liquid-level sensor 43 corresponds to an electrical signal that changes according to the amount of contact of the electrodes with the liquid in the first liquid storage tank 44. Examples of the electrical signal include, but not limited to, a signal indicating an electrical resistance value, a signal indicating a voltage value, and a signal indicating a current value. In other words, the "electrical signal" may be any signal indicating an electrical value that changes when a current passes between the electrodes (when a voltage is applied) depending on whether the pair of electrodes of the electrode sensor is immersed in the liquid.

In the present embodiment, an electrode sensor has been described as an example of the first liquid-level sensor 43, but the first liquid-level sensor 43 is not limited thereto, and other methods may be employed. For example, a float sensor or a capacitance sensor may be used to detect the presence of the liquid. Further, the first liquid-level sensor 43 is not limited to a sensor that detects the liquid level (liquid surface) of the liquid in the first liquid storage tank 44, and may be any sensor that can detect the presence or absence of the liquid in the first liquid storage tank 44 (the amount of the liquid stored).

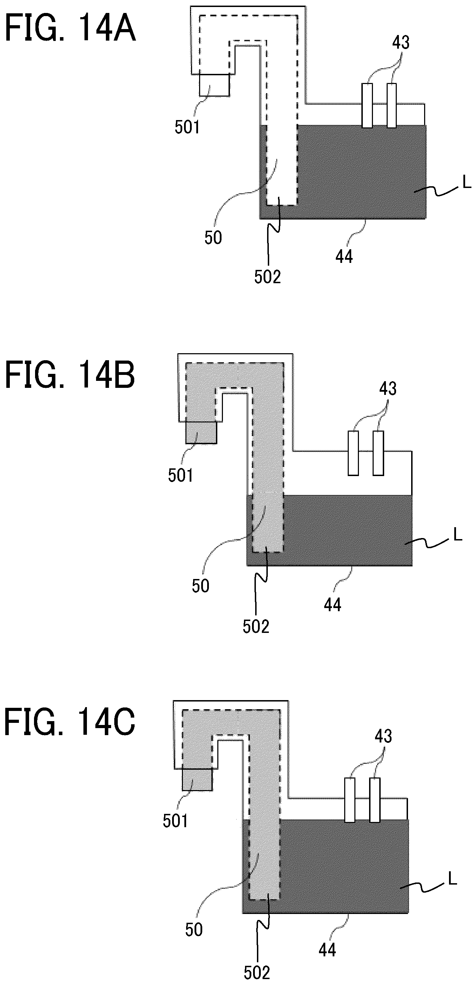

FIGS. 14A, 14B, and 14C are diagrams illustrating a change in the amount (liquid level) of the liquid stored in the first liquid storage tank 44 when the liquid supply member 50 is dry. A change in the amount (liquid level) of the liquid stored in the first liquid storage tank 44 is referred to as a "liquid level change" below.

First, as illustrated in FIG. 14A, liquid is supplied from the second liquid storage tank 47 to the first liquid storage tank 44, and the first liquid-level sensor 43 is set to detect the liquid (liquid level) in the first liquid storage tank 44. At this time, the liquid supply member 50 including the liquid immersion portion 502 is dry. The liquid level (the amount of liquid stored in the first liquid storage tank 44) at the time when the first liquid-level sensor 43 detects the liquid in the first liquid storage tank 44 is referred to as a "reference liquid level".

Then, as illustrated in FIG. 14B, the liquid is sucked up from the liquid immersion portion 502 by the capillary phenomenon, and the liquid supply member 50 is moistened with the sucked liquid. At this time, the amount (liquid level) of liquid stored in the first liquid storage tank 44 is lowered from the reference liquid level. At the stage when the liquid level is lowered, that is, at the stage when the liquid supply member 50 is moistened by sucking the liquid, the controller 100b determines the output value from the first liquid-level sensor 43 again. At this stage, when the controller 100b determines that the amount (liquid level) of liquid stored in the first liquid storage tank 44 is less than the reference liquid level, the controller 100b operates the liquid supply pump 46 to supply the liquid from the second liquid storage tank 47 to the first liquid storage tank 44 again.

In a case where an electrode sensor is used as the first liquid-level sensor 43, there is a concern that the metal used for the electrodes might be corroded due to electrolytic corrosion if the pair of electrodes is energized (applied with electricity) constantly. Further, since the voltage is always applied to the liquid stored in the first liquid storage tank 44, there is a concern that the liquid might be electrolyzed or that the electrodes might be dissolved due to adhesion of foreign matter to the surface of the electrodes by electrolysis, which might induce deterioration of the electrodes. For this reason, the controller 100b controls the timing of energization of the first liquid-level sensor 43 such that the first liquid-level sensor 43 is not energized all the time but is energized (energized ON) only when the first liquid-level sensor 43 detects the presence or absence (liquid level) of liquid stored in the first liquid storage tank 44.

A description is given below of a control process of a liquid supply operation.

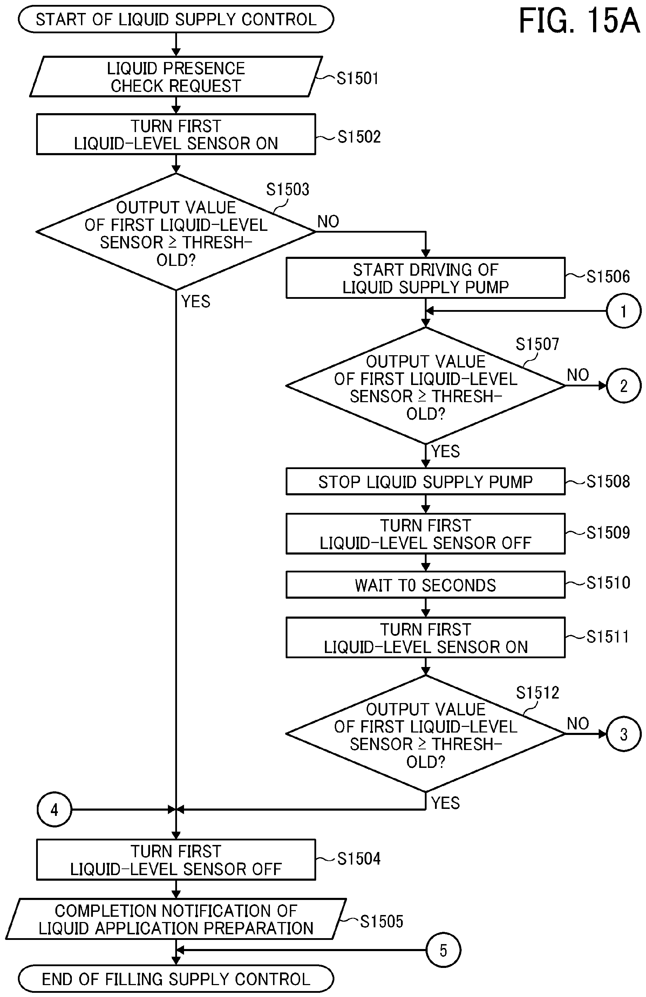

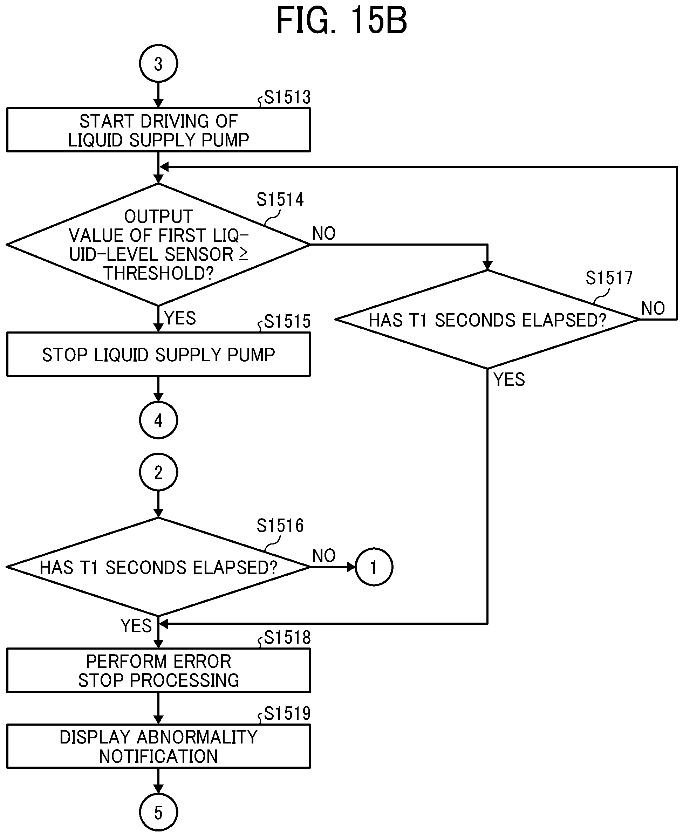

FIGS. 15A and 15B are a flowchart illustrating a control process ("liquid supply control process") of the liquid supply operation performed in the controller 100b. The liquid supply operation according to the present embodiment is executed at the time of activation of the post-processing apparatus 3 or at the time of start of the crimp binding process with liquid application (referred to as "liquid-application crimp-binding process" in the following description).

For example, when the post-processing apparatus 3 is activated, the liquid supply control process is started. When the liquid supply control process is started, in step S1501, a liquid presence check request is instructed to the controller 100b. The liquid presence check request may be instructed based on information input by the user from the operation panel 110 of one or both of the image forming apparatus 2 and the post-processing apparatus 3. In response to receipt of the liquid presence check request instructed from the image forming apparatus 2, in step S1502, the controller 100b applies a voltage to the first liquid-level sensor 43 (turns on energization).

In step S1503, the controller 100b acquires a value of an electrical signal (referred to as an "output value" in the following description) output when the first liquid-level sensor 43 detects liquid in the first liquid storage tank 44, and determines the presence or absence of the liquid (the amount of the liquid stored) in the first liquid storage tank 44. The determination of the presence of liquid (the stored liquid amount) in the first liquid storage tank 44 is performed based on whether the output value (voltage) output from the first liquid-level sensor 43 exceeds a "liquid detection threshold value" (threshold value) set in advance. For example, when the output value (voltage) from the first liquid-level sensor 43 is equal to or greater than the liquid detection threshold value (e.g., output voltage VTh1), the controller 100b determines that the amount of liquid stored in the first liquid storage tank 44 is a sufficient amount (YES in step S1503). In this case, the controller 100b stops the application of the voltage to the first liquid-level sensor 43 (turns the energization of the first liquid-level sensor 43 off) in step S1504, displays a completion notice of the preparation for liquid application on, for example, the operation panel 110 in step S1505, and ends the liquid supply control process.

On the other hand, when the output value (voltage) from the first liquid-level sensor 43 is less than the liquid detection threshold value (e.g., the output voltage VTh1) in step S1503 (NO in step S1503), in step S1506, the controller 100b operates the liquid supply pump 46 to execute the supply of the liquid from the second liquid storage tank 47 to the first liquid storage tank 44.

Subsequently, in step S1507, the controller 100b determines whether the output value (voltage) from the first liquid-level sensor 43 is equal to or greater than the "liquid detection threshold value" (threshold value) set in advance. When the output value (voltage) from the first liquid-level sensor 43 is equal to or greater than the liquid detection threshold value (e.g., the output voltage VTh1), the controller 100b determines that a sufficient amount of liquid has been supplied from the second liquid storage tank 47 into the first liquid storage tank 44 by the liquid supply pump 46 (YES in step S1507). On the other hand, when the output value (voltage) from the first liquid-level sensor 43 is less than the liquid detection threshold value (e.g., the output voltage VTh1) (NO in step S1507), in step S1516, the controller 100b determines whether an elapsed time from the start (step S1506) of the operation of the liquid supply pump 46 has exceeded the abnormality determination time (T1 seconds). When the elapsed time has not reached the abnormality determination time T1 (NO in step S1516), the controller 100b continues the supply of the liquid from the second liquid storage tank 47 to the first liquid storage tank 44 by the liquid supply pump 46 until the output value (voltage) from the first liquid-level sensor 43 becomes equal to or greater than the liquid detection threshold value (e.g., output voltage V1) (YES in step S1507).

On the other hand, when the elapsed time has reached the abnormality determination time T1 (YES in step S1516), in step S1518, the controller 100b determines that some abnormality (such as a failure of the liquid supply pump 46 and/or the first liquid-level sensor 43) has occurred in a device, and executes an error stop process of stopping the liquid supply pump 46 and/or turning off the energization of the first liquid-level sensor 43. In step S1519, the controller 100b causes the operation panel 110 to display an abnormality notification, and ends the liquid supply control process.

When the output value (voltage) from the first liquid-level sensor 43 becomes equal to or greater than the liquid detection threshold value (e.g., output voltage VTh1) in step S1507 (YES in step S1507), in step S1508, the controller 100b stops the liquid supply pump 46 and stops the supply of liquid from the second liquid storage tank 47 to the first liquid storage tank 44. In step S1509, the controller 100b stops the application of voltage to the first liquid-level sensor 43 (turns off the energization).

Then, in step S1510, the liquid supply control process is temporarily stopped until a standby time (first predetermined time T0 seconds) elapses. The standby time is set in advance as a time taken until liquid in the first liquid storage tank 44 is sucked up by, e.g., capillary phenomenon and the liquid supply member 50 turns to an executable state for liquid application (a state where the liquid is sufficiently stored in at least one of the liquid application member 501 and the liquid supply member 50).

After the first predetermined time T0 has elapsed, the controller 100b turns on the energization of the first liquid-level sensor 43 again (in step S1511), acquires an output value (voltage) that is output when the first liquid-level sensor 43 detects the liquid in the first liquid storage tank 44, and determines the presence (the stored liquid amount) of liquid in the first liquid storage tank 44 (in step S1512). At this stage, the liquid level (liquid storage amount) of the liquid in the first liquid storage tank 44 is lowered by the suction of the liquid supply member 50. However, if the output value (voltage) from the first liquid-level sensor 43 is equal to or greater than the liquid detection threshold value (e.g., the output voltage VTh1) (YES in step S1512), in step S1504, the controller 100b stops the application of the voltage to the first liquid-level sensor 43 (i.e., turns the first liquid-level sensor 43 off). In step S1505, the controller 100b displays a completion notice of the preparation for liquid application on, for example, the operation panel 110, and ends the liquid supply control process.

On the other hand, when the output value (voltage) from the first liquid-level sensor 43 is less than the liquid detection threshold value (e.g., the output voltage VTh1) in step S1512 (NO in step S1512), in step S1513, the controller 100b operates the liquid supply pump 46 to execute the supply of the liquid from the second liquid storage tank 47 to the first liquid storage tank 44.

Subsequently, the controller 100b acquires an output value (voltage) that is output when the first liquid-level sensor 43 detects liquid in the first liquid storage tank 44, and determines the presence (the stored liquid amount) of liquid in the first liquid storage tank 44 (in step S1514). Subsequently, when the output value (voltage) from the first liquid-level sensor 43 is equal to or greater than the liquid detection threshold value (e.g., the output voltage VTh1) (YES in step S1514), the controller 100b determines that a sufficient amount of liquid has been supplied into the first liquid storage tank 44. In this case, in step S1515, the controller 100b stops the liquid supply pump 46 to stop the supply of liquid from the second liquid storage tank 47 to the first liquid storage tank 44. Then, the controller 100b stops the application of the voltage to the first liquid-level sensor 43 (turns the energization of the first liquid-level sensor 43 off) in step S1504, displays a completion notice of the preparation for liquid application on, for example, the operation panel 110 in step S1505, and ends the liquid supply control process.

On the other hand, when the output value (voltage) from the first liquid-level sensor 43 is less than the liquid detection threshold value (e.g., the output voltage VTh1) (NO in step S1514), in step S1517, the controller 100b determines whether an elapsed time from the start (step S1513) of the operation of the liquid supply pump 46 has exceeded the abnormality determination time (T1 seconds). When the elapsed time has not reached the abnormality determination time T1 (NO in step S1517), the controller 100b continues the supply of the liquid from the second liquid storage tank 47 to the first liquid storage tank 44 by the liquid supply pump 46 until the output value (voltage) from the first liquid-level sensor 43 becomes equal to or greater than the liquid detection threshold value (e.g., output voltage VTh1) (YES in step S1514).

On the other hand, when the elapsed time has reached the abnormality determination time T1 (YES in step S1514), in step S1518, the controller 100b determines that some kind of abnormality has occurred in the apparatus, and executes error stopping processing of stopping the liquid supply pump 46 and/or turning off the energization of the first liquid-level sensor 43. In step S1519, the controller 100b causes the operation panel 110 to display an abnormality notification, and ends the liquid supply control process.

The "abnormality notification" may be, for example, a display of a warning on the operation panel 110 to prompt a check because there is a possibility that one or both of the liquid supply pump 46 and the first liquid-level sensor 43 are out of order.

As described above, the execution of the control process of the liquid supply operation according to the present embodiment can stably obtain a certain amount of liquid in the liquid supply member 50 and/or the liquid application member 501, which enables liquid application by the liquid application member 501. As a result, the frequency of the liquid supply operation from the second liquid storage tank 47 to the first liquid storage tank 44 can be reduced, and the efficiency of the liquid application process can be enhanced.

A description is given below of the relation between the liquid supply determination process described with reference to FIGS. 15A and 15B and the change in the amount (liquid level) of the liquid stored in the first liquid storage tank 44 described with reference to FIGS. 14A, 14B, and 14C. First, when the presence or absence of liquid in the first liquid storage tank 44 is checked in the stage preceding to the state illustrated in FIG. 14A, the controller 100b determines that the first liquid storage tank 44 in the state of "no liquid" (NO in step S1503) and drives the liquid supply pump 46 to supply liquid from the second liquid storage tank 47 to the first liquid storage tank 44 in step S1506. When the amount (liquid level) of the liquid stored in the first liquid storage tank 44 reaches the state of FIG. 14A, the output value (voltage) from the first liquid-level sensor 43 becomes equal to or greater than the liquid detection threshold value (e.g., the output voltage VTh1) (YES in step S1507). The controller 100b stops the liquid supply pump 46 in step S1508 and turns off the energization of the first liquid-level sensor 43 in step S1509.

Subsequently, when the first predetermined time T0, which is set in advance as the time taken until the liquid supply member 50 sucks up liquid as illustrated in FIG. 14B and turns to an executable state for liquid application, has elapsed, in step S1511, the controller 100b turns on the energization of the first liquid-level sensor 43 again. At this stage, a predetermined amount of liquid is sucked up by the liquid supply member 50 from the first liquid storage tank 44 to the liquid supply member 50. As a result, the amount of the liquid stored in the first liquid storage tank 44 decreases and the liquid level of the liquid in the first liquid storage tank 44 becomes lower than the reference liquid level. As a result, the output value (voltage) from the first liquid-level sensor 43 becomes less than the liquid detection threshold value (e.g., the output voltage Vth1) (NO in step S1512).

Then, the controller 100b causes the liquid supply pump 46 to operate again in step S1513 and executes supply of the liquid from the second liquid storage tank 47 to the first liquid storage tank 44 until the output value (voltage) from the first liquid-level sensor 43 becomes equal to or greater than the liquid detection threshold value (e.g., the output voltage Vth1) (YES in step S1514). When the output value (voltage) from the first liquid-level sensor 43 becomes equal to or greater than the liquid detection threshold value (e.g., the output voltage Vth1), the controller 100b stops the liquid supply pump 46 in step S1515 and turns off the energization of the first liquid-level sensor 43 in step S1504. As a result, as illustrated in FIG. 14C, the liquid in the first liquid storage tank 44 is sufficiently stored in the entirety of at least one of the liquid supply member 50 or the liquid application member 501, and the controller 100b causes the operation panel 110 to display the completion notification of the preparation for liquid application (step S1505).

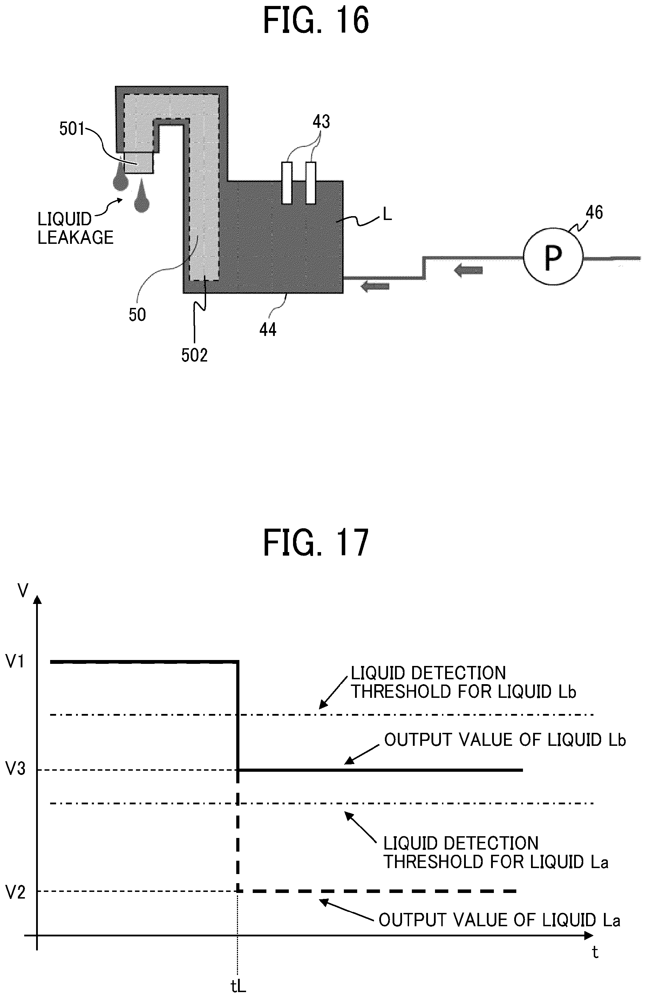

FIG. 16 is a diagram illustrating liquid leakage that might occur in the liquid applier 31 according to the present embodiment.

The liquid applier 31 according to the present embodiment supplies liquid to the second liquid storage tank 47. Accordingly, the properties (e.g., hardness, pH, chlorine content, and conductance) of the liquid vary depending on the type of the liquid supplied to the second liquid storage tank 47. In other words, when the presence or absence of liquid (the amount of liquid stored) in the first liquid storage tank 44 is determined based on the output value (voltage) of the first liquid-level sensor 43, it is assumed that a situation may arise in which it is difficult to accurately detect the presence or absence of liquid (the amount of liquid stored) in the first liquid storage tank 44 even if the determination is made with the liquid detection threshold value fixed at a specific value.

For example, it is assumed that the liquid supplied into the first liquid storage tank 44 is a liquid having extremely low conductance (e.g., ultrapure water used in the industrial field). It is further assumed that the liquid detection threshold value set on the premise of tap water is used. In such a case, even when the liquid in the first liquid storage tank 44 contacts the first liquid-level sensor 43, the output value (output value of ultrapure water) at that time may not satisfy the condition for detecting the liquid (liquid level) in the first liquid storage tank 44 in comparison with the liquid detection threshold value set on the premise of tap water. As a result, the supply of the liquid to the first liquid storage tank 44 by the liquid supply pump 46 would not be stopped at an appropriate timing, and the first liquid storage tank 44 would entirely be filled with the liquid, which may cause a failure such as a gap between the liquid supply member 50 and the first liquid storage tank 44 or liquid leakage from the tip of the liquid application member 501 as illustrated in FIG. 16.

For this reason, the liquid applier 31 according to the present embodiment varies the liquid detection threshold value used for determining the presence or absence of the liquid in the first liquid-level sensor 43 depending on the type of the liquid. FIG. 17 is a graph illustrating the relation between the change in the output value from the first liquid-level sensor 43 and the liquid detection threshold value of the first liquid-level sensor 43 in time series. In FIG. 17, the horizontal axis t represents the elapsed time when the liquid supply pump 46 is operated to supply the liquid from the second liquid storage tank 47 to the first liquid storage tank 44, and the vertical axis V represents the output value (voltage) of the first liquid-level sensor 43.

Before the pair of electrodes of the first liquid-level sensor 43 comes into contact with the liquid in the first liquid storage tank 44, the air is detected with the first liquid-level sensor 43. The output value (voltage) of the first liquid-level sensor 43 at this time is referred to as "V1." If the liquid type is "La" having a predetermined conductance, the output value (voltage) is assumed to change from "V1" to "V2" when the liquid La contacts the electrodes at the elapsed time tL. Then, in order to detect the liquid La with the first liquid-level sensor 43, the controller 100b sets the liquid detection threshold value of the first liquid-level sensor 43 between the output value V1 and the output value V2 as illustrated in FIG. 17.

The liquid detection threshold value of the first liquid-level sensor 43 is preferably set to an intermediate value between the output value V1 and the output value V2 in consideration of, for example, variations and noise in the output value V1 and the output value V2.

In addition, in the case where the liquid type is not "La" but "Lb" having a lower conductance than "La", the output value is assumed to change from "V1" to "V3" when the liquid Lb comes into contact with the electrodes. The output value V3 is assumed to be greater than the output value V2 and smaller than the output value V1. In this case, when the liquid Lb comes into contact with the electrodes at the elapsed time tL, the output value changes from "V1" to "V3" and does not reach "V2." In other words, even if the liquid detection threshold value of the first liquid-level sensor 43 (liquid detection threshold value for the liquid La) is set to an intermediate value between the output value V1 and the output value V2 as illustrated in FIG. 17, the liquid level (liquid storage amount) of the liquid Lb in the first liquid storage tank 44 is not detected by the first liquid-level sensor 43.

For this reason, in the case of the liquid Lb, the controller 100b sets the liquid detection threshold value of the first liquid-level sensor 43 to an intermediate value between the output value V1 and the output value V3, not the intermediate value between the output value V1 and the output value V2 as illustrated in FIG. 17. In other words, the liquid detection threshold value of the first liquid-level sensor 43 is changed depending on the type of the liquid such that the first liquid-level sensor 43 can accurately detect the liquid (liquid level) in the first liquid storage tank 44.

A description is given below of a binding process selection with a freezing detection process according to an embodiment of the present disclosure.

First, a binding process selection is described that can be executed in a medium processing control program according to an embodiment of the present disclosure. The control process described below is implemented by software executable in the controller 100b using the hardware resources of the controller 100b described above.

A first example of a binding process selection by freezing detection is described below.

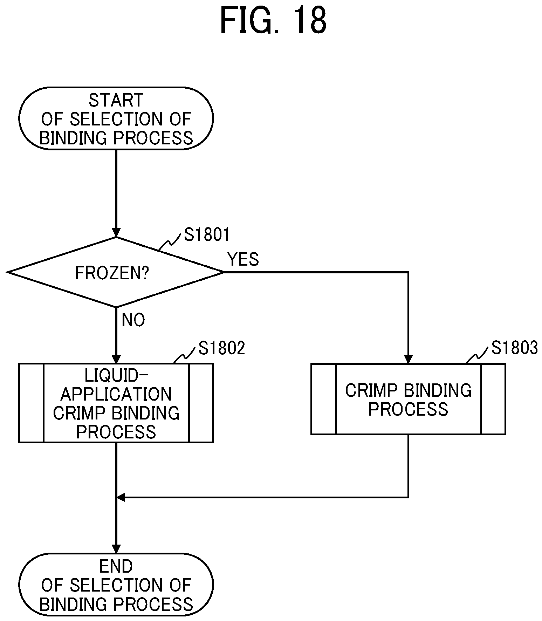

FIG. 18 illustrates a procedure of the binding process selection executed in the controller 100b when freezing information indicating a frozen state of liquid L used for liquid application is notified by a freezing detector, details of which will be described later, included in the post-processing apparatus 3. The flowchart of FIG. 18 illustrates a process of selecting the type of binding process based on the freezing information of the liquid L.

When the user performs a predetermined operation on the operation panel 110 and the image forming apparatus 2 notifies the post-processing apparatus 3 of a binding process instruction including a predetermined binding process that can be executed, in step S1801, the controller 100b determines whether the liquid L is frozen based on the detection result by the freezing detector (freezing determination process). In other words, the freezing detector detects whether the liquid L is frozen, and notifies the controller 100b of freezing information including the detected contents. The controller 100b determines whether the liquid L is frozen based on the contents included in the freezing information notified from the freezing detector.

When the freezing information notified from the freezing detector includes information indicating "not frozen" and the liquid L is determined to be in the "non-frozen state" in step S1801 (NO in step S1801), in step S1802, the controller 100b selects execution of the liquid-application crimp-binding process as first processing. The liquid-application crimp-binding process is as described above, and thus the description thereof is omitted.

On the other hand, when the freezing information notified from the freezing detector includes information indicating "frozen" and it is determined that the liquid L is in the "frozen state" in step S1801 (YES in step S1801), in step S1803, the controller 100b selects execution of only the crimp binding process without liquid application as second processing. The binding process selection according to the present embodiment can avoid a failure that might occur when liquid application is performed in a case where the liquid L is frozen, and a failure such as a decrease in the crimping strength in the liquid-application crimp-binding process, and can execute an appropriate crimp binding process.

A second example of the binding process selection by freezing detection is described below.

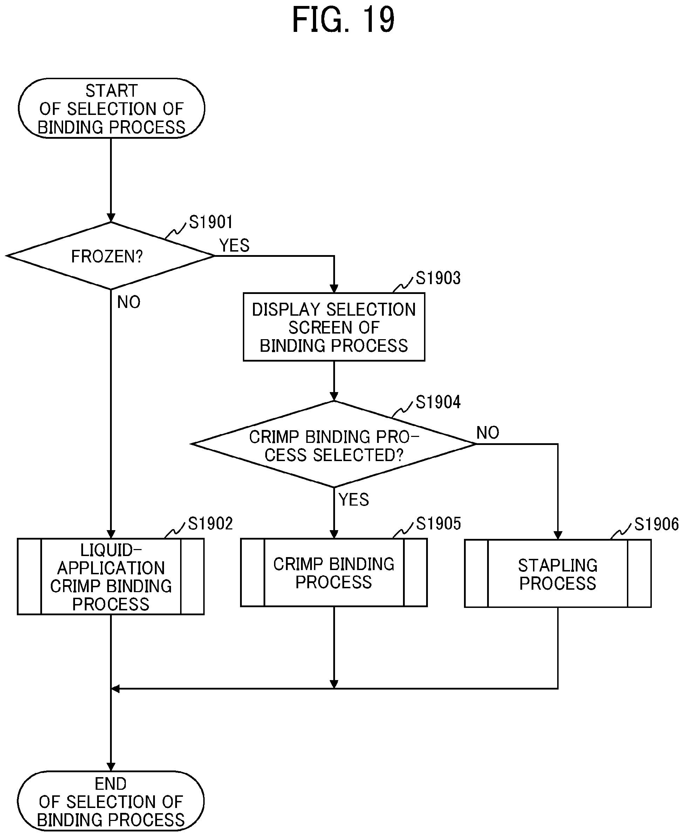

FIG. 19 illustrates another example of the procedure of the binding process selection executed in the controller 100b when freezing information indicating a frozen state of liquid L used for liquid application is notified by the freezing detector, details of which will be described later, included in the post-processing apparatus 3. The flowchart of FIG. 19 illustrates another example of the process of selecting the type of binding process based on the freezing information of the liquid L.

When the user performs a predetermined operation on the operation panel 110 and the image forming apparatus 2 notifies the post-processing apparatus 3 of a binding process instruction including a predetermined binding process that can be executed, in step S1901, the controller 100b determines whether the liquid L is frozen based on the detection result by the freezing detector. In other words, the freezing detector detects whether the liquid L is frozen, and notifies the controller 100b of freezing information including the detected contents. The controller 100b determines whether the liquid L is frozen based on the contents included in the freezing information notified from the freezing detector.

When the freezing information notified from the freezing detector includes information indicating "not frozen" and the liquid L is determined to be in the "non-frozen state" in step S1901 (NO in step S1901), in step S1902, the controller 100b selects execution of the liquid-application crimp-binding process as first processing.

On the other hand, when the freezing information notified from the freezing detector includes the information indicating "frozen" and the liquid L is determined to be in the "frozen state" in step S1901 (YES in step S1901), in step S1903, the controller 100b displays a selection screen for selecting the "crimp binding process" or the "stapling process" as the binding process on the operation panel 110 as an input operation device providing an input interface. Subsequently, when the user selects execution of the "crimp binding process" via the displayed operation screen (YES in step S1904), in step S1905, the controller 100b selects execution of only the crimp binding process without liquid application.

When the user selects execution of the "staple binding process" in step S1904 (NO in step S1904), in step S1906, the controller 100b selects the execution of only the staple binding process as third processing. Thus, even in a situation where the liquid-application crimp-binding process cannot be used due to freezing of the liquid L, the user can select an optimal binding process.

A third example of the binding process selection by freezing detection is described below.

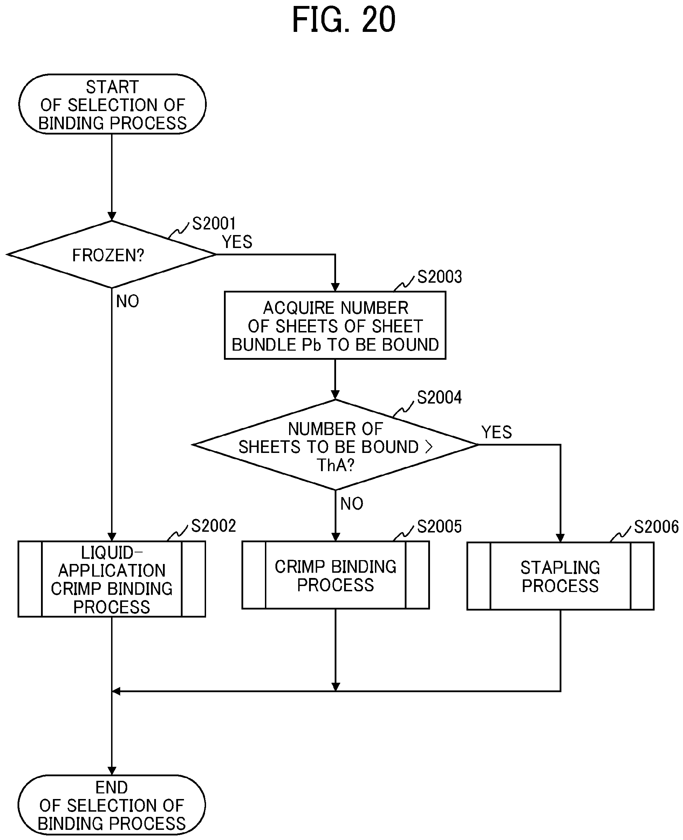

FIG. 20 illustrates another example of the procedure of the binding process selection executed in the controller 100b when freezing information indicating a frozen state of liquid L used for liquid application is notified by the freezing detector, details of which will be described later, included in the post-processing apparatus 3. The flowchart of FIG. 20 illustrates another example of the process of selecting the type of binding process based on the freezing information of the liquid L. The first example and the second example of the binding process selection described above is different in that the number of sheets P constituting the sheet bundle Pb is included as a determination condition of the binding process selection.

When the user performs a predetermined operation on the operation panel 110 and the image forming apparatus 2 notifies the post-processing apparatus 3 of a binding process instruction including a predetermined binding process that can be executed, in step S2001, the controller 100b determines whether the liquid L is frozen based on the detection result by the freezing detector. In other words, the freezing detector detects whether the liquid L is frozen, and notifies the controller 100b of freezing information including the detected contents. The controller 100b determines whether the liquid L is frozen based on the contents included in the freezing information notified from the freezing detector.

When the freezing information notified from the freezing detector includes information indicating "not frozen" and the liquid L is determined to be in the "non-frozen state" in step S2001 (NO in step S2001), in step S2002, the controller 100b selects execution of the liquid-application crimp-binding process as first processing.

On the other hand, when the freezing information notified from the freezing detector includes the information indicating "frozen" and the liquid L is determined to be in the "frozen state" in step S2001 (YES in step S2001), in step S2003, the controller 100b acquires the number of sheets P (the number of sheets to be bound) constituting the sheet bundle Pb included in the binding process instruction. Subsequently, in step S2004, the controller 100b determines whether the acquired number of sheets to be bound exceeds a predetermined number-of-sheets threshold value ThA. The "number-of-sheets threshold value ThA" is a parameter indicating the upper limit number of sheets P constituting the sheet bundle Pb that can be bound only by the crimp binding process without liquid application. In other words, when the number of sheets P constituting the sheet bundle Pb is greater than the number-of-sheets threshold value ThA, it corresponds to a case where the execution of only the crimp binding process without liquid application is not available or it is difficult to maintain the binding strength of the sheet bundle Pb. The number-of-sheets threshold value ThA may be automatically set according to, e.g., the type and thickness of the sheet P, or may be set to any value selected by the user.

When the controller 100b determines that the number of sheets of the sheet bundle Pb to be bound does not exceed the number-of-sheets threshold value ThA in step S2004 (NO in step S2004), in step S2005, the controller 100b selects execution of only the crimp binding process without liquid application.

On the other hand, when the controller 100b determines that the number of sheets of the sheet bundle Pb exceeds the number-of-sheets threshold value ThA in step S2004 (YES in step S2004), in step S2006, the controller 100b selects execution of only the staple binding process. Thus, even in a situation where the liquid-application crimp-binding process cannot be used due to freezing of the liquid L, the user can select an optimal binding process.

A fourth example of the binding process selection by freezing detection is described below.

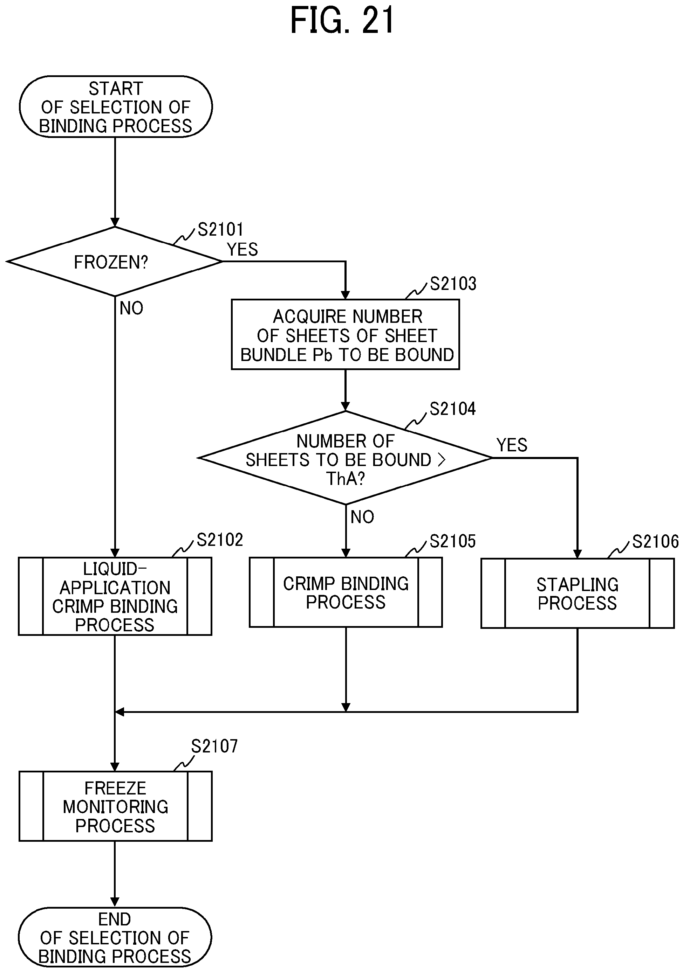

FIG. 21 illustrates another example of the procedure of the binding process selection executed in the controller 100b when freezing information indicating a frozen state of liquid L used for liquid application is notified by the freezing detector, which will be described later, included in the post-processing apparatus 3. The flowchart illustrated in FIG. 21 is characterized in that a freeze monitoring process is added after the type of binding process is selected based on, e.g., the freezing information of the liquid L.

When the user performs a predetermined operation on the operation panel 110 and the image forming apparatus 2 notifies the post-processing apparatus 3 of a binding process instruction including a predetermined binding process that can be executed, the processing from step S2101 to step S2106 is the same as that of the third example of the binding process selection described above. Thus, the detailed description thereof may be omitted, and the contents unique to this example are mainly described believe.

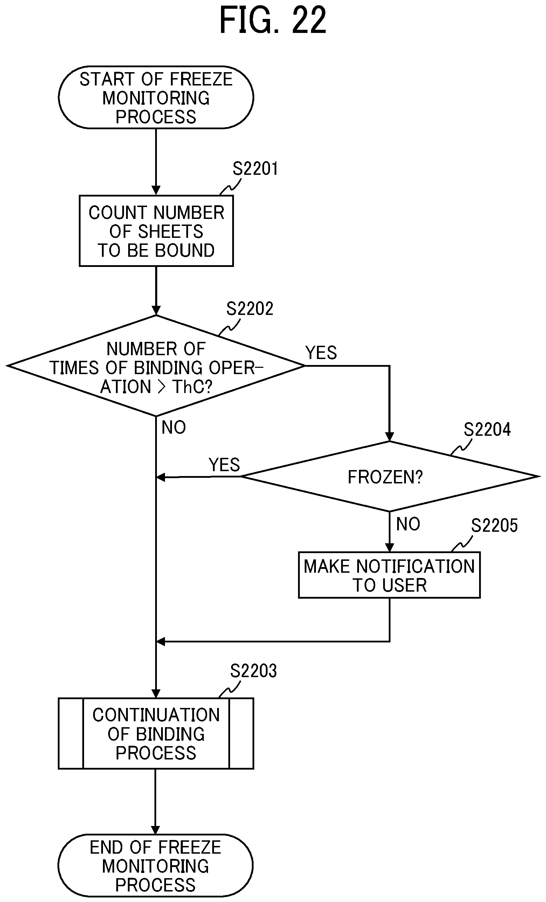

The controller 100b selects any one of a step (step S2102) of selecting execution of only the liquid-application crimp-binding process, a step (step S2104) of selecting execution of only the crimp binding process without liquid application, and a step (step S2105) of selecting execution of only the stapling process, based on the freezing information from the freezing detector and the number of sheets to be bound included in the binding process instruction, and then executes the freeze monitoring process in step S2107. The freeze monitoring process corresponds to a process of checking the frozen state of the liquid L at a preset timing while the various types of binding operations are continuously executed in the post-processing apparatus 3. Details of the freeze monitoring process will be described with reference to a flowchart of FIG. 22.

The freeze monitoring process is described below.

FIG. 22 is a flowchart illustrating a procedure of the freeze monitoring process. The controller 100b includes a counter, and in step S2201 counts the number of times of execution of binding processes (the number of times of binding operations) while executing the various types of binding processes selected based on the binding process instruction notified from the image forming apparatus 2. In step S2202, the controller 100b determines whether the counted number of times of execution of binding processes exceeds the binding count threshold value ThC. The "binding count threshold value ThC" is a parameter for determining the number of binding operations, which serves as a timing for monitoring the frozen state of the liquid L, when the binding processes are performed on a plurality of sheet bundles Pb, and can be set to any value selected by the user. A user who wants to switch to the liquid-application crimp-binding process as soon as the liquid L becomes the non-frozen state can set the binding count threshold value ThC to be small. Thus, the user can more quickly confirm the non-frozen state of the liquid L and switch to the liquid-application crimp-binding process.

When the controller 100b determines that the number of binding operations is not greater than the binding count threshold value ThC (NO in step S2202), in step S2203, the controller 100b continues to perform the remaining binding processes in the selected binding processes of the respective types. On the other hand, when the controller 100b determines that the number of binding operations is greater than the binding count threshold value ThC (YES in step S2202), in step S2204, the controller 100b detects the frozen state of the liquid L by the freezing detector and determines whether the liquid L remains in the frozen state or has changed to the non-frozen state.

When the controller 100b determines that the liquid L is in the frozen state (YES in step S2204), in step S2203, the controller 100b continues to perform the remaining binding processes in the selected binding processes of the respective types. On the other hand, when the controller 100b determines that the liquid L is in the non-frozen state (NO in step S2204), in step S2205, the controller 100b notifies the operation panel 110 that the liquid-application crimp-binding process can be used, and continues the execution of the remaining binding processes in the selected binding processes of the respective types. According to the present embodiment, the user can selectively switch to the liquid-application crimp-binding process as soon as the liquid L changes from the frozen state to the non-frozen state.

A first example of a freezing detection process is described below.

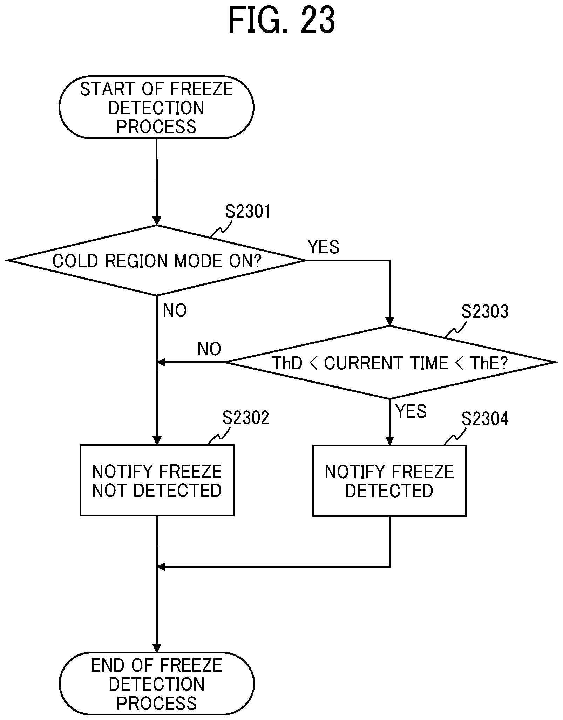

FIG. 23 illustrates a procedure of the freezing detection process executed by the controller 100b without using a freezing detector, which will be described later, included in the post-processing apparatus 3. The flowchart illustrated in FIG. 23 is an example of a freezing determination process executed when the type of binding process is selected in a cold region.

When the user performs a predetermined operation on the operation panel 110, the image forming apparatus 2 notifies the post-processing apparatus 3 of a binding process instruction including a predetermined binding process that can be executed, and a "process of determining whether the liquid L is frozen" (freezing determination process) is executed, in step S2301, the controller 100b determines whether the setting of a cold region mode is ON. The cold region mode is a mode that the user can selectively set by switching ON and OFF. When the user uses the post-processing apparatus 3 in an environment in which freezing of the liquid L is assumed, the cold region mode can be set in advance. In the case where the cold region mode is set to ON, it is determined that the liquid L is in the frozen state when the freezing detection process is executed within a time designated in advance, which is referred to "within a designated time" below. In other words, when the freezing detection process is executed within the designated time, the controller 100b always determines that the liquid L is in the frozen state, and does not determine that the liquid L is in the non-frozen state.

When the cold region mode is not set to ON (NO in step S2301), in step S2302, the freezing detector described later notifies the controller 100b of the freezing information including "not frozen." Accordingly, the controller 100b determines that the liquid L is in the "non-frozen state."

On the other hand, when the cold region mode is set to ON (YES in step S2301), in step S2303, the controller 100b determines whether the current time information held by the controller 100b is between the time start threshold value ThD and the time end threshold value ThE. For example, the time start threshold value ThD is set to 11:00 (23:00) in the evening, and the time end threshold value ThE is set to 9:00 in the morning. The time from the time start threshold value ThD to the time end threshold value ThE corresponds to the designated time. The time start threshold value ThD and the time end threshold value ThE are values that can be set by the user in accordance with the use environment of the post-processing apparatus 3.

It is assumed that the current time on execution of step S2303 is 6 o'clock in the morning. In this case, in step S2303, the current time is later than the time start threshold value ThD (11:00 in the evening) and earlier than the time end threshold value ThE (9:00 in the morning), that is, within the designated time (YES in step S2303). Then, in step S2304, the freezing detector notifies the controller 100b of the freezing information including "frozen." Thus, the controller 100b determines that the liquid L is in the "frozen state."

On the other hand, in light of the above example, when the current time on execution of step S2303 is not between 23:00 in the evening and 9:00 in the morning (NO in step S2303), in step S2302, the freezing detector notifies the controller 100b of freezing information including "not frozen." Accordingly, the controller 100b determines that the liquid L is in the "non-frozen state."

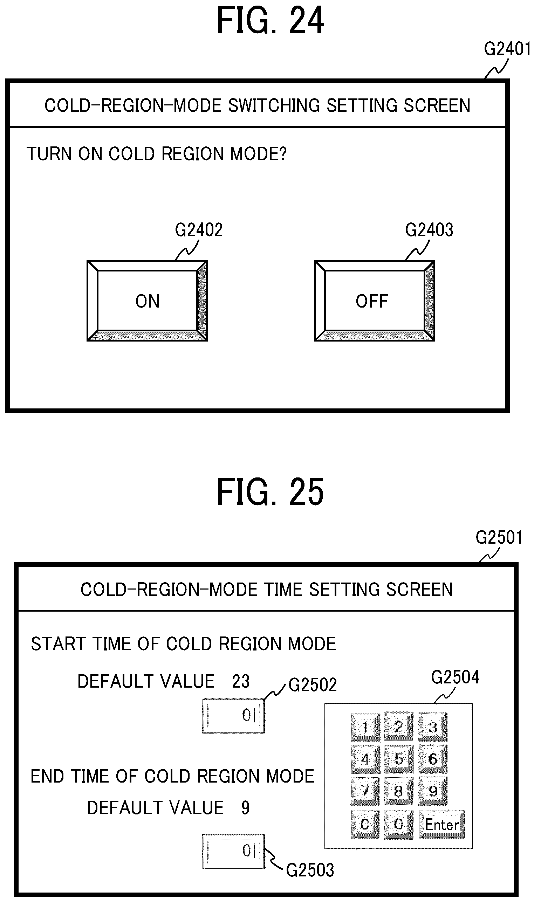

FIG. 24 illustrates an example of a setting screen for switching ON and OFF of the cold region mode, which is referred to as "cold-region-mode switching setting screen" in the following description. At the time of activation of the post-processing apparatus 3 or at a timing selected by the user, the controller 100b causes the operation panel 110 to display a cold-region-mode switching setting screen G2401 illustrated in FIG. 24. The user sets the cold region mode in advance via the cold-region-mode switching setting screen G2401 before execution of step S2301.

The cold-region-mode switching setting screen G2401 includes a first-mode selection button G2402 and a second-mode selection button G2403. The user can set the cold region mode to ON by selecting the first-mode selection button G2402. The user can set the cold region mode to OFF by selecting the second-mode selection button G2403. Information (mode selection information) set on the cold-region-mode switching setting screen G2401 is stored in a storage area of the controller 100b. Accordingly, in the process of selecting the cold region mode in step S2301, the determination is made by reading the information stored in the storage area of the controller 100b.

FIG. 25 illustrates an example of a cold-region-mode time setting screen. When a first selection button G2301 is selected on a cold-region-mode switching setting screen G2302 to turn "ON" the cold region mode, a cold-region-mode time setting screen G2501 is displayed on the operation panel 110. The user can set the time of the cold region mode on the cold-region-mode time setting screen G2501. When a third selection button G2502 is selected, the start time of the cold region mode can be set. After the third selection button G2502 is selected, any start time is set by a value input button G2504. When a fourth selection button G2503 is selected, the end time of the cold region mode can be set. After the fourth selection button G2503 is selected, any end time is set by the value input button G2504. The setting information of the start time and the end time of the cold region mode is stored in the storage area of the controller 100b.

In the determination process of the current time information in step S2303, the start time input in the third selection button G2502 described above is the time start threshold value ThD. The end time input by the fourth selection button G2503 described above is the time end threshold value ThE.

A second example of the freezing detection process is described below.

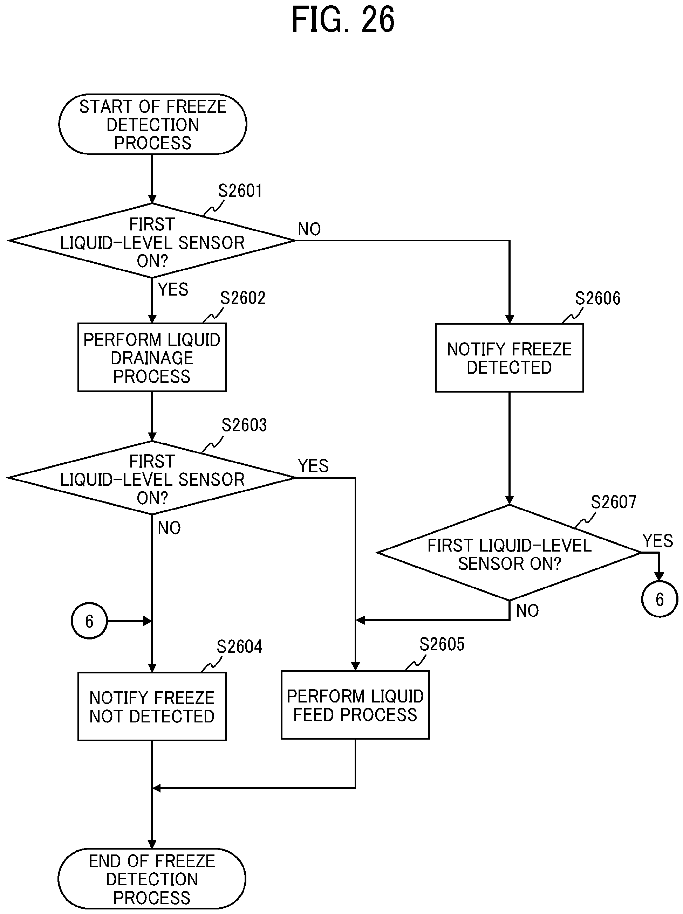

FIG. 26 illustrates another example of the procedure of the freezing detection process executed in the controller 100b when the freezing information indicating the frozen state of the liquid L used for liquid application is notified by the first liquid-level sensor 43 as the freezing detector included in the post-processing apparatus 3. The flowchart illustrated in FIG. 26 is an example of a freezing determination process for determining the frozen state of the liquid L by determining a change in the amount of liquid in the first liquid storage tank 44 by the first liquid-level sensor 43 as the freezing detector.

When the user performs a predetermined operation on the operation panel 110, the image forming apparatus 2 notifies the post-processing apparatus 3 of a binding process instruction including a predetermined binding process that can be executed. When a "process of detecting whether the liquid L is frozen" (freezing determination process) is executed, in step S2601, the presence or absence of the liquid L is determined by the first liquid-level sensor 43 disposed in the first liquid storage tank 44. The presence or absence of the liquid L is determined by whether the liquid L is detected by the first liquid-level sensor 43 (whether the first liquid-level sensor 43 is in an ON state or an OFF state).

When the liquid L is detected by the first liquid-level sensor 43 in step S2601 (YES in step S2601), in step S2602, the controller 100b performs a liquid discharge process of feeding the liquid stored in the first liquid storage tank 44 to the second liquid storage tank 47 by the liquid supply pump 46. After the liquid discharge process of step S2602, in step S2603, the controller 100b determines again the presence or absence of the liquid L by the first liquid-level sensor 43. This determination is for checking whether the detection result by the first liquid-level sensor 43 has changed from "liquid included" to "no liquid" (the first liquid-level sensor 43 is changed from the ON state to the OFF state) by performing the liquid discharge process. When the first liquid-level sensor 43 determines that there is no liquid (NO in step S2603), it is assumed that the amount of the liquid L stored in the first liquid storage tank 44 has changed, that is, the liquid L is not frozen. Then, in step S2604, the first liquid-level sensor 43 as the freezing detector notifies the controller 100b of the freezing information including "not frozen."

On the other hand, when it is determined that the liquid is present by the first liquid-level sensor 43 in step S2603 (YES in step S2603), it is assumed that the amount of the liquid L stored in the first liquid storage tank 44 has not changed even though the liquid discharge process has been performed, that is, the liquid L is frozen. Then, in step S2605, the first liquid-level sensor 43 as the freezing detector notifies the controller 100b of the freezing information including "frozen."

In addition, in step S2601, when the liquid L is not detected by the first liquid-level sensor 43 (NO in step S2601), in step S2606, the controller 100b performs the liquid supply process of feeding the liquid stored in the second liquid storage tank 47 to the first liquid storage tank 44 by the liquid supply pump 46. After the liquid supply process of step S2606, in step S2607, the controller 100b determines again the presence or absence of the liquid L by the first liquid-level sensor 43. This determination is for checking whether the detection result by the first liquid-level sensor 43 has changed from "no liquid" to "liquid included" (the first liquid-level sensor 43 has changed from the OFF state to the ON state) by performing the liquid supply process. When the first liquid-level sensor 43 determines that the liquid is present in step S2607 (YES in step S2607), it is assumed that the amount of the liquid L stored in the first liquid storage tank 44 has changed, that is, the liquid L is not frozen. Then, in step S2604, the first liquid-level sensor 43 as the freezing detector notifies the controller 100b of the freezing information including "not frozen."

On the other hand, when the first liquid-level sensor 43 determines that there is no liquid in step S2607 (NO in step S2607), it is assumed that the amount of the liquid L stored in the first liquid storage tank 44 has not changed even though the liquid supply process has been performed, that is, the liquid L is frozen. Then, in step S2605, the first liquid-level sensor 43 as the freezing detector notifies the controller 100b of the freezing information including "frozen."

A third example of the freezing detection process is described below.

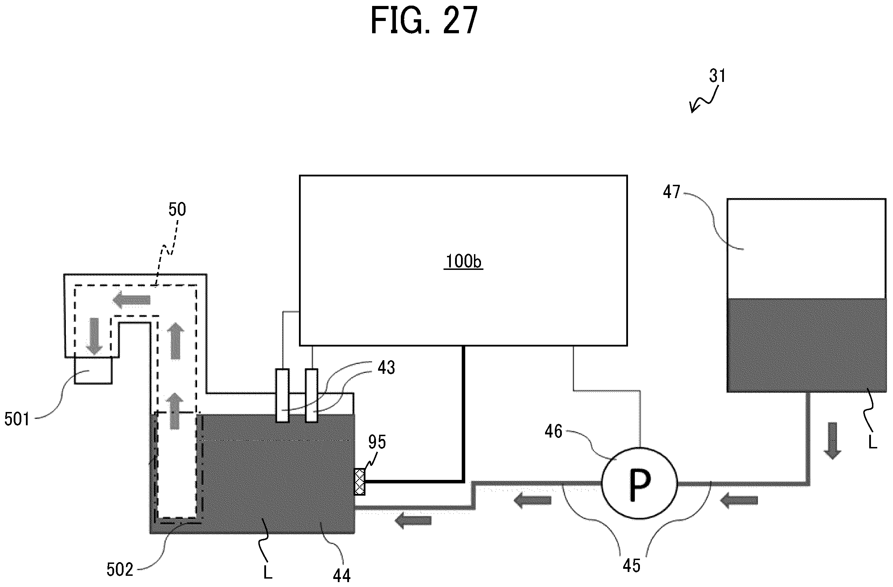

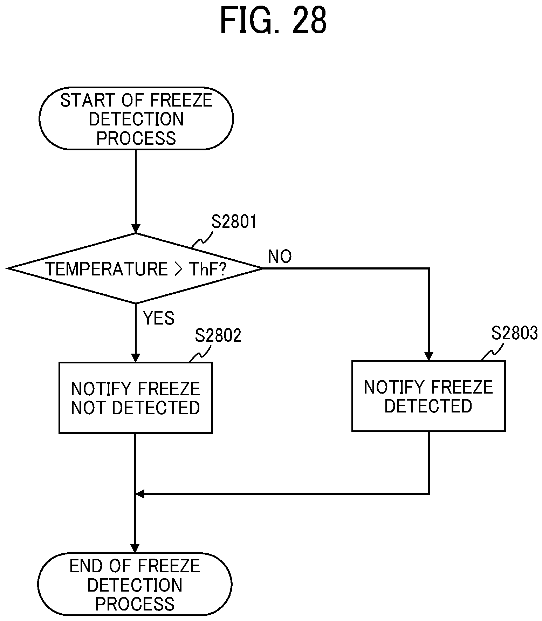

FIG. 28 illustrates another example of the procedure of the freezing detection process executed in the controller 100b when freezing information indicating the frozen state of the liquid L used for liquid application is notified by a thermistor 95 as a freezing detector included in the post-processing apparatus 3. FIG. 27 is a diagram illustrating the thermistor 95 as a freezing detector.

As illustrated in FIG. 27, the thermistor 95 is disposed in the first liquid storage tank 44. The thermistor 95 is connected to the controller 100b, and is configured such that a change in the resistance value of the thermistor 95 is input to the controller 100b. The controller 100b converts the resistance value of the thermistor 95 into temperature information, and executes a freezing detection process using the temperature information as a detected temperature. Although FIG. 27 illustrates an example in which the thermistor 95 is disposed on a side surface of the first liquid storage tank 44, the location of the thermistor 95 is not limited to the side surface of the first liquid storage tank 44. For example, the thermistor 95 may be disposed inside the first liquid storage tank 44, the second liquid storage tank 47, the liquid supply passage 45, or an apparatus housing of the post-processing apparatus 3 so that the ambient temperature can be measured.

The flowchart illustrated in FIG. 28 is an example of a freezing determination process for determining the frozen state of the liquid L by determining whether the temperature detected by the thermistor 95 as the freezing detector exceeds a predetermined threshold value. As in the procedure of the freezing detection process described above, when the freezing detection process is started, in step S2801, the controller 100b determines whether the temperature detected by the thermistor 95 is higher than a temperature threshold value ThF.

The temperature threshold value ThF is a threshold value for determining whether the liquid L is in a frozen state or a non-frozen state, and is a value set according to the attachment position of the thermistor 95. When the temperature detected by the thermistor 95 is higher than the temperature threshold value ThF, in step S2802, the thermistor 95 determines that the liquid L is at a temperature at which the liquid L is not frozen, and notifies the controller 100b of freezing information including "not frozen." On the other hand, when the temperature detected by the thermistor 95 is lower than the temperature threshold value ThF, in step S2803, the thermistor 95 determines that the liquid L is at a freezing temperature, and notify he controller 100b of freezing information including "frozen.".

A fourth example of the freezing detection process is described below.

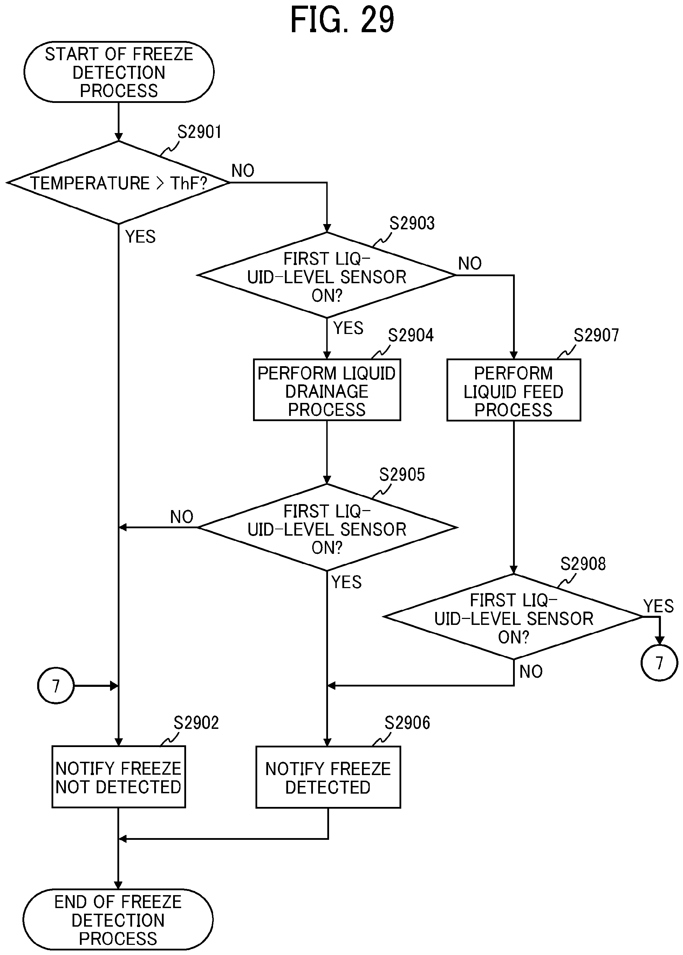

FIG. 29 illustrates another example of the procedure of the freezing detection process executed in the controller 100b when the freezing information indicating the frozen state of the liquid L used for liquid application is notified by the thermistor 95 and the first liquid-level sensor 43 as freezing detectors included in the post-processing apparatus 3. The flowchart illustrated in FIG. 29 is an example of a freezing determination process for determining the frozen state of the liquid L by determining whether the temperature detected by the thermistor 95 exceeds a predetermined threshold value, and determining a change in the amount of liquid in the first liquid storage tank 44 in the first liquid-level sensor 43.

As in the procedure of the freezing detection process described above, when the freezing detection process is started, in step S2901, the controller 100b determines whether the temperature detected by the thermistor 95 is higher than a temperature threshold value ThF.

The temperature threshold value ThF is a threshold value for determining whether the liquid L is in a frozen state or a non-frozen state, and is a value set according to the attachment position of the thermistor 95. When the temperature detected by the thermistor 95 is higher than the temperature threshold value ThF (YES in step S2901), in step S2902, the thermistor 95 determines that the liquid L is at a temperature at which the liquid L is not frozen, and notifies the controller 100b of freezing information including "not frozen".

On the other hand, when the temperature detected by the thermistor 95 is lower than the temperature threshold value ThF (NO in step S2901), the detected temperature is a temperature at which the liquid L is assumed to be frozen. Therefore, the liquid L may be frozen. Then, in step S2903, the controller 100b determines the presence or absence of the liquid L by the first liquid-level sensor 43 disposed in the first liquid storage tank 44 in order to determine whether the liquid L has actually reached a frozen state although the detected temperature is a temperature at which the liquid L is assumed to be frozen. When the liquid L is detected by the first liquid-level sensor 43 (YES in step S2903), in step S2904, the liquid discharge process described above is executed. After the liquid discharge process of step S2904, in step S2905, the controller 100b determines again the presence or absence of the liquid L by the first liquid-level sensor 43. This determination is for checking whether the detection result by the first liquid-level sensor 43 has changed from "liquid included" to "no liquid" (the first liquid-level sensor 43 is changed from the ON state to the OFF state) by performing the liquid discharge process. When the first liquid-level sensor 43 determines that there is no liquid (NO in step S2905), it is assumed that the amount of the liquid L stored in the first liquid storage tank 44 has changed, that is, the liquid L is not frozen. Then, in step S2902, the first liquid-level sensor 43 as the freezing detector notifies the controller 100b of the freezing information including "not frozen."

On the other hand, when it is determined that the liquid is present by the first liquid-level sensor 43 in step S2905 (YES in step S2905), it is assumed that the amount of the liquid L stored in the first liquid storage tank 44 has not changed even though the liquid discharge process has been performed, that is, the liquid L is frozen. Then, in step S2906, the first liquid-level sensor 43 as the freezing detector notifies the controller 100b of the freezing information including "frozen."

When the liquid L is not detected by the first liquid-level sensor 43 in step S2903 (NO in step S2903), in step S2907, the controller 100b performs the liquid supply process described above on the first liquid storage tank 44. After the liquid supply process of step S2907, in step S2908, the controller 100b determines again whether the liquid L is present in the first liquid storage tank 44 by the first liquid-level sensor 43. This determination is for checking whether the detection result by the first liquid-level sensor 43 has changed from "no liquid" to "liquid included" (the first liquid-level sensor 43 has changed from the OFF state to the ON state) by performing the liquid supply process. When the first liquid-level sensor 43 determines that the liquid is present in step S2908 (YES in step S2908), it is assumed that the amount of the liquid L stored in the first liquid storage tank 44 has changed, that is, the liquid L is not frozen. Then, in step S2902, the first liquid-level sensor 43 as the freezing detector notifies the controller 100b of the freezing information including "not frozen."

On the other hand, when the first liquid-level sensor 43 determines that there is no liquid in step S2908 (NO in step S2908), it is assumed that the amount of the liquid L stored in the first liquid storage tank 44 has not changed even though the liquid supply process has been performed, that is, the liquid L is frozen. Then, in step S2906, the first liquid-level sensor 43 as the freezing detector notifies the controller 100b of the freezing information including "frozen."

According to the present embodiment, even in a freezing temperature environment in which the temperature is lower than the temperature threshold value ThF, the frozen state of the liquid can be checked with higher accuracy by confirming whether the liquid can be supplied and discharged in a state where the liquid starts to freeze or is substantially thawed.

A fifth example of the freezing detection process is described below.

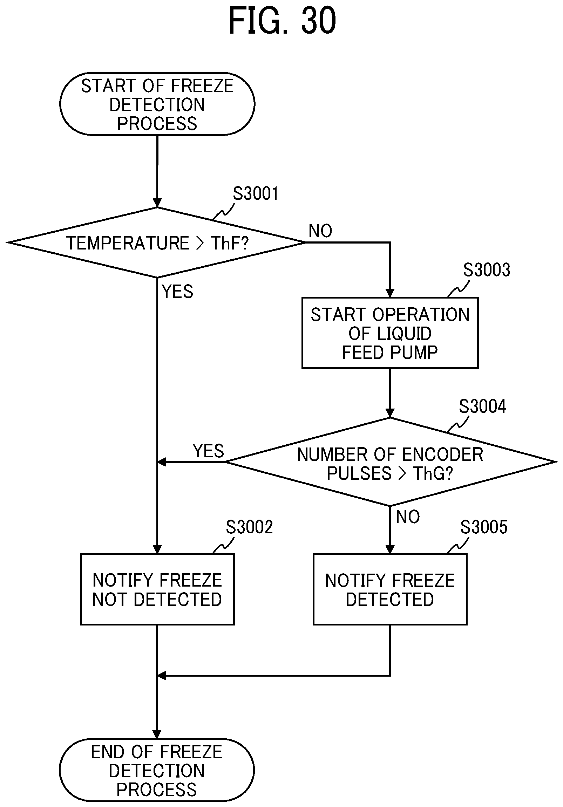

FIG. 30 illustrates another example of the procedure of the freezing detection process executed in the controller 100b when freezing information indicating the frozen state of the liquid L used for liquid application is notified by the thermistor 95 and the liquid supply pump 46 as freezing detectors included in the post-processing apparatus 3. The flowchart illustrated in FIG. 30 is an example of a freezing determination process for determining the frozen state of the liquid L by determining whether the temperature detected by the thermistor 95 exceeds a predetermined threshold value and determining whether the operation amount (number of pulses) of the liquid supply pump 46 exceeds a predetermined threshold value.

As a premise of the present embodiment, a motor having an encoder function (e.g., a stepper motor with an encoder) is used as the liquid supply pump 46. Accordingly, when the liquid supply pump 46 is operated to perform the operation of feeding the liquid L from the second liquid storage tank 47 to the first liquid storage tank 44, the feeding amount of the liquid L can be measured with an encoder signal from the motor having the encoder function. The amount of the liquid L to be fed also has a correlation with the amount of operation of the liquid supply pump 46 (e.g., the number of pulses of the stepper motor). Therefore, when the encoder signal from the motor and the number of pulse is continuously measured, it is possible to indirectly determine whether the liquid L is currently in a frozen state or in a non-frozen state.

As in the procedure of the freezing detection process described above, when the freezing detection process is started, in step S3001, the controller 100b determines whether the temperature detected by the thermistor 95 is higher than a temperature threshold value ThF.

The temperature threshold value ThF is a threshold value for determining whether the liquid L is in a frozen state or a non-frozen state, and is a value set according to the attachment position of the thermistor 95. When the temperature detected by the thermistor 95 is higher than the temperature threshold value ThF (YES in S3001), in step S3002, the thermistor 95 determines that the liquid L is at a temperature at which the liquid L is not frozen, and notifies the controller 100b of freezing information including "not frozen."

On the other hand, when the temperature detected by the thermistor 95 is lower than the temperature threshold value ThF (NO in step S3001), the detected temperature is a temperature at which the liquid L is assumed to be frozen. Therefore, the liquid L may be frozen. Then, in step S3003, the controller 100b causes the liquid supply pump 46 to operate in order to determine whether the liquid L has actually reached a frozen state although the detected temperature is a temperature at which the liquid L is assumed to be frozen. In step S3004, the controller 100b determines whether the number of pulses per unit time of the stepper motor that operates the liquid supply pump 46 is greater than a pulse threshold value ThG. The pulse threshold value ThG is a value set in accordance with the load when the liquid supply pump 46 normally feeds the liquid L. When the liquid supply pump 46 is normally feeding the liquid L, the controller 100b detects a number of pulses greater than the pulse threshold value ThG as the number of pulses per unit time of the stepper motor. However, when the load applied to the liquid supply pump 46 for feeding the liquid L increases due to the liquid L being frozen or nearly frozen, the controller 100b detects a number of pulses smaller than the pulse threshold value ThG as the number of pulses per unit time of the stepper motor.

When the number of pulses per unit time of the stepper motor is greater than the pulse threshold value ThG in step S3004 (YES in step S3004), it is determined that the liquid L is in a state in which the liquid L can be normally fed by the liquid supply pump 46, that is, in a non-frozen state, although the liquid L is at a temperature at which the liquid L is assumed to be frozen. Then, in step S3002, the stepper motor notifies the controller 100b of freezing information including "not frozen."

On the other hand, when the number of pulses per unit time of the stepper motor is smaller than the pulse threshold value ThG (NO in step S3004), the liquid L is at a temperature at which the liquid L is assumed to be frozen, and the load of the liquid supply pump 46 is large. Therefore, it is determined that the liquid L is in a frozen state. Then, in step S3005, the stepper motor notifies the controller 100b of freezing information including "frozen. "

A description is given below of a correlation between the number of operation pulses of the liquid supply pump 46 and the frozen state of the liquid L.

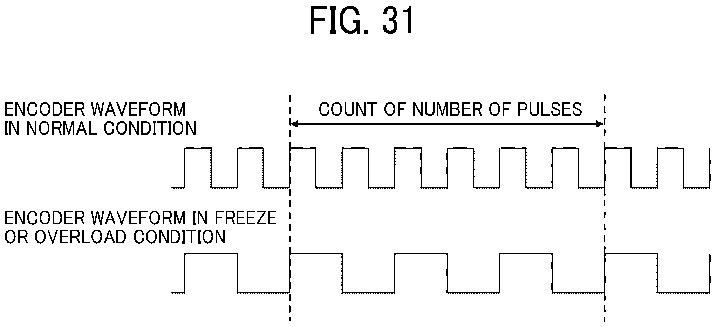

FIG. 31 is a waveform example of an encoder signal output by an encoder of the liquid supply pump 46. It is assumed that, when the liquid supply pump 46 is in normal operation, the number of pulses per unit time of the stepper motor for operating the liquid supply pump 46 is, for example, 100 pulses. Further, the pulse threshold value ThG is set to, for example, 90. In this case, when the liquid supply pump 46 can normally feed the liquid L, the number of pulses around 100 pulses is detected, and thus the pulse threshold value ThG is a value greater than 90 pulses. Therefore, the freezing information notified to the controller 10b includes information indicating "not frozen."

On the other hand, for example, when the number of pulses per unit time of the stepper motor is 20 pulses, the pulse number is smaller than the pulse threshold value ThG of 90 pulses. In this case, the liquid L is frozen, the load of the liquid supply pump 46 increases, the amount of rotation of the pulse motor (the amount of operation of the liquid supply pump 46) decreases, and the number of pulse signals (the number of pulses) output by the encoder also decreases. In other words, it can be assumed that the liquid L has reached a frozen state. Therefore, when the number of pulses per unit time of the stepper motor is smaller than the pulse threshold value ThG, it is determined that the stepper motor of the liquid supply pump 46 is not rotating or is rotating slowly because the liquid L is in the frozen state or in a state close to the frozen state. Therefore, the freezing information to be notified to the controller 100b includes information indicating "frozen."

The post-processing apparatus includes the freezing detector and the controller that controls each binding process of the stapling process, the liquid-application crimp-binding process, and the crimp binding process without liquid application in order to reduce a decrease in binding force and other risks due to freezing of liquid of the liquid application assembly in a low-temperature environment.

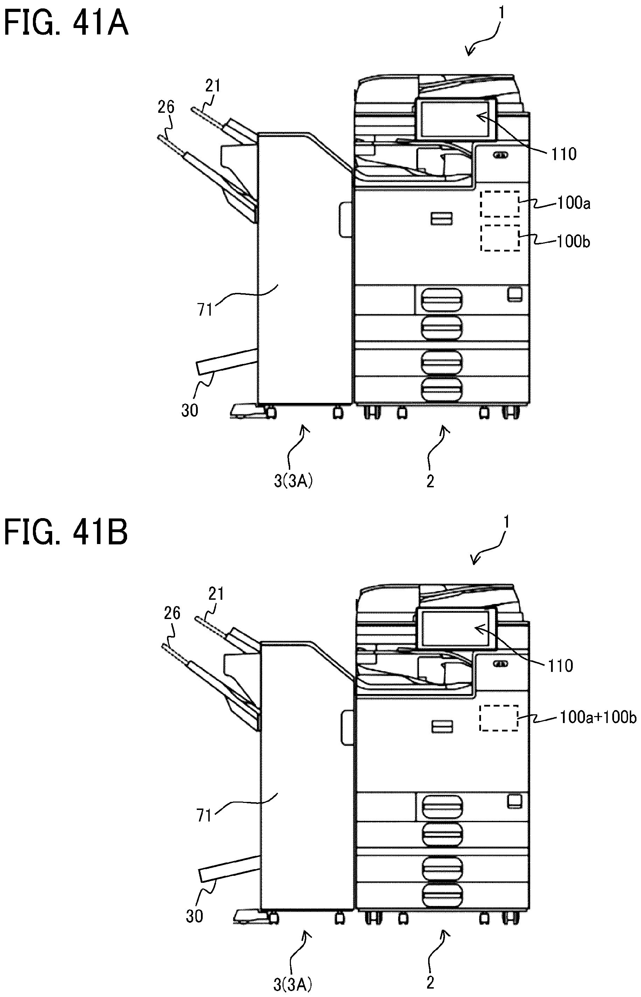

In the above description, the controller 100b of the post-processing apparatus 3 is provided separately from the controller 100a of the image forming apparatus 2 as illustrated in FIG. 1. However, the present disclosure is not limited to such a configuration. For example, as illustrated in FIG. 41A, the controller 100b of the post-processing apparatus 3 may be disposed in the image forming apparatus 2. Further, as illustrated in FIG. 41B, the controller 100b of the post-processing apparatus 3 may be integrated with the controller 100a of the image forming apparatus 2.

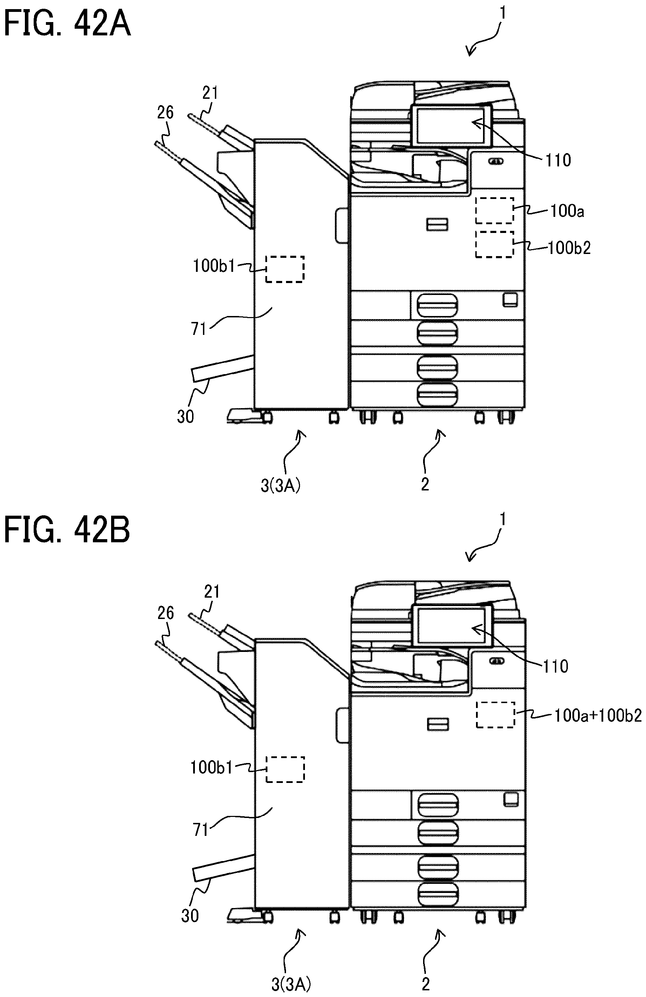

As illustrated in FIG. 42A, the controller 100b of the post-processing apparatus 3 may be divided into a controller 100b1 (e.g., a driver system such as a motor) and a controller 100b2 (a detector system such as a sensor) according to the functions, and only the controller 100b2 of the post-processing apparatus 3 may be disposed in the image forming apparatus 2. Further, as illustrated in FIG. 42B, the controller 100b2 of the post-processing apparatus 3 disposed in the image forming apparatus 2 may be integrated with the controller 100a of the image forming apparatus 2.

A description is given below of a post-processing apparatus 3A according to a second embodiment.

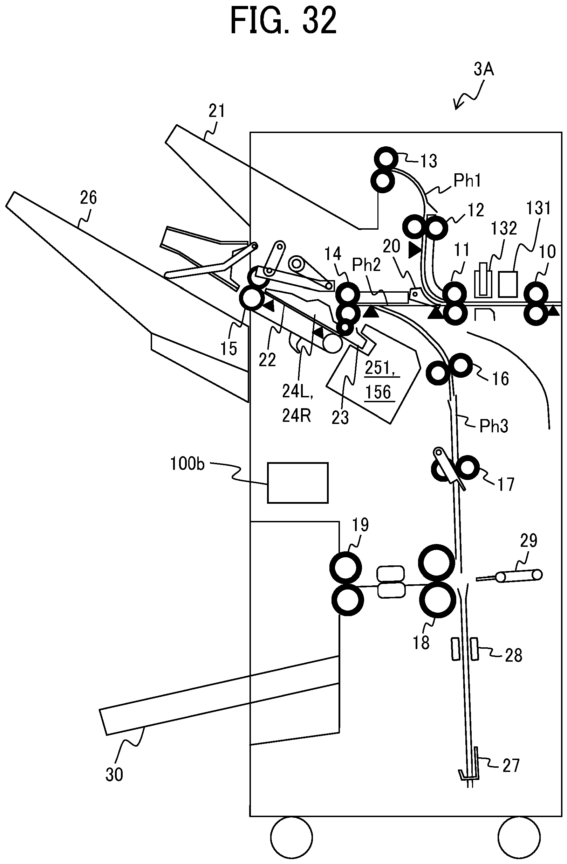

The post-processing apparatus 3A according to the second embodiment is described below with reference to FIGS. 32 to 40. Components common to those of the post-processing apparatus 3 according to the first embodiment are attached with the same or like reference numerals, and detailed descriptions may be omitted.

An edge binder 251 of the post-processing apparatus 3A according to the second embodiment is different from the edge binder 25 of the post-processing apparatus 3 according to the first embodiment in which the liquid applier 31 and the crimper 32 are arranged side by side, in that the edge binder 251 includes a crimper 32' only and a liquid applier 131 is disposed on the upstream side in a conveyance passage. Such a configuration allows a given number of sheets P to be stacked after the liquid application process and conveyed to the crimper 32' of the edge binder 251 disposed at a downstream position of the conveyance passage in the direction in which the sheet P is conveyed. Accordingly, the productivity of the binding process performed by the crimper 32' is enhanced.

The direction in which the conveyance roller pairs 10, 11, and 14 convey the sheet P is a direction opposite to the "conveyance direction" defined in the above description, and therefore is defined as an "opposite conveyance direction." A direction that is orthogonal to both the opposite conveyance direction and the thickness direction of the sheet P is defined as the "main scanning direction" or the "width direction of the sheet P." The liquid application position on a sheet P or a sheet bundle Pb onto which liquid application is performed by the liquid applier 131 corresponds to the binding position on the sheet bundle Pb to be crimped by the crimper 32'. For this reason, in the following description, the liquid application position and the binding position are described with the same reference sign (B1).

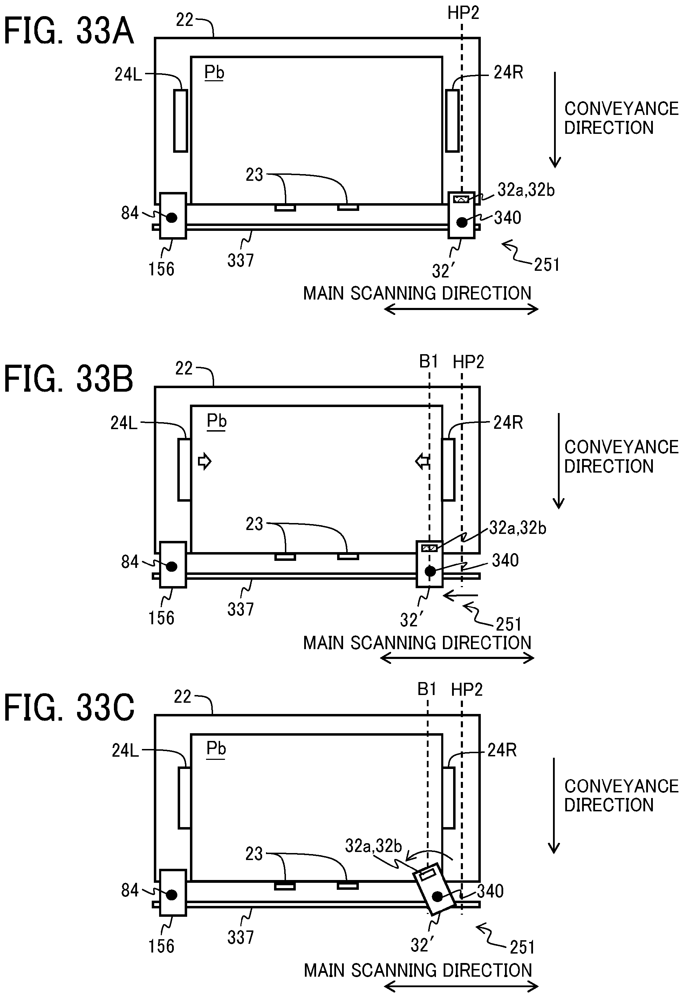

FIG. 32 is a diagram illustrating an internal configuration of the post-processing apparatus 3A according to the second embodiment. As illustrated in FIGS. 33A, 33B, and 33C, the edge binder 251 includes only the crimper 32'. As illustrated in FIGS. 33A, 33B, and 33C, the crimper 32' and a staple binder 156 are disposed downstream from an internal tray 22 in the conveyance direction. In addition, the crimper 32' and the staple binder 156 are located to face a downstream end, in the conveyance direction, of the sheet bundle Pb placed on the internal tray 22 and is movable in the main scanning direction.

Further, the crimper 32' and the staple binder 156 are respectively rotatable in the forward and reverse directions about a crimper shaft 340 and a stapler shaft 84 both extending in the thickness direction of the sheet bundle Pb placed on the internal tray 22. In other words, the crimper 32' and the staple binder 156 bind, at a desired angle, a desired position in the main scanning direction on the sheet bundle Pb placed on the internal tray 22 in, for example, corner oblique binding, parallel one-point binding, or parallel two-point binding.

The crimper 32' presses and deforms the sheet bundle Pb with the serrate upper crimping teeth 32a and the serrate lower crimping teeth 32b to bind the sheet bundle Pb. In the following description, such a binding way may be referred to as "crimping." In other words, the crimper 32' crimps and binds the sheet bundle Pb or performs the crimping on the sheet bundle Pb. On the other hand, the staple binder 156 passes the staple through a binding position on the sheet bundle Pb placed on the internal tray 22, thus allowing the sheet bundle Pb to be stapled.

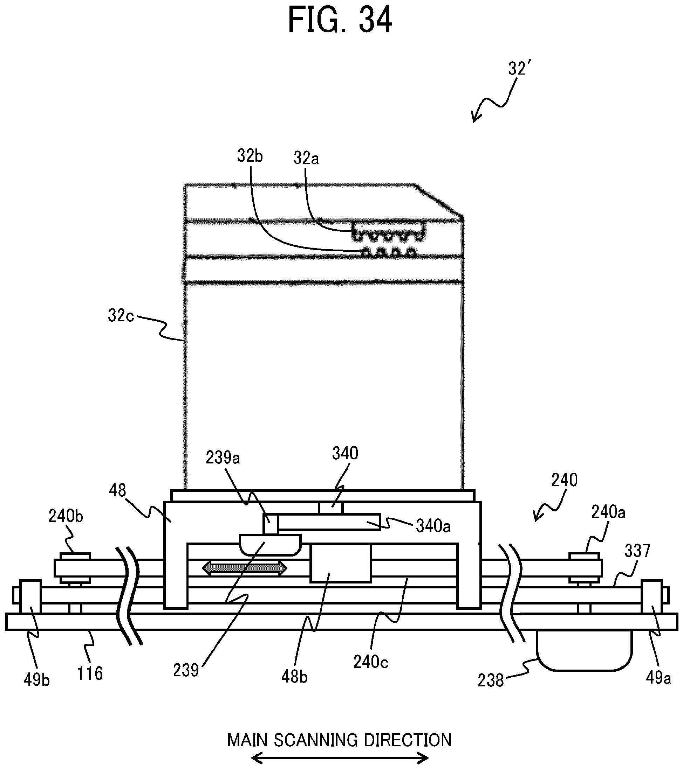

FIGS. 33A, 33B, and 33C are schematic views of the internal tray 22 as viewed from the thickness direction of the sheet bundle Pb. FIG. 34 is a schematic view of the crimper 32' as viewed from the downstream side in the conveyance direction. As illustrated in FIGS. 33A, 33B, and 33C, the crimper 32' and a staple binder 156 are disposed downstream from the internal tray 22 in the conveyance direction. The crimper 32' is movable in the main scanning direction along the surface of the sheet bundle Pb placed on the internal tray 22. Further, the crimper 32' is rotatable in the forward and reverse directions about the crimper shaft 340 extending in the thickness direction of the sheet bundle Pb placed on the internal tray 22.

Similarly, the staple binder 156 is configured to be movable in the main scanning direction of the sheet bundle Pb. Further, the staple binder 156 is rotatable in the forward and reverse directions about the stapler shaft 84 extending in thickness direction of the sheet bundle Pb. Since the other components of the staple binder 156 are similar to those of the staple binder 155 (see FIG. 6) of the post-processing apparatus 3 according to the first embodiment, a detailed description thereof is omitted.

As illustrated in FIG. 34, the crimper 32' includes a guide rail 337 extending in the main scanning direction at a position downstream from the internal tray 22 in the conveyance direction. The crimper 32' includes a crimper movement motor 238 as a driving source. A base 48 supporting a crimping frame 32c has a fastening portion 48b for a timing belt 240c at the bottom of the base 48. Accordingly, the driving force of the crimper movement motor 238 is transmitted to the base 48 by a drive transmission assembly 240 that includes pullies 240a and 240b, the timing belt 240c, and the fastening portion 48b. Thus, the crimper 32' is moved in the main scanning direction along the surface of the sheet bundle Pb placed on the internal tray 22 (in other words, the guide rail 337). The crimper shaft 340 including a drive transmission gear 340a is fixed to a bottom face of the crimping frame 32c that holds the components of the crimper 32'.

The crimper shaft 340 and the drive transmission gear 340a are held by the base 48 on which the crimping frame 32c is disposed, so as to be rotatable in the forward and reverse directions. The drive transmission gear 340a meshes with an output gear 239a of a crimper pivot motor 239. When the driving force of the crimper pivot motor 239 is transmitted to the crimper shaft 340 via the output gear 239a and the drive transmission gear 340a, the crimper 32' rotates in the forward and reverse directions on the base 48 about the crimper shaft 340 extending in the thickness direction of the sheet P placed on the internal tray 22. The guide rail 337, the crimper movement motor 238, the crimper pivot motor 239, the crimper shaft 340, and the drive transmission assembly 240 constitute at least part of a driving assembly of the crimper 32' according to the present embodiment.

The crimper 32' is movable between a standby position HP2 illustrated in FIG. 33A and a position where the crimper 32' faces the first binding position B1 illustrated in FIGS. 33B and 33C. The standby position HP2 is a position away in the main scanning direction from the sheet bundle Pb placed on the internal tray 22. The first binding position B1 is a position on the sheet bundle Pb placed on the internal tray 22. However, the specific position of the first binding position B1 is not limited to the example of FIGS. 33A, 33B, and 33C, and the first binding position B1 may be any one or more positions in the main scanning direction in a downstream end in the conveyance direction of the sheet P.

The posture of the crimper 32' changes or is pivoted between a parallel binding posture illustrated in FIG. 33B and an oblique binding posture illustrated in FIG. 33C. In other words, the crimper 32' is rotatable in the forward and reverse directions about the crimper shaft 340. The parallel binding posture is a posture of the crimper 32' in which the longitudinal direction of the upper crimping teeth 32a and the lower crimping teeth 32b (i.e., a rectangular crimp binding trace) is along the main scanning direction. The oblique binding posture is a posture of the crimper 32' in which the longitudinal direction of the upper crimping teeth 32a and the lower crimping teeth 32b (i.e., the rectangular crimp binding trace) is inclined with respect to the main scanning direction.

The rotational angle, which is an angle of the upper crimping teeth 32a and the lower crimping teeth 32b with respect to the main scanning direction, in the oblique binding posture is not limited to the angle illustrated in FIG. 33C. The rotational angle in the oblique binding posture may be any angle as long as the upper crimping teeth 32a and the lower crimping teeth 32b face the sheet bundle Pb placed on the internal tray 22.

The post-processing apparatus 3A includes the liquid applier 131 and a hole punch 132 serving as a processor. The liquid applier 131 and the hole punch 132 are disposed upstream from the internal tray 22 in the opposite conveyance direction. In addition, the liquid applier 131 and the hole punch 132 are disposed at different positions in the opposite conveyance direction to simultaneously face one sheet P that is conveyed by the conveyance roller pairs 10 to 19.

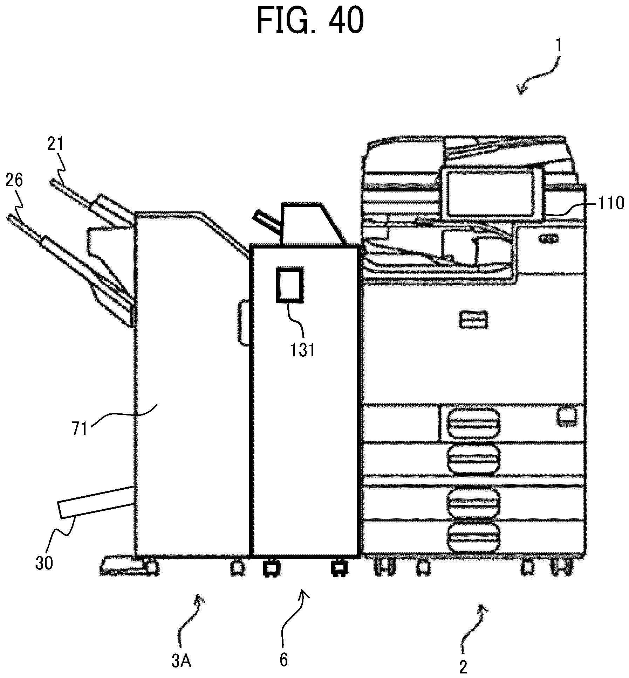

The liquid applier 131 and the hole punch 132 according to the present embodiment are disposed between the conveyance roller pairs 10 and 11. However, the arrangement of the liquid applier 131 is not limited to the example of FIG. 32. For example, in a case where an inserter 6 is disposed between the image forming apparatus 2 and the post-processing apparatus 3A as illustrated in FIG. 40, the liquid applier 131 may be disposed inside the inserter 6 located upstream from the post-processing apparatus 3A in a direction in which the sheet P is conveyed from the image forming apparatus 2 to the post-processing apparatus 3A. Examples of the inserter 6 include, but are not limited to, an apparatus that allows a preprinted medium, which is to be conveyed to the post-processing apparatus 3A together with the sheet P conveyed from the image forming apparatus 2, to be fed as a cover sheet, an insertion sheet, or a partition sheet without passing through the image forming apparatus 2.

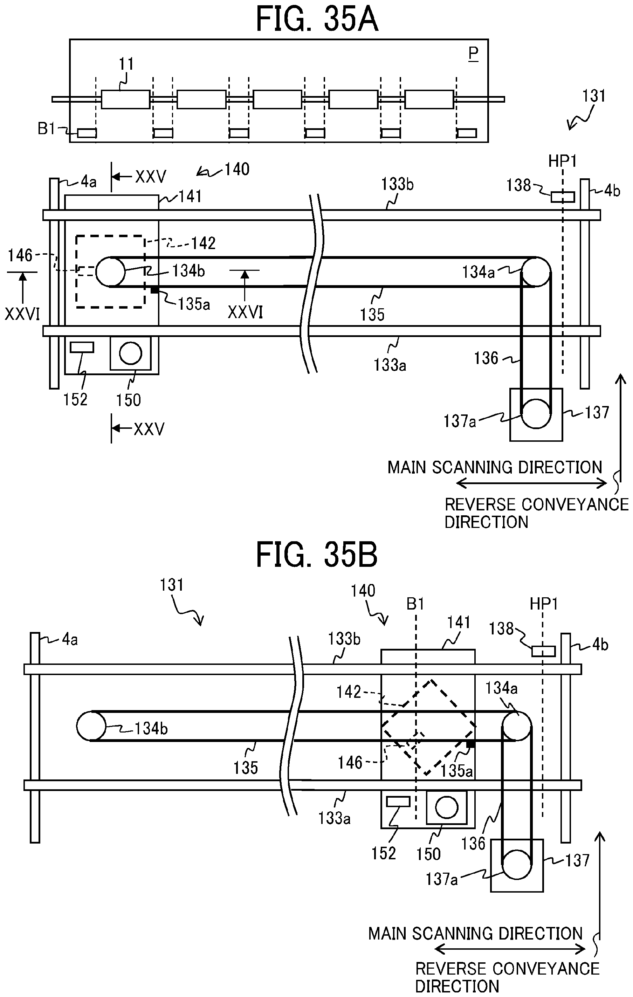

As illustrated in FIG. 35A, the conveyance roller pair 11 is located at a position at which the conveyance roller pair 11 does not overlap, in the main scanning direction, the first liquid application position B1 on the sheet P to which liquid has been applied by a liquid application head 146 of the liquid applier 131. This arrangement is to prevent the amount of liquid at the first liquid application position B1 from decreasing due to multiple roller pairs pressing the first liquid application position B1 when the conveyance roller pair 11 conveys the sheet P. As a result, when the sheet P reaches the crimper 32' disposed downstream from the liquid applier 131 in the opposite conveyance direction, the amount of liquid at the first liquid application position B1 is sufficient to maintain the binding strength. Accordingly, the binding strength of the sheet bundle Pb is prevented from decreasing due to a decrease in the amount of liquid at the first liquid application position B1 (corresponding to the first binding position B1) while the sheet P is conveyed.

In addition, the multiple roller pairs constituting the conveyance roller pair 11 are located at positions at which the multiple roller pairs do not overlap the first liquid application position B1 on the sheet P in the main scanning direction, which can thus prevent the conveying performance of the sheet P from being worse due to the adhesion of liquid to the multiple roller pairs and further prevent a conveyance jam caused by the worsened conveying performance of the sheet P.

Although only the conveyance roller pair 11 has been described above, similarly, the multiple roller pairs constituting the conveyance roller pairs 14 and 15 are also preferably located at positions at which the multiple roller pairs do not overlap the first liquid application position B1 on the sheet P in the main scanning direction.

The liquid applier 131 applies liquid to the sheet P that is conveyed by the conveyance roller pairs 10 and 11. In the following description, the application of liquid may be referred to as "liquid application." The hole punch 132 punches a hole in the sheet P that is conveyed by the conveyance roller pairs 10 and 11 such that the hole penetrates the sheet P in the thickness direction of the sheet P. The processor disposed near the liquid applier 131 is not limited to the hole punch 132. Alternatively, the processor may be an inclination corrector that corrects an inclination or skew of the sheet P that is conveyed by the conveyance roller pairs 10 and 11.

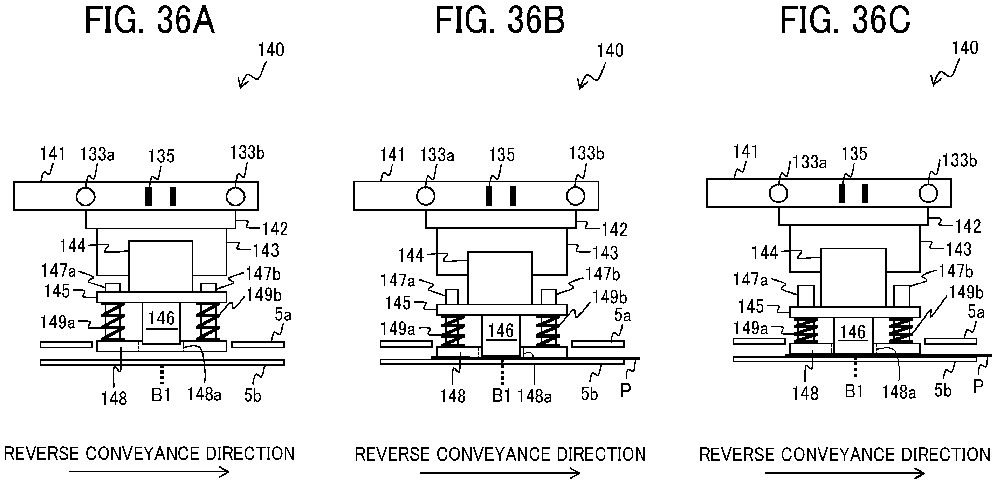

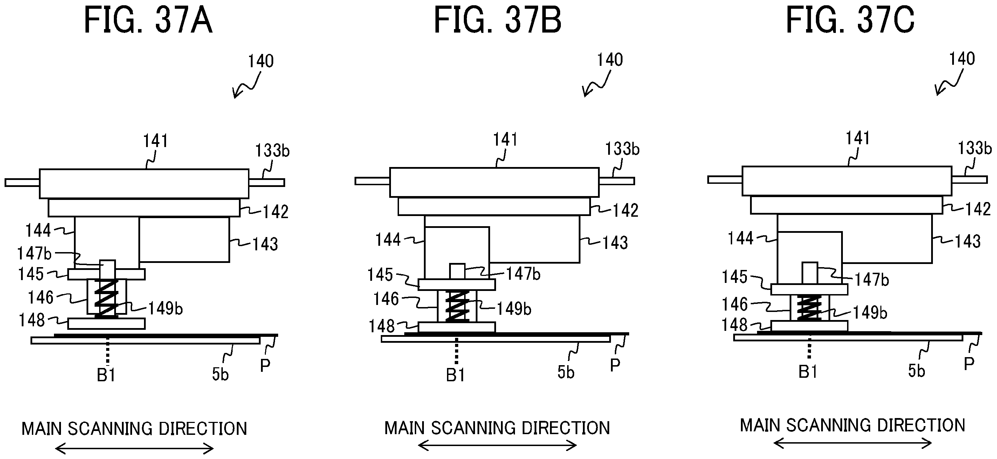

FIGS. 35A and 35B are views of the liquid applier 131 in the thickness direction of the sheet P, according to the second embodiment of the present disclosure. FIGS. 36A, 36B, and 36C are cross-sectional views of the liquid applier 131 taken along line XXV-XXV of FIG. 35A. FIGS. 37A, 37B, and 37C are cross-sectional views of the liquid applier 131 taken along line XXVI-XXVI of FIG. 35A. As illustrated in FIGS. 35A to 37C, the liquid applier 131 includes a pair of guide shafts 133a and 133b, a pair of pulleys 134a and 134b, endless annular belts 135 and 136, a liquid-application-unit movement motor 137, a standby position sensor 138, and a liquid application unit 140.

The pair of guide shafts 133a and 133b each extend in the main scanning direction at positions spaced apart from each other in the opposite conveyance direction. The pair of guide shafts 133a and 133b are supported by a pair of side plates 4a and 4b of the post-processing apparatus 3A. The pair of guide shafts 133a and 133b support the liquid application unit 140 such that the liquid application unit 140 can move in the main scanning direction.

The pair of pulleys 134a and 134b is disposed between the guide shafts 133a and 133b in the opposite conveyance direction. On the other hand, the pulleys 134a and 134b are apart from each other in the main scanning direction. The pulleys 134a and 134b are supported by a frame of the post-processing apparatus 3A so as to be rotatable in the forward and reverse directions about the respective shafts extending in the thickness direction of the sheet P.

The endless annular belt 135 is looped around the pair of pulleys 134a and 134b. The endless annular belt 135 is coupled to the liquid application unit 140 by a connection 135a. The endless annular belt 136 is looped around the pulley 134a and a driving pulley 137a that is fixed to an output shaft of the liquid-application-unit movement motor 137. The liquid-application-unit movement motor 137 generates a driving force to move the liquid application unit 140 in the main scanning direction.

As the liquid-application-unit movement motor137 rotates, the endless annular belt 136 circulates around the pulley 134a and the driving pulley 137a to rotate the pulley 134a. As the pulley 134a rotates, the endless annular belt 135 circulates between the pair of pulleys 134a and 134b. Thus, the liquid application unit 140 moves in the main scanning direction along the pair of guide shafts 133a and 133b. The liquid application unit 140 reciprocates in the main scanning direction in response to switching of the rotation direction of the liquid-application-unit movement motor 137.

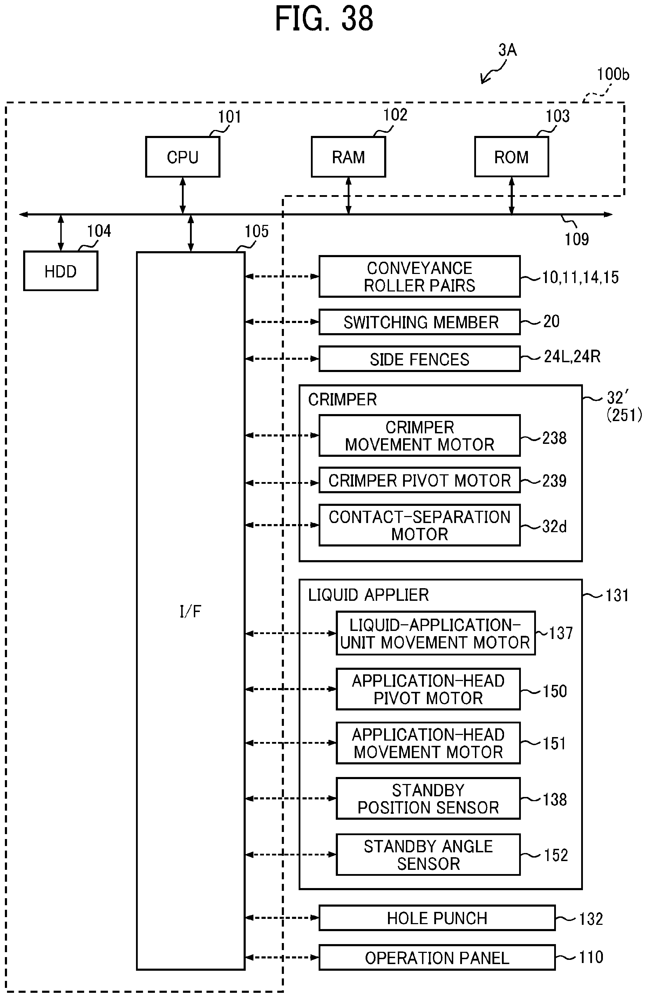

The standby position sensor 138 detects that the liquid application unit 140 has reached a standby position HP1 (see FIGS. 35A and 35B) in the main scanning direction. The standby position sensor 138 then outputs a standby position signal indicating the detection result to the controller 100b, which will be described below with reference to FIG. 38. The standby position sensor 138 is, for example, an optical sensor including a light emitter and a light receiver. At the standby position HP1, the liquid application unit 140 blocks the optical path between the light emitter and the light receiver. The standby position sensor 138 outputs the standby position signal in response to the light output from the light emitter not being received by the light receiver. The specific configuration of the standby position sensor 138 is not limited to the configuration described above.

As illustrated in FIGS. 36A, 36B, and 36C, the conveyance passage inside the post-processing apparatus 3A is defined by an upper guide plate 5a and a lower guide plate 5b, which are disposed away from each other in the thickness direction of the sheet P. The liquid application unit 140 is located at a position to face an opening of the upper guide plate 5a. In other words, the liquid application unit 140 is disposed to face the conveyance passage (a position at which the liquid application unit 140 can face the sheet P) through the opening of the upper guide plate 5a.

As illustrated in FIGS. 35A to 37C, the liquid application unit 140 includes a base 141, a rotary bracket 142, a liquid storage tank 143, a liquid-application-head mover 144, a holder 145, the liquid application head 146, columns 147a and 147b, a pressure plate 148, coil springs 149a and 149b, the application-head pivot motor 150, the application-head movement motor 151 (see FIG. 38), and a standby angle sensor 152 (see FIG. 38).

The base 141 is supported by the pair of guide shafts 133a and 133b so as to be slidable in the main scanning direction. The base 141 is coupled to the endless annular belt 135 by the connection 135a. The base 141 supports the components 142 to 152 of the liquid application unit 140.

The rotary bracket 142 is attached to the lower face of the base 141 so as to be rotatable in the forward and reverse directions about an axis extending in the thickness direction of the sheet P. The rotary bracket 142 is rotated with respect to the base 141 by a driving force transmitted from the application-head pivot motor 150. The rotary bracket 142 retains the liquid storage tank 143, the liquid-application-head mover 144, the holder 145, the liquid application head 146, the columns 147a and 147b, the pressure plate 148, and the coil springs 149a and 149b.

The standby angle sensor 152, which is also illustrated in FIG. 38, detects that the rotary bracket 142 has reached a standby angle. The standby angle sensor 152 then outputs a standby angle signal indicating the detection result to the controller 100b. The standby angle is, for example, an angle at the time of performing parallel binding. The standby angle sensor 152 is, for example, an optical sensor including a light emitter and a light receiver. The rotary bracket 142 at the standby angle blocks an optical path between the light emitter and the light receiver. The standby angle sensor 152 outputs the standby angle signal in response to the light output from the light emitter not being received by the light receiver. However, the specific configuration of the standby angle sensor 152 is not limited to the above-described example.

FIG. 35A illustrates the rotary bracket 142 in a position for the parallel binding that is performed by the crimper 32' disposed downstream from the liquid applier 131 in a direction in which the sheet P is conveyed. FIG. 35B illustrates the rotary bracket 142 in a position for the oblique binding (i.e., corner binding) that is performed by the crimper 32' disposed downstream from the liquid applier 131 in the direction in which the sheet P is conveyed.

The liquid storage tank 143 stores liquid to be applied to the sheet P. The liquid-application-head mover 144 is attached to the liquid storage tank 143 so as to be movable (e.g., up and down) in the thickness direction of the sheet P. The liquid-application-head mover 144 moves with respect to the liquid storage tank 143 by a driving force transmitted from the application-head movement motor 151. The holder 145 is attached to a lower end of the liquid-application-head mover 144. The liquid application head 146 projects from the holder 145 toward the conveyance passage (downward in the present embodiment). The liquid that is stored in the liquid storage tank 143 is supplied to the liquid application head 146. The liquid application head 146 is made of a material having a high liquid absorption (e.g., sponge or fiber).

The columns 147a and 147b project downward from the holder 145 around the liquid application head 146. The columns 147a and 147b are movable with respect to the holder 145 relatively in the thickness direction. The columns 147a and 147b hold the pressure plate 148 at lower ends thereof. The pressure plate 148 has a through hole 148a at a position to face the liquid application head 146. The coil springs 149a and 149b are inserted to the outsides of the columns 147a and 147b between the holder 145 and the pressure plate 148. The coil springs 149a and 149b bias the columns 147a and 147b and the pressure plate 148 in a direction away from the holder 145.

As illustrated in FIG. 36A and FIG. 37A, at the stage before the sheet P is conveyed to the position where the sheet P faces the opening of the upper guide plate 5a, the pressure plate 148 is positioned at or above the opening. Subsequently, when the sheet P that is conveyed by the conveyance roller pairs 10 and 11 stops at a position where the liquid application position B1 on the sheet P faces the opening, the application-head movement motor 151 is rotated in a first direction. As a result, the liquid-application-head mover 144, the holder 145, the liquid application head 146, the columns 147a and 147b, the pressure plate 148, and the coil springs 149a and 149b move down together, and the pressure plate 148 contacts the sheet P. The first liquid application position B1 is a position(i.e., the first binding position B1) to be crimped and bound by the edge binder 251 (i.e., the crimper 32').

As the application-head movement motor 151 keeps rotating in the first direction after the pressure plate 148 contacts the sheet P, the coil springs 149a and 149b are compressed to further move down the liquid-application-head mover 144, the holder 145, the liquid application head 146, and the columns 147a and 147b. As a result, as illustrated in FIGS. 36B and 37B, a lower face of the liquid application head 146 contacts the sheet P through the through hole 148a. As a result, the liquid contained in the liquid application head 146 is applied to the sheet P.

Further rotation of the application-head movement motor 151 in the first direction further strongly presses the liquid application head 146 against the sheet P as illustrated in FIGS. 36C and 37C. Accordingly, the amount of liquid applied to the sheet P increases. In short, the liquid applier 131 changes the pressing force of the liquid application head 146 against the sheet P to adjust the amount of liquid applied to the sheet P.

On the other hand, the rotation of the application-head movement motor 151 in the second direction opposite to the first direction moves up the liquid-application-head mover 144, the holder 145, the liquid application head 146, the columns 147a and 147b, the pressure plate 148, and the coil springs 149a and 149b together. As a result, as illustrated in FIGS. 36A and 37A, the liquid application head 146 and the pressure plate 148 are separated from the sheet P. In other words, the liquid applier 131 includes the liquid application head 146 that can be separated from the sheet P.

FIG. 38 is a block diagram illustrating a hardware configuration of control blocks that control the operation of the post-processing apparatus 3A according to the second embodiment. As illustrated in FIG. 38, the post-processing apparatus 3A has a configuration in which a central processing unit (CPU) 101, a random-access memory (RAM) 102, a read-only memory (ROM) 103, a hard disk drive (HDD) 104, and an interface (I/F) 105 are connected via a common bus 109.

The CPU 101 is an arithmetic device and controls the overall operation of the post-processing apparatus 3A. The RAM 102 is a volatile storage medium that allows high speed reading and writing of information, and is used as a working area when the CPU 101 processes information. The ROM 103 is a read-only non-volatile storage medium, and stores programs such as firmware. The HDD 104 is a non-volatile storage medium that allows data to be read and written and has a relatively large storage capacity. The HDD 104 stores, for example, an operating system (OS), various control programs, and application programs.

The post-processing apparatus 3 processes, by an arithmetic function of the CPU 101, e.g., a control program stored in the ROM 103 and an information processing program (or application program) loaded into the RAM 102 from a storage medium such as the HDD 104. With such processing, a software controller including various functional modules of the post-processing apparatus 3A is configured. The software controller thus configured is combined with hardware resources of the post-processing apparatus 3A mounted in the post-processing apparatus 3A to configure functional blocks that implement functions of the post-processing apparatus 3A. In other words, the CPU 101, the RAM 102, the ROM 103, the HDD 104, and the I/F 105 constitute at least part of the controller 100b (control device) that controls the operation of the post-processing apparatus 3A.

The I/F 105 is an interface that connects the conveyance roller pairs 10, 11, 14, and 15, the switching member 20, the side fences 24L and 24R, the crimper movement motor 238, the crimper pivot motor 239, a contact-separation motor 32d, the liquid-application-unit movement motor 137, the application-head pivot motor 150, the application-head movement motor 151, the standby position sensor 138, the standby angle sensor 152, the hole punch 132, and an operation panel 110 to the common bus 109.

The controller 100b controls, via the I/F 105, the operations of the conveyance roller pairs 10, 11, 14, and 15, the switching member 20, the side fences 24L and 24R, the crimper movement motor 238, the crimper pivot motor 239, the contact-separation motor 32d, the liquid-application-unit movement motor 137, the application-head pivot motor 150, the application-head movement motor 151, and the hole punch 132. The controller 100b acquires detection results from the standby position sensor 138 and the standby angle sensor 152 through the I/F 105.

Although FIG. 38 mainly illustrates the components of the edge binder 251 (the crimper 32') that executes the edge binding and the liquid applier 131, the components of the saddle binder 28 that executes saddle binding are controlled by the controller 100b in a similar manner.

As illustrated in FIG. 40, the image forming apparatus 2 includes the operation panel 110. The operation panel 110 includes an operation section that receives instructions input by an operator and a display serving as a notifier that notifies the operator of information. The operation section includes, for example, hard keys and a touch screen overlaid on the display. The operation panel 110 acquires information from the user through the operation section and provides information to the user through the display. The post-processing apparatus 3A may include an operation panel 110 similar to the above-described operation panel 110.

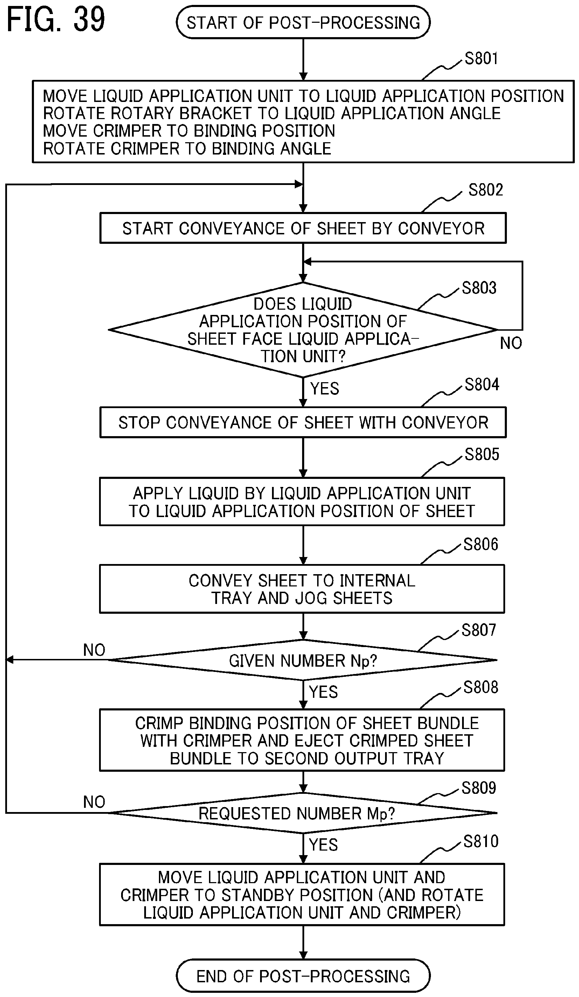

FIG. 39 is a flowchart of post-processing of the post-processing apparatus 3A according to the second embodiment. Specifically, FIG. 39 is a flowchart in executing the one-point binding illustrated in FIG. 33.

For example, the controller 100b executes the post-processing illustrated in FIG. 39 in response to acquisition of an instruction (denoted below as "post-processing command") of executing the post-processing from the image forming apparatus 2. The post-processing command includes, for example, the number of sheets P of the sheet bundle Pb (denoted below as "given number of sheets Np"), the number of sheet bundles Pb to be subjected to binding processing (denoted below as "requested number of sheets Mp"), the first binding position B1 (corresponding to the first liquid application position B1), the angle of the first binding position B1 (corresponding to the angle of the first liquid application position B 1), the type of binding process (parallel binding process or oblique binding process), and a process that is executed in parallel with the liquid application process (punching a hole in the present embodiment). At the start of the post-processing, the liquid application unit 140 is at the standby position HP1 (see FIG. 35), and the rotary bracket 142 is held at the standby angle (corresponding to "parallel binding posture").

First, the controller 100b drives the liquid-application-unit movement motor 137 to move the liquid application unit 140 (corresponding to a liquid application device) in the main scanning direction, thus causing the liquid application head 146 to move from the standby position HP1 to the position where the liquid application head 146 can face the first liquid application position B1 (see FIG. 35B, the position corresponding to the first binding position B1 illustrated in FIG. 33B and FIG. 33C). If the type of the binding process instructed by the post-processing command is "oblique binding process," in step S801, the controller 100b drives the application-head pivot motor 150 to rotate the rotary bracket 142. Thus, the liquid application head 146 is rotated from the standby angle to the liquid application angle corresponding to the "oblique binding posture." It can be ascertained, based on pulse signals output from rotary encoders of the liquid-application-unit movement motor 137 and the application-head pivot motor 150, that the liquid application head 146 has reached the position where the liquid application head 146 can face the first liquid application position B1. In a case where the type of the binding process instructed by the post-processing command is "parallel binding process," the controller 100b omits the above-described operation of rotating the rotary bracket 142. In other words, the liquid application unit 140 moves in the main scanning direction while holding the rotary bracket 142 at the standby angle.

Further, in step S801, the controller 100b drives the crimper movement motor 238 to move the crimper 32' from the standby position HP2 to the position where the crimper 32' can face the first binding position B1 as illustrated in FIGS. 33A and 33B. Alternatively, if the type of the binding process instructed by the post-processing command is "oblique binding process," in step S801, the controller 100b drives the crimper pivot motor 239 to rotate the crimper 32' from the standby angle to the crimping angle corresponding to the "oblique binding posture." It can be ascertained, based on pulse signals output from rotary encoders of the crimper movement motor 238 and the crimper pivot motor 239, that the crimper 32' has reached the position where the crimper 32' can face the first binding position B1. In a case where the type of the binding process instructed by the post-processing command is "parallel binding process," the controller 100b omits the above-described operation of rotating the crimper 32'. In other words, the crimper 32' moves in the main scanning direction while maintaining the standby angle.

In step S802, the controller 100b drives the conveyance roller pairs 10 and 11 to start conveying the sheet P on which an image is formed by the image forming apparatus 2. In step S803, the controller 100b determines whether the first liquid application position B1 on the sheet P has faced the liquid application unit 140 (more specifically, the liquid application head 146). When the controller 100b determines that the first liquid application position B1 on the sheet P has not faced the liquid application unit 140 (NO in S803), the controller 100b continues causing the conveyance roller pairs 10 and 11 to convey the sheet P until the first liquid application position B1 on the sheet P faces the liquid application unit 140 (YES in S803). When the controller 100b determines that the first liquid application position B1 on the sheet P has faced the liquid application head 146 (YES in step S803), in step S804, the controller 100b causes the conveyance roller pairs 10 and 11 to stop conveying the sheet P. It can be ascertained, based on a pulse signal output from a rotary encoder of a motor that drives the conveyance roller pairs 10 and 11, that the first liquid application position B1 on the sheet P has faced the liquid application head 146.

In step S805, the controller 100b causes the liquid application unit 140 to execute the process of applying liquid to the first liquid application position B1 on the sheet P. More specifically, the controller 100b rotates the application-head movement motor 151 in the first direction to bring the liquid application head 146 into contact with the first liquid application position B1 on the sheet P. The controller 100b changes the pressing force of the liquid application head 146 (i.e., the amount of rotation of the application-head movement motor 151) depending on the amount of liquid to be applied to the sheet P.

The amount of liquid that is applied to the sheet P may be the same for all the sheets P of the sheet bundle Pb or may be different for each sheet P. For example, the controller 100b may decrease the amount of liquid applied to a sheet P conveyed later. The amount of rotation of the application-head movement motor 151 can be ascertained based on a pulse signal output from a rotary encoder of the application-head movement motor 151.

In step S806, the controller 100b drives the conveyance roller pairs 10, 11, 14, and 15 to place a sheet P on the internal tray 22. In step S806, the controller 100b also moves the side fences 24L and 24R in the main scanning direction to align the position of the sheet P or the sheet bundle Pb placed on the internal tray 22 in the main scanning direction. In short, the controller 100b performs so-called jogging.

In step S807, the controller 100b determines whether the number of sheets P placed on the internal tray 22 has reached the given number of sheets Np indicated by the post-processing command. When the controller 100b determines that the number of sheets P placed on the internal tray 22 has not reached the given number of sheets Np (NO in step S807), the controller 100b executes the operations of steps S802 to S807 again until the number of sheets P placed on the internal tray 22 reaches the given number of sheets Np (YES in step S807).

By contrast, when the controller 100b determines that the number of sheets P that are placed on the internal tray 22 has reached the given number of sheets Np (YES in step S807), in step S808, the controller 100b causes the crimper 32' to crimp the binding position B1 (corresponding to the first liquid application position B 1) on the sheet bundle Pb to which the liquid has been applied by the liquid application unit 140. In step S808, the controller 100b also rotates the conveyance roller pair 15 to eject the crimped sheet bundle Pb to the second ejection tray 26.

In step S809, the controller 100b determines whether the number of sheet bundles Pb thus ejected to the second ejection tray 26 has reached the requested number of copies Mp indicated by the post-processing command. When the controller 100b determines that the number of the sheet bundles Pb ejected to the second ejection tray 26 has not reached the requested number of copies Mp (NO in step S809), the controller 100b repeats the processing of steps S802 to S809 until the number of the sheet bundles Pb ejected to the second ejection tray 26 reaches the requested number of copies Mp (YES in step S809).

When the controller 100b determines that the number of sheet bundles Pb ejected to the second ejection tray 26 reaches the requested number of copies Mp (YES in step S809), in step S810, the controller 100b drives the liquid-application-unit movement motor 137 to move the liquid application unit 140 to the standby position HP1 (see FIGS. 35B) and drives the crimper movement motor 238 to move the crimper 32' to the standby position HP2 (see FIG. 33A). When the posture that is instructed by the post-processing operation is the "oblique binding posture," in step S810, the controller 100b drives the application-head pivot motor 150 and the crimper pivot motor 239 to rotate the liquid application unit 140 and crimper 32' and the parallel binding posture (standby angle) into the parallel binding posture. On the other hand, when the posture that is instructed by the post-processing command is the "parallel binding posture," the operation of rotating the liquid application unit 140 and the crimper 32' to the parallel binding posture (standby angle) is skipped. In steps S801 and S810, the execution order of the movement in the main scanning direction and the rotation in the forward and reverse directions of the liquid application unit 140 and the crimper 32' is not limited to the aforementioned order and may be reversed.

The present disclosure can be applied to not only the edge binder 25 that executes edge binding but also to the saddle binder 28 that executes saddle stitching.

The configuration in which the controller 100b of the post-processing apparatus 3A according to the second embodiment illustrated in FIG. 32 is provided separately from the controller 100a of the image forming apparatus 2 similarly with FIG. 1 has been described, but it is not limited to such a configuration. For example, as illustrated in FIG. 41A, the controller 100b of the post-processing apparatus 3A may be disposed in the image forming apparatus 2. Further, as in the configuration of FIG. 41B, the controller 100b of the post-processing apparatus 3A may be integrated with the controller 100a of the image forming apparatus 2.

Similarly with FIG. 42A, the controller 100b of the post-processing apparatus 3A may be divided into a controller 100b1 (e.g., a driver system (such as a motor)) and a controller 100b2 (a detector system (such as a sensor)) according to the function, and the controller 100b2 of the post-processing apparatus 3A may be disposed in the image forming apparatus 2. Further, as in the configuration of FIG. 42B, the controller 100b2 of the post-processing apparatus 3A disposed in the image forming apparatus 2 may be integrated with the controller 100a of the image forming apparatus 2.

As described above, the control method by the controller 100b described above is implemented by cooperation between hardware resources of a computer and a program as computer software. In other words, the control method may be a method executed by a computer causing an arithmetic device, a storage device, an input device, an output device, and a control device to operate in cooperation with each other based on a program. The program may be written in, for example, a storage device or a storage medium and distributed with the storage device or the storage medium, or may be distributed through, for example, an electric communication line.

Embodiments of the present disclosure are not limited to the above-described embodiments, and numerous additional modifications and variations are possible in light of the teachings. The technical contents included in the technical ideas described in the appended claims are included within the scope of the present disclosure. The above-described embodiments represent examples, and various modifications can be achieved by those skilled in the art from the disclosed contents. Such modifications are included in the technical scope described in the scope of claims.

The contents of the present disclosure are, for example, as follows.

### First aspect

A medium processing apparatus includes a liquid applier to apply liquid to a part of at least one medium, a medium processing device to perform desired processing on a bundle of media including the at least one medium on which liquid application has been performed by the liquid applier, a controller to control the liquid application and the desired processing, and a freezing detector to notify the controller of freezing information including a frozen state of the liquid. The controller selects, based on the freezing information, one of first processing that is the desired processing performed on the media after the liquid application is performed or second processing that is the desired processing performed on the media on which the liquid application is not performed.

### Second aspect

In the medium processing apparatus according to the first aspect, the first processing performs crimp binding on the bundle of media after the liquid application is performed and the second processing performs crimp binding on the bundle of media on which the liquid application is not performed. The desired processing performed by the medium processing device further includes third processing of causing a staple to penetrate through a part of the bundle of media to bind the bundle of media. The medium processing apparatus includes an input operation device to provide an input interface through which a process can be selected by an operation of a user. The controller selects one of the first processing, the second processing, or the third processing based on the freezing information and information indicating the process selected by the user via the input operation device.

### Third aspect

In the medium processing apparatus according to the first aspect, the first processing performs crimp binding on the bundle of media after the liquid application is performed and the second processing performs crimp binding on the bundle of media on which the liquid application is not performed. The desired processing performed by the medium processing device further includes third processing of causing a staple to penetrate through a part of the bundle of media to bind the bundle of media. The controller selects one of the first processing, the second processing, or the third processing based on the freezing information and the quantity of media included in the bundle of media.

### Fourth aspect

The medium processing apparatus according to the first aspect further includes a number-of-times counter to measure the number of operations of the medium processing device. The first processing performs crimp binding on the bundle of media after the liquid application is performed and the second processing performs crimp binding on the bundle of media on which the liquid application is not performed. The desired processing performed by the medium processing device further includes third processing of causing a staple to penetrate through a part of the bundle of media to bind the bundle of media. When the freezing information indicates freezing of the liquid, the controller selects one processing of the second processing or the third processing, and then, when information included in the freezing information notified after the number of executions of the one processing selected exceeds a predetermined threshold number of times does not indicate freezing of the liquid, the controller selects the first processing.

### Fifth aspect

In the medium processing apparatus according to the first aspect, the freezing detector has a cold region mode. When a user sets the cold region mode, the freezing detector notifies the controller of the freezing information in a designated time.

### Sixth aspect

In the medium processing apparatus according to the fifth aspect, the designated time is defined by a start time and an end time set by the user.

### Seventh aspect

The medium processing apparatus according to any one of the first to fourth aspects further includes a first liquid storage to store the liquid used for the liquid application by the liquid applier, a liquid detector to detect an amount of the liquid stored in the first liquid storage, a second liquid storage to store the liquid to be supplied to the first liquid storage, and a liquid supplier to perform a liquid supply operation to supply the liquid from the second liquid storage to the first liquid storage. The freezing detector notifies the controller of the freezing information including information indicating that the liquid is not frozen, when the liquid supply operation is executed by the liquid supplier and the amount of the liquid detected by the liquid detector changes. The freezing detector notifies the controller of the freezing information including information indicating that the liquid is frozen, when the amount of the liquid detected by the liquid detector does not change.

### Eighth aspect

In the medium processing apparatus according to any one of the first to seventh aspects, the freezing detector includes a thermistor. When a temperature of the liquid detected by the thermistor is equal to or lower than a temperature threshold, the freezing detector notifies the controller of the freezing information including information that the liquid is frozen.

### Ninth aspect

In the medium processing apparatus according to the seventh aspect, the freezing detector includes a thermistor. In a case where the liquid supply operation is executed when a temperature of the liquid detected by the thermistor is equal to or lower than a temperature threshold, the freezing detector notifies the controller of the freezing information including information that the liquid is frozen, when the amount of the liquid detected by the liquid detector does not change.

### Tenth aspect

The medium processing apparatus according to any one of the first to fourth aspects further includes a first liquid storage to store the liquid used for the liquid application by the liquid applier, a liquid detector to detect an amount of the liquid stored in the first liquid storage, a second liquid storage to store the liquid to be supplied to the first liquid storage, and a liquid supplier including a pulse motor to perform a liquid supply operation to supply the liquid from the second liquid storage to the first liquid storage. The freezing detector includes a thermistor. The freezing detector notifies the controller of the freezing information including information that the liquid is frozen, when a temperature of the liquid is equal to or lower than a temperature threshold and the number of operation pulses per unit time of the pulse motor in execution of the liquid supply operation by the liquid supplier is equal to or lower than a pulse threshold.

### Eleventh aspect

An image forming system includes an image forming apparatus to form images on a plurality of media, and the medium processing apparatus according to any one of the first to tenth aspects to perform the processing on the plurality of media on which the images have been formed by the image forming apparatus.

### Twelfth aspect

A medium processing control program executed in the controller recited in the first aspect.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A medium processing apparatus (3), comprising:
a liquid applier (31) to apply liquid to a part of a medium (P) to perform a liquid application;
a medium processing device (25, 155) to perform desired processing on a bundle of media including the medium subjected to the liquid application;
a controller (100b) to control the liquid application and the desired processing; and
a freezing detector (95) to notify the controller (100b) of freezing information including a frozen state of the liquid,
wherein the controller (100b) selects, based on the freezing information, one of first processing that is the desired processing performed on the bundle of media including the medium subjected to the liquid application or second processing that is the desired processing performed on the bundle of media without subjecting the medium to the liquid application.

2. The medium processing apparatus according to claim 1, further comprising an input operation device (110),
wherein the first processing presses and deforms the bundle of media including the medium subjected to the liquid application, to bind the bundle of media,
the second processing presses and deforms the bundle of media without subjecting the medium to the liquid application, to bind the bundle of media, and
the desired processing performed by the medium processing device further includes third processing of causing a staple to penetrate through a part of the bundle of media to bind the bundle of media, and
wherein the input operation device (110) provides an input interface to select one processing of the first processing, the second processing, or the third processing based on an operation of a user, and
the controller selects the first processing, the second processing, or the third processing based on the freezing information and information indicating the one processing selected by the user via the input operation device.

3. The medium processing apparatus according to claim 1,
wherein the first processing presses and deforms the bundle of media including the medium subjected to the liquid application, to bind the bundle of media,
the second processing presses and deforms the bundle of media without subjecting the medium to the liquid application, to bind the bundle of media, and
the desired processing performed by the medium processing device further includes third processing of causing a staple to penetrate through a part of the bundle of media to bind the bundle of media, and
wherein the controller selects the first processing, the second processing, or the third processing based on the freezing information and a quantity of media included in the bundle of media.

4. The medium processing apparatus according to claim 1, further comprising a counter (100b) to measure a number of operations of the medium processing device,
wherein the first processing presses and deforms the bundle of media including the medium subjected to the liquid application, to bind the bundle of media,
the second processing presses and deforms the bundle of media without subjecting the medium to the liquid application, to bind the bundle of media, and
the desired processing performed by the medium processing device further includes third processing of causing a staple to penetrate through a part of the bundle of media to bind the bundle of media, and
wherein, when the freezing information indicates freezing of the liquid, the controller selects one processing of the second processing or the third processing, and then, when information included in the freezing information notified after a number of executions of the one processing selected exceeds a predetermined threshold number of times does not indicate freezing of the liquid, the controller selects the first processing.

5. The medium processing apparatus according to claim 1,
wherein the freezing detector (95) has a cold region mode, and
wherein when the cold region mode is set, the freezing detector notifies the controller of the freezing information in a designated time.

6. The medium processing apparatus according to claim 5,
wherein the designated time is defined by a start time and an end time set by a user.

7. The medium processing apparatus according to any one of claims 1 to 4, further comprising:
a first liquid storage (44) to store the liquid used for the liquid application by the liquid applier;
a liquid detector (43) to detect an amount of the liquid stored in the first liquid storage;
a second liquid storage (47) to store the liquid to be supplied to the first liquid storage; and
a liquid supplier (46) to perform a liquid supply operation to supply the liquid from the second liquid storage (47) to the first liquid storage (44),
wherein the freezing detector (95) notifies the controller (100b) of the freezing information including information indicating that the liquid is not frozen, when the liquid supply operation is executed by the liquid supplier and the amount of the liquid detected by the liquid detector changes, and
wherein the freezing detector notifies the controller of the freezing information including information indicating that the liquid is frozen, when the amount of the liquid detected by the liquid detector does not change.

8. The medium processing apparatus according to any one of claims 1 to 4,
wherein the freezing detector includes a thermistor (95), and
wherein when a temperature of the liquid detected by the thermistor is equal to or lower than a temperature threshold, the freezing detector notifies the controller of the freezing information including information that the liquid is frozen.

9. The medium processing apparatus according to claim 7,
wherein the freezing detector includes a thermistor (95), and
wherein, in a case where the liquid supply operation is executed when a temperature of the liquid detected by the thermistor is equal to or lower than a temperature threshold, the freezing detector notifies the controller of the freezing information including information that the liquid is frozen, when the amount of the liquid detected by the liquid detector does not change.

10. The medium processing apparatus according to any one of claims 1 to 4, further comprising:
a first liquid storage (44) to store the liquid used for the liquid application by the liquid applier;
a liquid detector (43) to detect an amount of the liquid stored in the first liquid storage;
a second liquid storage (47) to store the liquid to be supplied to the first liquid storage; and
a liquid supplier (46) including a pulse motor to perform a liquid supply operation to supply the liquid from the second liquid storage to the first liquid storage,
wherein the freezing detector includes a thermistor (95), and
wherein the freezing detector notifies the controller of the freezing information including information that the liquid is frozen, when a temperature of the liquid detected by the thermistor is equal to or lower than a temperature threshold and a number of operation pulses per unit time of the pulse motor in execution of the liquid supply operation by the liquid supplier is equal to or lower than a pulse threshold.

11. An image forming system, comprising:
an image forming apparatus (2) to form an image on media constituting a bundle of media; and
the medium processing apparatus (3) according to any one of claims 1 to 10 to perform the desired processing on the bundle of media on which the image is formed by the image forming apparatus.

12. A carrier medium carrying program code for causing a controller of a medium processing apparatus to execute:
controlling liquid application that a liquid applier (31) applies liquid to a part of a medium (P) to perform and desired processing that a medium processing device (25, 155) performs on a bundle of media including the medium subjected to the liquid application;
receiving freezing information including a frozen state of the liquid; and
selecting, based on the freezing information, one of first processing that is the desired processing performed on the bundle of media including the medium subjected to the liquid application or second processing that is the desired processing performed on the bundle of media without subjecting the medium to the liquid application.
